# EUROPEAN PATENT APPLICATION

(11) **EP 4 679 064 A1**
(43) Date of publication of application: **14.01.2026**
(21) Application number: 24766873.4
(22) Date of filing: 21.02.2024
(51) Int. Cl.: G01N 21/64, C08K 5/55, C08L 101/00, C09K 11/06

(54) **METHOD FOR MEASURING RELATIVE FLUORESCENCE INTENSITY**

(30) Priority: 06.03.2023 JP 2023033836
(71) Applicant: DIC Corporation, Tokyo 174-8520 (JP)
(72) Inventor: TAKEZAWA Yutaka, Ichihara-shi, Chiba 290-8585 (JP); SAKURAI Naoto, Tokyo 103-8233 (JP); TOYOMURA Kyouichi, Tokyo 103-8233 (JP)
(74) Representative: Kraus & Lederer PartGmbB
(86) International application number: PCT/JP2024/006195
(87) International publication number: WO 2024/185502

(57) **Abstract**

The present invention provides a method for measuring a relative fluorescence intensity of a test sample, where a plate-shaped or film-shaped molded body of a resin composition obtained by melt-kneading a raw material mixture containing a near-infrared fluorescent dye and an amorphous resin is used as a standard plate, a plate-shaped or film-shaped molded body of a resin composition having a composition identical to that of the standard plate except that the near-infrared fluorescent dye is not contained is used as a blank plate, the test sample is a molded body of a resin composition containing a near-infrared fluorescent dye, and a molded body having a composition identical to that of the test sample except that the near-infrared fluorescent dye contained in the test sample is not contained is used as a test sample blank, and (F₁-F_{1B})/(F_{S}-F_{SB}) is defined as the relative fluorescence intensity of the test sample (where F₁, F_{1B}, F_{S}, and F_{SB} are fluorescence intensities of the test sample, the test sample blank, the standard plate, and the blank plate, respectively, at the near-infrared region).

## Description

### TECHNICAL FIELD

The present invention relates to a method for determining the relative fluorescence intensity of a test sample that emits near-infrared fluorescence. The present application claims priority from the Japanese Patent Application No. 2023-033836, filed in Japan on March 6, 2023, the contents of which are incorporated herein by reference.

### BACKGROUND ART

Near-infrared fluorescent dyes have been used for industrial products mainly for identification of various products and forgery prevention. In recent years, near-infrared fluorescent dyes have also been used for medical applications such as probes for living body imaging and test drugs. As the characteristics of the near-infrared wavelength region, it is known that the near-infrared wavelength region cannot be seen with the naked eye of humans, that the near-infrared wavelength region has little influence on living bodies, that the near-infrared wavelength region has high biological permeability of skin or the like, and the like. Such characteristics can be utilized by containing a near-infrared fluorescent dye in a medical device itself. For example, by containing a near-infrared fluorescent dye in a medical device such as a shunt tube, the position of the medical device embedded in a living body can be confirmed through irradiation of the medical device with near-infrared light from outside the living body.

By mixing and dispersing a near-infrared fluorescent dye in a resin, various molded bodies that emit near-infrared fluorescence can be produced using the resin as a raw material. However, when the dispersibility of the near-infrared fluorescent dye in the resin is low, the near-infrared fluorescent dye is nonuniformly present in the resin composition, and an aggregate of the near-infrared fluorescent dye may be generated. A molded body molded from such a resin composition is likely to have dotted or streaky appearance defects. Thus, it is desired that the near-infrared fluorescent dye is uniformly dispersed in the resin.

As a method for uniformly dispersing an additive component in a resin, melt-kneading is widely used because it is suitable for actual production. However, even when melt-kneading is performed at a temperature lower than the decomposition point of the dye, depending on the type of the resin or the dye and the kneading conditions, fluorescence is not emitted because of poor dispersion or decomposition of the dye, in some cases. Thus, it is difficult to uniformly disperse a near-infrared fluorescent dye in a resin by melt-kneading unless the near-infrared fluorescent dye has sufficient heat resistance and fastness. For example, Patent Document 1 discloses that a near-infrared fluorescent resin composition having strong emission intensity and a molded body obtained by processing the composition can be obtained by mixing and dispersing a BODIPY dye or a DPP-based boron complex that is excellent in heat resistance and emission quantum yield and emits near-infrared fluorescence in a resin.

On the other hand, a product formed of a molded body of a resin composition containing a near-infrared fluorescent dye needs to have a predetermined fluorescence intensity value set in product design from the viewpoint of quality control, similarly to a molded body containing other fluorescent dyes. Here, the fluorescence intensity is easily affected by a measurement device and measurement conditions, and thus, in general, a standard sample is determined, and the fluorescence intensity of the sample is evaluated as a relative value with respect to the fluorescence intensity of the standard sample. As a standard sample for measuring fluorescence intensity including the visible light region, a rhodamine-based fluorescent dye such as Rhodamine B (CAS No.: 81-88-9) is often used. The rhodamine-based fluorescent dye has low heat resistance and cannot be melt-kneaded with a resin, and in addition, the fluorescence intensity may decrease with the lapse of time (Patent Document 2). Thus, usually, a solution diluted to an appropriate concentration at the time of measurement is used as a standard sample.

### CITATION LIST

### PATENT DOCUMENT

Patent Document 1: WO 2015/056779 A
Patent Document 2: JP 2010-223782 A

### SUMMARY OF INVENTION

### TECHNICAL PROBLEM

On the other hand, a standard sample for measuring the relative fluorescence intensity of a test sample that emits near-infrared fluorescence and a measurement method using the standard sample are not known. Since a standard sample using Rhodamine B has a peak wavelength of fluorescence in the visible light region and a shoulder in the near-infrared region of 700 nm or more, the standard sample can also be used for measurement of near-infrared light emission. However, in this method, the preparation itself of the rhodamine-based fluorescent dye solution varies for each measurement, and the near-infrared fluorescence intensity of the rhodamine-based fluorescent dye solution is also affected by the elapsed time from the preparation to the measurement. In this manner, the near-infrared fluorescence intensity value itself of the standard sample has a large variation, and thus, reliability of the obtained relative fluorescence intensity is insufficient in measurement using the rhodamine-based fluorescent dye solution as a standard sample for near-infrared emission measurement. In addition, the fluorescence intensity of Rhodamine B in the near-infrared region is not sufficient, and from this point, it is difficult to say that the relative fluorescence intensity of near-infrared fluorescence can be appropriately measured.

An object of the present invention is to provide a more reliable method for measuring the relative fluorescence intensity of a test sample that emits near-infrared fluorescence, and a kit including a standard plate that is a standard sample used in the method.

### SOLUTION TO PROBLEM

The present invention is as follows.
[1] A method for measuring a relative fluorescence intensity of a test sample,
   the test sample having a maximum fluorescence wavelength within a range from 650 nm to 1000 nm,
   the method using, as a standard plate, a plate-shaped or film-shaped molded body of a resin composition obtained by melt-kneading a raw material mixture containing a near-infrared fluorescent dye and an amorphous resin,
   the method using, as a blank plate, a plate-shaped or film-shaped molded body of a resin composition obtained by melt-kneading a raw material mixture having a composition identical to a composition of the raw material mixture except that the near-infrared fluorescent dye is not contained,
   the test sample being a molded body of a resin composition containing a near-infrared fluorescent dye of the same or different type of the near-infrared fluorescent dye in the standard plate,
   the method using, as a test sample blank, a molded body having a composition identical to a composition of the test sample except that the near-infrared fluorescent dye contained in the test sample is not contained, and
   the method including measuring a fluorescence intensity F₁ of the test sample at a wavelength λ₁, a fluorescence intensity F_{1B} of the test sample blank at a wavelength λ_{1B}, a fluorescence intensity F_{S} of the standard plate at a wavelength λ_{S}, and a fluorescence intensity F_{SB} of the blank plate at a wavelength λ_{SB},
   wherein the wavelength λ₁ is within a range from 650 to 1000 nm, a difference between the wavelength λ₁ and the wavelength λ_{1B} is within 10 nm, the wavelength λ_{S} is within a range from 650 to 1000 nm, and a difference between the wavelength λ_{S} and the wavelength λ_{SB} is within 10 nm, and
   (F₁-F_{1B})/(Fs-F_{SB}) is defined as the relative fluorescence intensity of the test sample.
[2] The method for measuring a relative fluorescence intensity according to [1], wherein fluorescence intensities of the test sample, the test sample blank, the standard plate, and the blank plate are measured by using a spectrofluorometer.
[3] The method for measuring a relative fluorescence intensity according to [1] or [2], wherein the amorphous resin is a transparent resin.
[4] The method for measuring a relative fluorescence intensity according to any of [1] to [3], wherein the amorphous resin is one or more selected from the group consisting of a polycarbonate-based resin, a polystyrene-based resin, an acrylic-based resin, a polyoxymethylene-based resin, a polyester-based resin, and a vinyl chloride-based resin.
[5] The method for measuring a relative fluorescence intensity according to any of [1] to [4], wherein the standard plate is a plate having a thickness from 1 µm to 15 mm.
[6] The method for measuring a relative fluorescence intensity according to any of [1] to [5], wherein the test sample has a maximum fluorescence wavelength of 700 nm or more.
[7] The method for measuring a relative fluorescence intensity according to any of [1] to [6], wherein the test sample is a molded body obtained by melt-molding a resin composition obtained by melt-kneading a mixture containing a near-infrared fluorescent dye as a raw material.
[8] The method for measuring a relative fluorescence intensity according to any of [1] to [7], wherein the test sample is a molded body to be used as a medical device.
[9] The method for measuring a relative fluorescence intensity according to [8], wherein the test sample is a medical device at least a part of which is used in a patient's body.
[10] The method for measuring a relative fluorescence intensity according to [1], wherein the near-infrared fluorescent dye includes one, or two or more compounds selected from the group consisting of a compound represented by General Formula (I₁), a compound represented by General Formula (I₂), a compound represented by General Formula (I₃), and a compound represented by General Formula (I₄) set forth below: 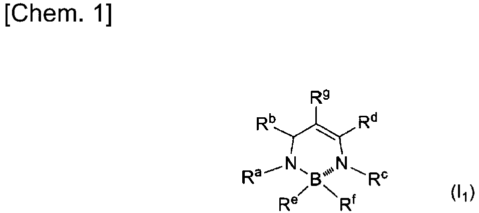 where in Formula (I₁),
   R^{a} and R^{b}, together with a nitrogen atom to which R^{a} is bonded and a carbon atom to which R^{b} is bonded, form an aromatic five-membered ring, an aromatic six-membered ring, or a fused aromatic ring in which 2 to 3 five-membered rings or six-membered rings are fused;
   R^{c} and R^{d}, together with a nitrogen atom to which R^{c} is bonded and a carbon atom to which R^{d} is bonded, form an aromatic five-membered ring, an aromatic six-membered ring, or a fused aromatic ring in which 2 to 3 five-membered rings or six-membered rings are fused;
   R^{e} and R^{f} represent a halogen atom or an oxygen atom;
   R^{g} represents a hydrogen atom or an electron-withdrawing group;
   provided that, when R^{e} and R^{f} are oxygen atoms, R^{e}, a boron atom to which R^{e} is bonded, R^{a}, and a nitrogen atom to which R^{a} is bonded may together form a ring, and R^{f}, a boron atom to which R^{f} is bonded, R^{c}, and a nitrogen atom to which R^{c} is bonded may together form a ring; and when R^{e} is an oxygen atom and does not form a ring, R^{e} is an oxygen atom having a substituent, and when R^{f} is an oxygen atom and does not form a ring, R^{f} is an oxygen atom having a substituent; 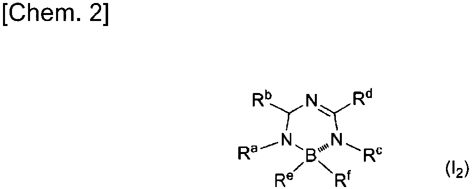 where in Formula (I₂),
      R^{a} to R^{f} are the same as those in Formula (I₁); 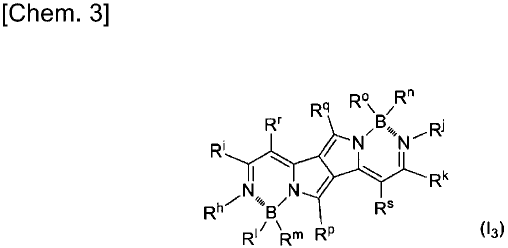 where in Formula (I₃),
      R^{h} and Rⁱ, together with a nitrogen atom to which R^{h} is bonded and a carbon atom to which Rⁱ is bonded, form an aromatic five-membered ring, an aromatic six-membered ring, or a fused aromatic ring in which 2 to 3 five-membered rings or six-membered rings are fused;
      R^{j} and R^{k}, together with a nitrogen atom to which R^{j} is bonded and a carbon atom to which R^{k} is bonded, form an aromatic five-membered ring, an aromatic six-membered ring, or a fused aromatic ring in which 2 to 3 five-membered rings or six-membered rings are fused;
      R^{l}, R^{m}, Rⁿ, and R° each independently represent a halogen atom, a C₁₋₂₀ alkyl group, a C₁₋₂₀ alkoxy group, an aryl group, or a heteroaryl group;
      R^{p} and R^{q} each independently represent a hydrogen atom, a halogen atom, a C₁₋₂₀ alkyl group, a C₁₋₂₀ alkoxy group, an aryl group, or a heteroaryl group; and
      R^{r} and R^{s} each independently represent a hydrogen atom or an electron-withdrawing group; and 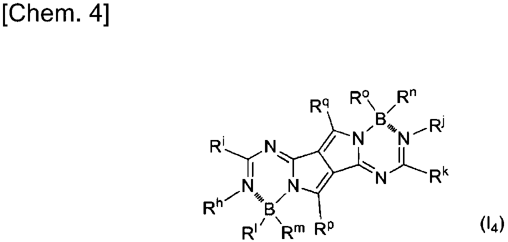 where in Formula (I₄),
         R^{h} to R^{q} are the same as those in Formula (I₃).
[11] The method for measuring a relative fluorescence intensity according to [10], wherein
   the near-infrared fluorescent dye includes one, or two or more compounds selected from the group consisting of
   a compound represented by General Formula (I₁-0) and a compound represented by General Formula (I₂-0) set forth below: 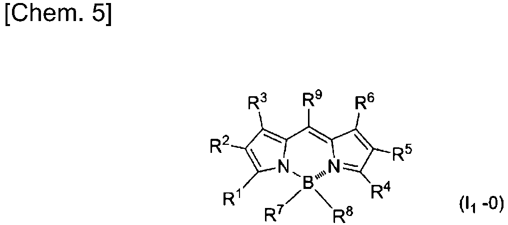 where in Formula (I₁-0),
      R¹, R², and R³ satisfy (p1), (p2), or (p3):
         (p1) R¹, R², and R³ each independently represent a hydrogen atom, a halogen atom, a C₁₋₂₀ alkyl group, a C₁₋₂₀ alkoxy group, an aryl group, or a heteroaryl group;
         (p2) R¹ and R² together form an aromatic five-membered or aromatic six-membered ring, and R³ represents a hydrogen atom, a halogen atom, a C₁₋₂₀ alkyl group, a C₁₋₂₀ alkoxy group, an aryl group, or a heteroaryl group; or
         (p3) R² and R³ together form an aromatic five-membered ring or an aromatic six-membered ring, and R¹ represents a hydrogen atom, a halogen atom, C₁₋₂₀ alkyl group, C₁₋₂₀ alkoxy group, an aryl group, or a heteroaryl group,
      R⁴, R⁵, and R⁶ satisfy (q1), (q2), or (q3):
         (q1) R⁴, R⁵, and R⁶ each independently represent a hydrogen atom, a halogen atom, a C₁₋₂₀ alkyl group, a C₁₋₂₀ alkoxy group, an aryl group, or a heteroaryl group;
         (q2) R⁴ and R⁵ together form an aromatic five-membered ring or an aromatic six-membered ring, and R⁶ represents a hydrogen atom, a halogen atom, a C₁₋₂₀ alkyl group, a C₁₋₂₀ alkoxy group, an aryl group, or a heteroaryl group; or
         (q3) R⁵ and R⁶ together form an aromatic five-membered ring or an aromatic six-membered ring, and R⁴ represents a hydrogen atom, a halogen atom, a C₁₋₂₀ alkyl group, a C₁₋₂₀ alkoxy group, an aryl group, or a heteroaryl group,
      R⁷ and R⁸ represent a halogen atom or an oxygen atom,
      R⁹ represents a hydrogen atom or an electron-withdrawing group,
      provided that, when R⁷ and R⁸ are oxygen atoms, R⁷, a boron atom bonded to R⁷, a nitrogen atom bonded to the boron atom, R¹, and a carbon atom bonded to R¹ may form a ring together, and R⁸, a boron atom bonded to R⁸, a nitrogen atom bonded to the boron atom, R⁴, and a carbon atom bonded to R⁴ may form a ring together, and when R⁷ is an oxygen atom and does not form a ring, R⁷ is an oxygen atom having a substituent, and when R² is an oxygen atom and does not form a ring, R⁸ is an oxygen atom having a substituent; 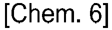 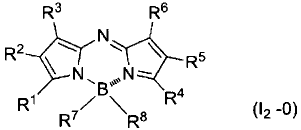 where in Formula (I₂-0),
         R¹ to R⁸ are the same as those in Formula (I₁-0).
[12] The method for measuring a relative fluorescence intensity according to [11], wherein in General Formula (I₁-0) or General Formula (I₂-0),
   R¹ and R² form a ring, and R⁴ and R⁵ form a ring, or
   R² and R³ form a ring, and R⁵ and R⁶ form a ring, and
   the ring is represented by any one of General Formulas (C-1) to (C-9) set forth below: 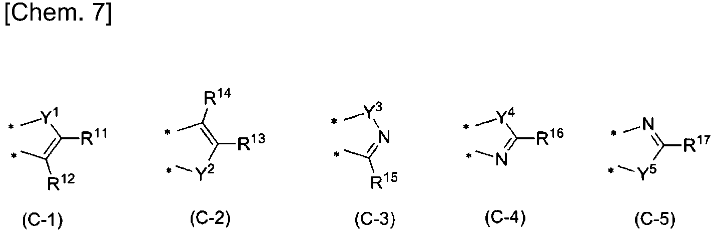 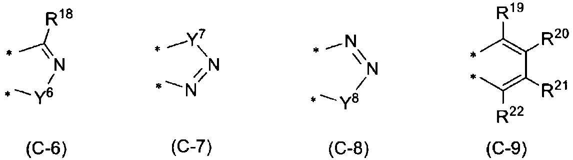 where in Formulas (C-1) to (C-9), Y¹ to Y⁸ each independently represent a sulfur atom, an oxygen atom, a nitrogen atom, or a phosphorus atom, and R¹¹ to R²² each independently represent a hydrogen atom or any group that does not inhibit fluorescence of the compound.
[13] The method for measuring a relative fluorescence intensity according to [10], wherein the near-infrared fluorescent dye includes one, or two or more compounds selected from the group consisting of a compound represented by any one of General Formulas (I₃-1) to (I₃-6) and a compound represented by any one of General Formulas (I₄-1) to (I₄-6) set forth below: 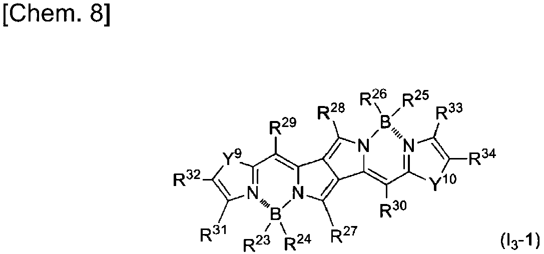 where in Formula (I₃-1),
   R²³, R²⁴, R²⁵, and R²⁶ each independently represent a halogen atom, a C₁₋₂₀ alkyl group, a C₁₋₂₀ alkoxy group, an aryl group, or a heteroaryl group;
   R²⁷ and R²⁸ each independently represent a hydrogen atom, a halogen atom, a C₁₋₂₀ alkyl group, a C₁₋₂₀ alkoxy group, an aryl group, or a heteroaryl group;
   R²⁹ and R³⁰ each independently represent a hydrogen atom or an electron-withdrawing group;
   Y⁹ and Y¹⁰ each independently represent a sulfur atom, an oxygen atom, a nitrogen atom, or a phosphorus atom;
   R³¹ and R³² satisfy (p4) or (p5):
      (p4) R³¹ and R³² each independently represent a hydrogen atom, a halogen atom, a C₁₋₂₀ alkyl group, a C₁₋₂₀ alkoxy group, an aryl group, or a heteroaryl group; or
      (p5) R³¹ and R³² together form an aromatic five-membered ring optionally having a substituent or an aromatic six-membered ring optionally having a substituent; and
   R³³ and R³⁴ satisfy (q4) or (q5):
      (q4) R³³ and R³⁴ each independently represent a hydrogen atom, a halogen atom, a C₁₋₂₀ alkyl group, a C₁₋₂₀ alkoxy group, an aryl group, or a heteroaryl group; or
      (q5) R³³ and R³⁴ together form an aromatic five-membered ring optionally having a substituent or an aromatic six-membered ring optionally having a substituent; 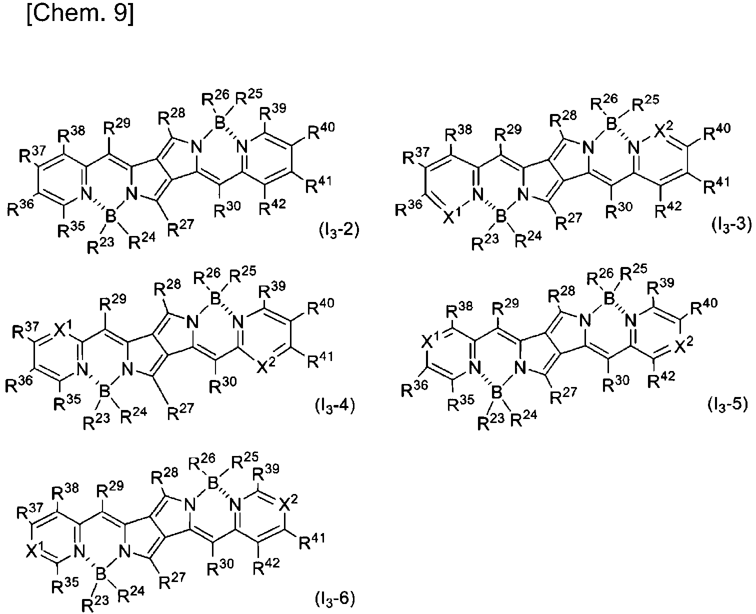
         where in Formulas (I₃-2) to (I₃-6), R²³ to R³⁰ are the same as those in Formula (I₃-1);
         X¹ and X² each independently represent a nitrogen atom or a phosphorus atom;
         R³⁵, R³⁶, R³⁷, and R³⁸ satisfy (p6), (q7), (q8), or (p9):
            (p6) R³⁵, R³⁶, R³⁷, and R³⁸ each independently represent a hydrogen atom, a halogen atom, a C₁₋₂₀ alkyl group, a C₁₋₂₀ alkoxy group, an aryl group, or a heteroaryl group;
            (p7) R³⁵ and R³⁶ together form an aromatic five-membered ring optionally having a substituent or an aromatic six-membered ring optionally having a substituent, and R³⁷ and R³⁸ each independently represent a hydrogen atom, a halogen atom, a C₁₋₂₀ alkyl group, a C₁₋₂₀ alkoxy group, an aryl group, or a heteroaryl group;
            (p8) R³⁶ and R³⁷ together form an aromatic five-membered ring optionally having a substituent or an aromatic six-membered ring optionally having a substituent, and R³⁵ and R³⁸ each independently represent a hydrogen atom, a halogen atom, a C₁₋₂₀ alkyl group, a C₁₋₂₀ alkoxy group, an aryl group, or a heteroaryl group; or
            (p9) R³⁷ and R³⁸ together form an aromatic five-membered ring optionally having a substituent or an aromatic six-membered ring optionally having a substituent, and R³⁵ and R³⁶ each independently represent a hydrogen atom, a halogen atom, a C₁₋₂₀ alkyl group, a C₁₋₂₀ alkoxy group, an aryl group, or a heteroaryl group;
         R³⁹, R⁴⁰, R⁴¹, and R⁴² satisfy (q6), (q7), (q8), or (q9):
            (q6) R³⁹, R⁴⁰, R⁴¹, and R⁴² each independently represent a hydrogen atom, a halogen atom, a C₁₋₂₀ alkyl group, a C₁₋₂₀ alkoxy group, an aryl group, or a heteroaryl group;
            (q7) R³⁹ and R⁴⁰ together form an aromatic five-membered ring optionally having a substituent or an aromatic six-membered ring optionally having a substituent, and R⁴¹ and R⁴² each independently represent a hydrogen atom, a halogen atom, a C₁₋₂₀ alkyl group, a C₁₋₂₀ alkoxy group, an aryl group, or a heteroaryl group;
            (q8) R⁴⁰ and R⁴¹ together form an aromatic five-membered ring optionally having a substituent or an aromatic six-membered ring optionally having a substituent, and R³⁹ and R⁴² each independently represent a hydrogen atom, a halogen atom, a C₁₋₂₀ alkyl group, a C₁₋₂₀ alkoxy group, an aryl group, or a heteroaryl group; or
            (q9) R⁴¹ and R⁴² together form an aromatic five-membered ring optionally having a substituent or an aromatic six-membered ring optionally having a substituent, and R³⁹ and R⁴⁰ each independently represent a hydrogen atom, a halogen atom, a C₁₋₂₀ alkyl group, a C₁₋₂₀ alkoxy group, an aryl group, or a heteroaryl group; 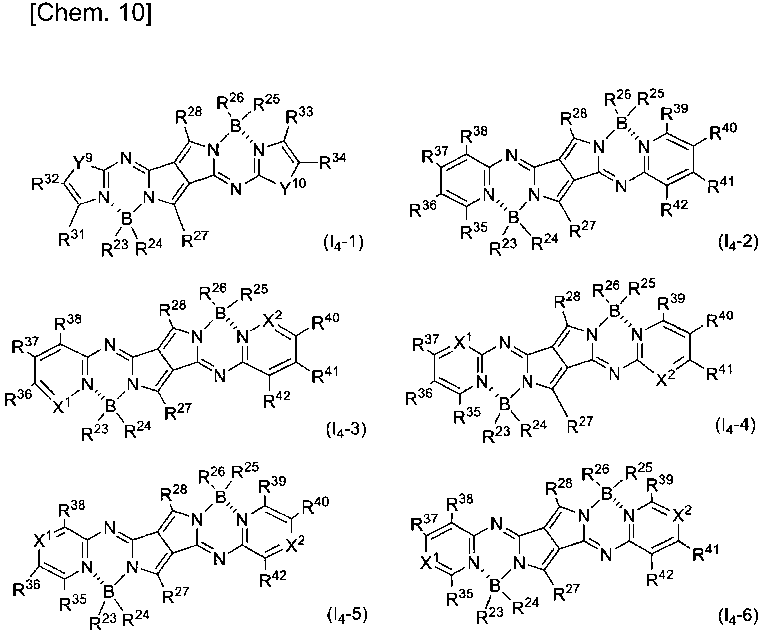
               where in Formulas (I₄-1) to (I₄-6), R²³ to R²⁸ are the same as those in Formula (I₃-1); in Formula (I₄-1), R³¹ to R³⁴, Y⁹, and Y¹⁰ are the same as those in Formula (I₃-1);
               in Formulas (I₄-2) to (I₄-6), R³⁵ to R⁴² are the same as those in Formula (I₃-2), and
               in Formulas (I₄-3) to (I₄-6), X¹ and X² are the same as those in Formula (I₃-3).
[14] The method for measuring a relative fluorescence intensity according to [10], wherein the near-infrared fluorescent dye includes one, or two or more compounds selected from the group consisting of compounds represented by any one of General Formulas (I₁-1-1) to (I₁-1-6), (I₁-2-1) to (I₁-2-12), (I₂-1-1) to (I₂-1-6), and (I₂-2-1) to (I₂-2-12): 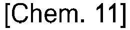 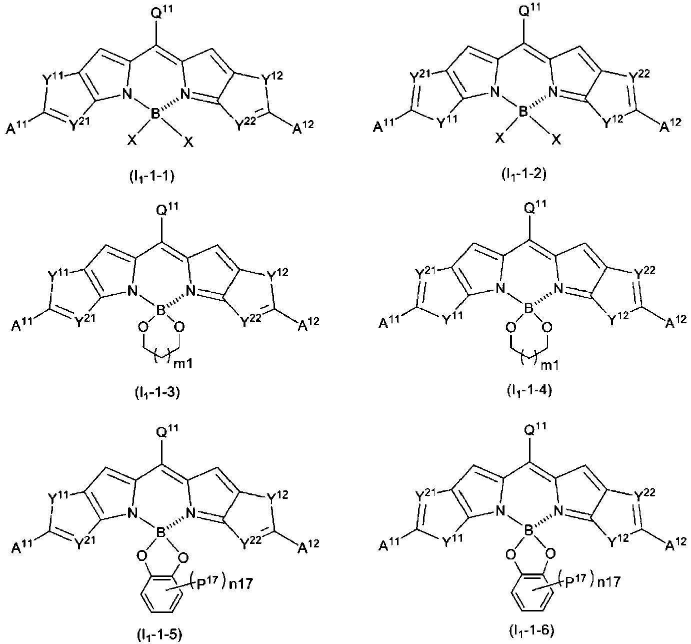 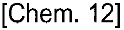 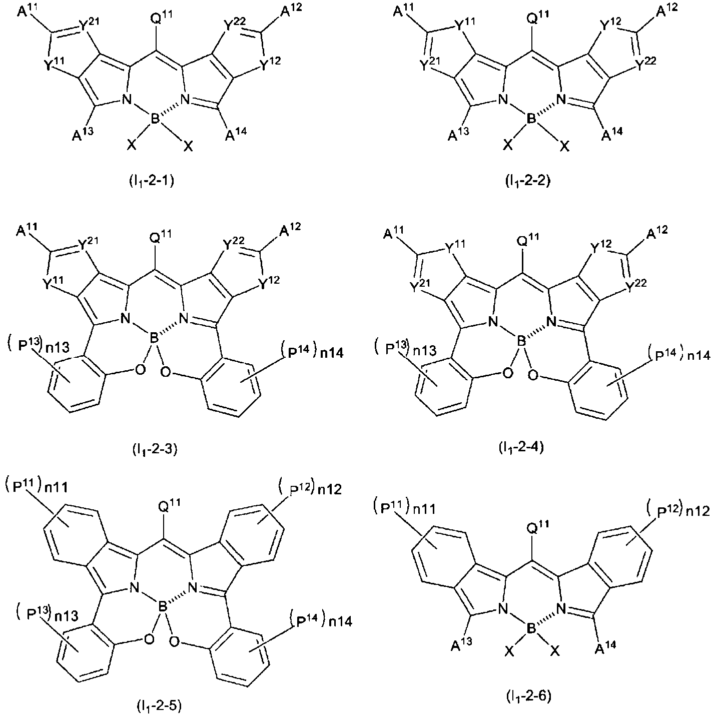 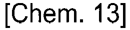 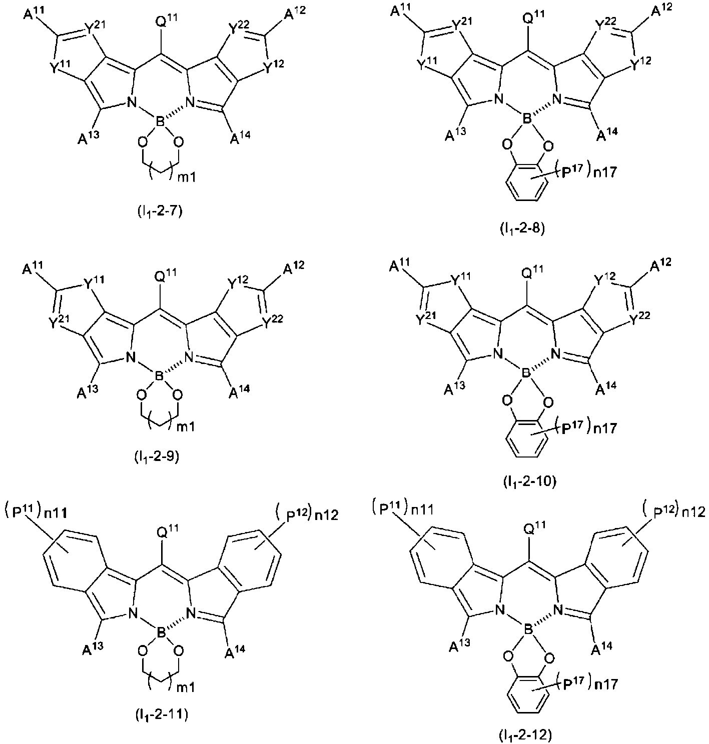 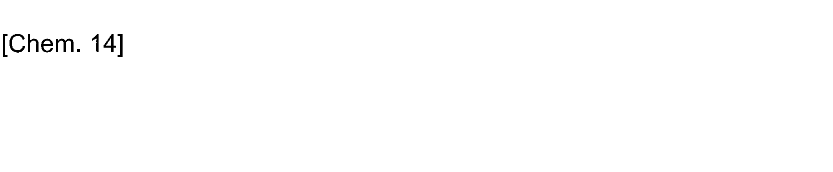 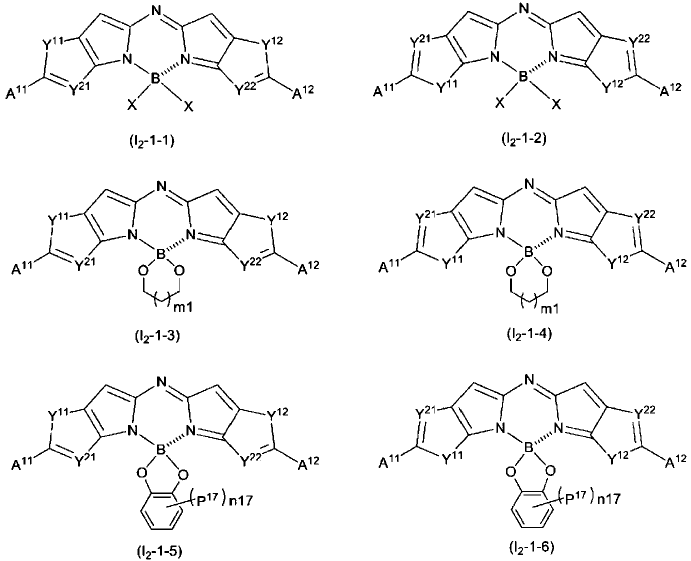 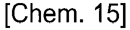 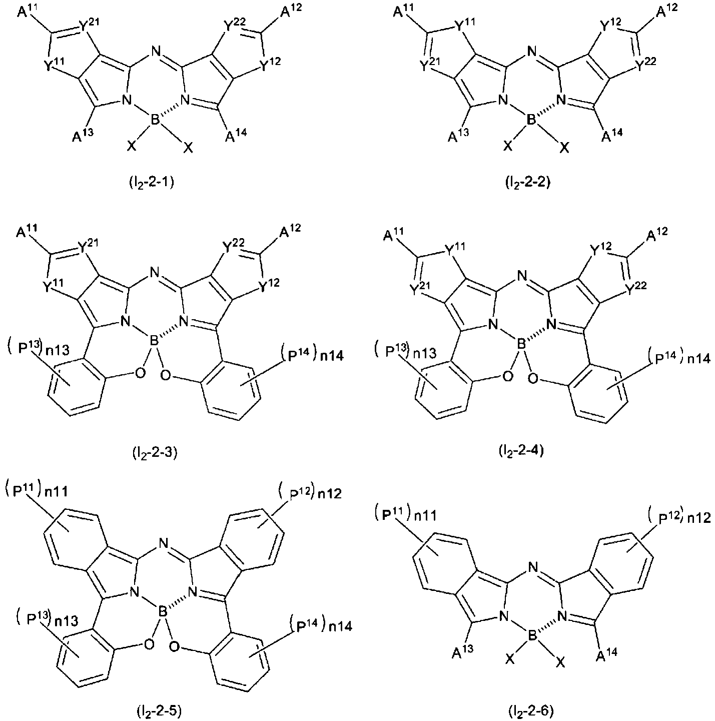 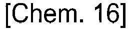 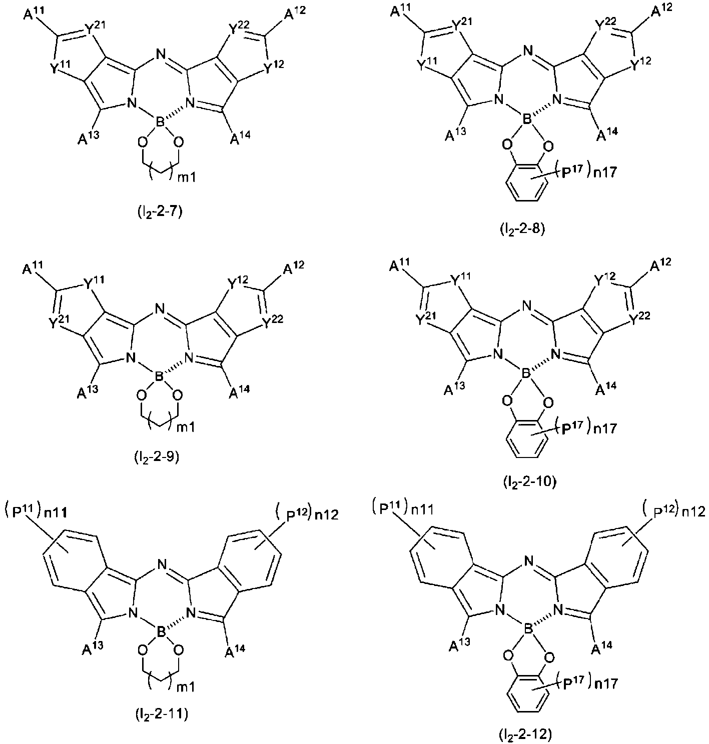
   where Y¹¹ and Y¹² each independently represent an oxygen atom or a sulfur atom;
   Y²¹ and Y²² each independently represent a carbon atom or a nitrogen atom;
   Q¹¹ represents a trifluoromethyl group, a cyano group, a nitro group, or a phenyl group;
   X each independently represents a halogen atom, a C₁₋₂₀ alkoxy group, an aryloxy group, or an acyloxy group;
   P¹¹ to P¹⁴ and P¹⁷ each independently represent a halogen atom, a C₁₋₂₀ alkyl group, a C₁₋₂₀ alkoxy group, an amino group, a monoalkylamino group, or a dialkylamino group;
   A¹¹ to A¹⁴ each independently represent a phenyl group optionally having 1 to 3 substituents selected from the group consisting of a halogen atom, a C₁₋₂₀ alkyl group, a C₁₋₂₀ alkoxy group, an amino group, a monoalkylamino group, and a dialkylamino group, or a heteroaryl group optionally having 1 to 3 substituents selected from the group consisting of a halogen atom, a C₁₋₂₀ alkyl group, a C₁₋₂₀ alkoxy group, an amino group, a monoalkylamino group, and a dialkylamino group;
   n11 to n14 and n17 each independently represent an integer from 0 to 3; and m1 represents 0 or 1.
[15] The method for measuring a relative fluorescence intensity according to [10], wherein the near-infrared fluorescent dye includes one, or two or more compounds selected from the group consisting of compounds represented by any one of General Formulas (I₃-7) to (I₃-9) and (I₄-7) to (I₄-9): 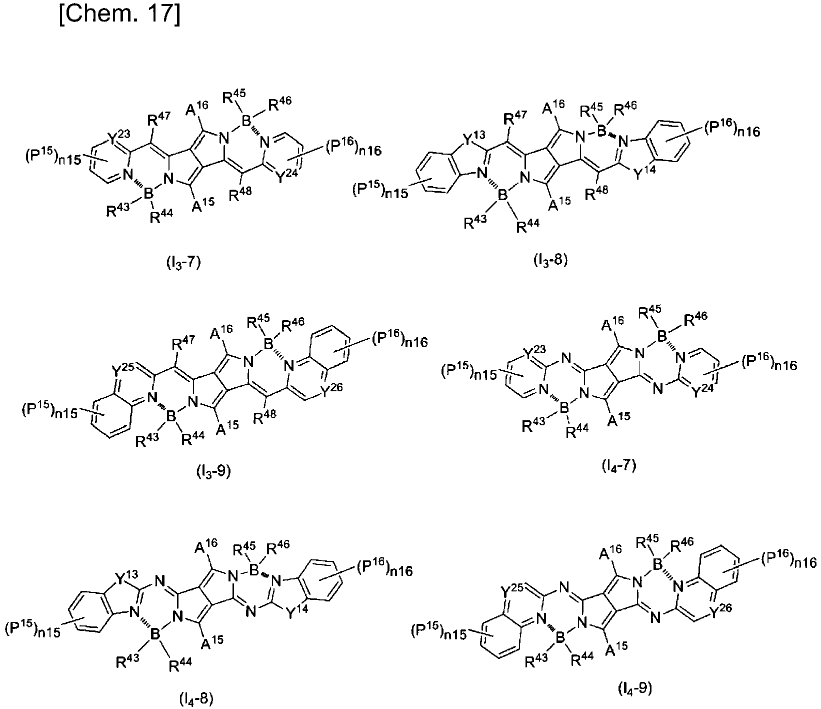
   where Y²³ and Y²⁴ each independently represent a carbon atom or a nitrogen atom;
   Y¹³ and Y¹⁴ each independently represent an oxygen atom or a sulfur atom;
   Y²⁵ and Y²⁶ each independently represent a carbon atom or a nitrogen atom;
   R⁴⁷ and R⁴⁸ each independently represent a hydrogen atom or an electron-withdrawing group;
   R⁴³, R⁴⁴, R⁴⁵, and R⁴⁶ represent a halogen atom or an aryl group optionally having a substituent;
   P¹⁵ and P¹⁶ each independently represent a halogen atom, a C₁₋₂₀ alkyl group, a C₁₋₂₀ alkoxy group, an amino group, a monoalkylamino group, or a dialkylamino group;
   n15 and n16 each independently represent an integer from 0 to 3; and
   A¹⁵ and A¹⁶ each independently represent a phenyl group optionally having 1 to 3 substituents selected from the group consisting of a hydrogen atom, a halogen atom, a C₁₋₂₀ alkyl group, a C₁₋₂₀ alkoxy group, an amino group, a monoalkylamino group, and a dialkylamino group.
[16] A standard plate set for relative fluorescence intensity measurement, the standard plate set including: a standard plate formed of a plate-shaped or film-shaped molded body of a resin composition obtained by melt-kneading a raw material mixture containing a near-infrared fluorescent dye and an amorphous resin; and
   a blank plate formed of a molded body having a same thickness as that of the standard plate of a resin composition obtained by melt-kneading a raw material mixture having a composition identical to a composition of the raw material mixture except that the near-infrared fluorescent dye is not contained.
[17] A standard plate set for relative fluorescence intensity measurement according to [16], wherein the near-infrared fluorescent dye includes one, or two or more compounds selected from the group consisting of a compound represented by General Formula (I₁) set forth below: 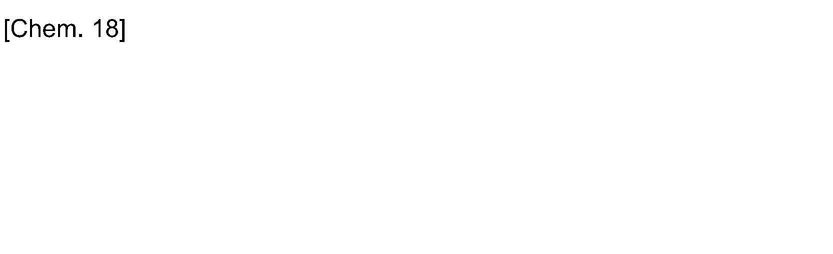 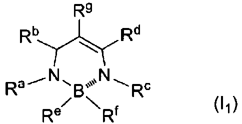 where in Formula (I₁),
   R^{a} and R^{b}, together with a nitrogen atom to which R^{a} is bonded and a carbon atom to which R^{b} is bonded, form an aromatic five-membered ring, an aromatic six-membered ring, or a fused aromatic ring in which 2 to 3 five-membered rings or six-membered rings are fused;
   R^{c} and R^{d}, together with a nitrogen atom to which R^{c} is bonded and a carbon atom to which R^{d} is bonded, form an aromatic five-membered ring, an aromatic six-membered ring, or a fused aromatic ring in which 2 to 3 five-membered rings or six-membered rings are fused;
   R^{e} and R^{f} represent a halogen atom or an oxygen atom; and
   R⁹ represents a hydrogen atom or an electron-withdrawing group;
   provided that, when R^{e} and R^{f} are oxygen atoms, R^{e}, a boron atom to which R^{e} is bonded, R^{a}, and a nitrogen atom to which R^{a} is bonded may together form a ring, and R^{f}, a boron atom to which R^{f} is bonded, R^{c}, and a nitrogen atom to which R^{c} is bonded may together form a ring; when R^{e} is an oxygen atom and does not form a ring, R^{e} is an oxygen atom having a substituent, and when R^{f} is an oxygen atom and does not form a ring, R^{f} is an oxygen atom having a substituent; 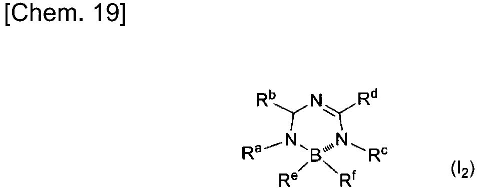 where in Formula (I₂), R^{a} to R^{f} are the same as those in Formula (I₁); 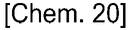 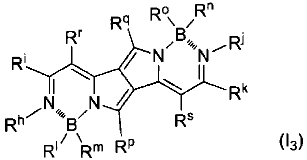 where in Formula (I₃),
      R^{h} and Rⁱ, together with a nitrogen atom to which R^{h} is bonded and a carbon atom to which Rⁱ is bonded, form an aromatic five-membered ring, an aromatic six-membered ring, or a fused aromatic ring in which 2 to 3 five-membered rings or six-membered rings are fused;
      R^{j} and R^{k}, together with a nitrogen atom to which R^{j} is bonded and a carbon atom to which R^{k} is bonded, form an aromatic five-membered ring, an aromatic six-membered ring, or a fused aromatic ring in which 2 to 3 five-membered rings or six-membered rings are fused;
      R^{l}, R^{m}, Rⁿ, and R° each independently represent a halogen atom, a C₁₋₂₀ alkyl group, a C₁₋₂₀ alkoxy group, an aryl group, or a heteroaryl group;
      R^{p} and R^{q} each independently represent a hydrogen atom, a halogen atom, a C₁₋₂₀ alkyl group, a C₁₋₂₀ alkoxy group, an aryl group, or a heteroaryl group; and
      R^{r} and R^{s} each independently represent a hydrogen atom or an electron-withdrawing group; and 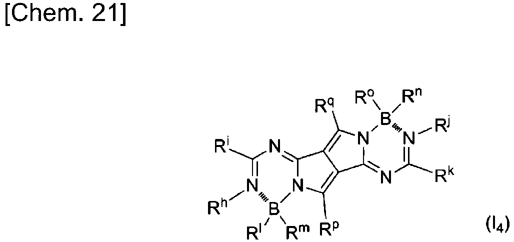 where in Formula (I₄), R^{h} to R^{q} are the same as those in Formula (I₃).
[18] The standard plate set for relative fluorescence intensity measurement according to [16] or [17], wherein the standard plate is a plate having a thickness from 1 µm to 15 mm.
[19] The standard plate set for relative fluorescence intensity measurement according to any of [16] to [18], wherein the amorphous resin includes one or more selected from the group consisting of a polycarbonate-based resin, a polystyrene-based resin, an acrylic-based resin, a polyoxymethylene-based resin, a polyester-based resin, and a vinyl chloride-based resin.

### ADVANTAGEOUS EFFECTS OF INVENTION

The method for measuring a relative fluorescence intensity according to the present invention is a method for examining the relative fluorescence intensity of a test sample that emits near-infrared fluorescence, in which a plate obtained by molding a resin composition obtained by melt-kneading a near-infrared fluorescent dye is used as a standard sample. Thus, the relative fluorescence intensity of the near-infrared fluorescence of a molded body can be obtained with higher accuracy as compared with the measurement using a rhodamine-based fluorescent dye solution prepared in the known manner as a standard sample. In addition, by using the standard plate set for relative fluorescence intensity measurement including the plate, the method for measuring a relative fluorescence intensity can be more easily performed.

### DESCRIPTION OF EMBODIMENTS

A method for measuring a relative fluorescence intensity according to the present invention is a method for measuring a relative fluorescence intensity of a test sample that emits near-infrared fluorescence, in which a plate-shaped or film (thin film)-shaped molded body of a resin composition obtained by melt-kneading a raw material mixture containing a near-infrared fluorescent dye and an amorphous resin is used as a standard plate as a standard sample at the time of fluorescence measurement. In the standard plate, the near-infrared fluorescent dye is present in the molded body of the resin composition. Thus, the stability of the near-infrared fluorescent dye is better than in the state of a solution, and the fluorescence intensity of the standard plate is stable over time. Thus, the same standard plate can be used in common for measurements with measurement intervals, which can eliminate the time and effort for mixing immediately before use and can suppress variation between measurements.

In the method for measuring a relative fluorescence intensity according to the present invention, a relative value of the fluorescence intensity at substantially the same wavelength as a wavelength λ₁ of the test sample with respect to the fluorescence intensity at the wavelength λ₁ in the near-infrared region of the standard plate is measured as the relative fluorescence intensity of the test sample. In the present invention and the specification of the present application, a wavelength being substantially the same as a specific wavelength means that a difference from the specific wavelength is within 10 nm, that is, a wavelength being substantially the same as the wavelength λ means a wavelength of λ ± 10 nm.

Specifically, in the method for measuring a relative fluorescence intensity according to the present invention, a plate-shaped or film-shaped molded body of a resin composition obtained by melt-kneading a raw material mixture containing a near-infrared fluorescent dye and an amorphous resin is used as a standard plate, and when the near-infrared fluorescent dye is not contained, a plate-shaped or film-shaped molded body of a resin composition obtained by melt-kneading a raw material mixture having a composition identical to that of the raw material mixture except that the near-infrared fluorescent dye is not contained is used as a blank plate. The fluorescence intensity F₁ of the test sample at the wavelength λ₁, the fluorescence intensity F_{1B} of the test sample blank at the wavelength λ_{1B} that is substantially the same wavelength as the wavelength λ₁, the fluorescence intensity F_{S} of the standard plate at the wavelength λ_{S}, and the fluorescence intensity F_{SB} of the blank plate at the wavelength λ_{SB} that is substantially the same wavelength as the wavelength λ_{S} are measured, and (F₁-F_{1B})/(F_{S}-F_{SB}) is defined as the relative fluorescence intensity of the test sample. Both the wavelength λ₁ and the wavelength λ_{S} are wavelengths in the near-infrared region, that is, wavelengths within a range from 650 to 1000 nm, and the wavelength λ₁ and the wavelength λ_{S} are substantially the same wavelength. The relative fluorescence intensity can be quantified by determining the fluorescence intensity relative to the standard plate for the wavelength in the near-infrared region of the test sample.

In the present invention, the wavelength λ₁ for measuring the fluorescence intensity of the test sample may be substantially different from, may be substantially the same as, or may be the same as the wavelength λ_{S} for measuring the fluorescence intensity of the standard plate. For example, when the near-infrared fluorescent dye included in the test sample and the near-infrared fluorescent dye included in the standard plate are the same type of dyes, the wavelength λ₁ and the wavelength λ_{S} may be different wavelengths. However, because a more reliable result is obtained, it is preferable that the wavelength λ₁ and the wavelength λ_{S} are substantially the same wavelength, and it is more preferably that they are the same wavelength. On the other hand, when the near-infrared fluorescent dye contained in the test sample and the near-infrared fluorescent dye contained in the standard plate are different types of dyes, the wavelength λ₁ and the wavelength λ_{S} may be substantially the same wavelength indicating sufficient fluorescence intensity in both the test sample and the standard plate, or the wavelength λ₁ and the wavelength λ_{S} may be substantially different wavelengths.

In the present invention, the wavelength λ₁ for measuring the fluorescence intensity for the test sample and the wavelength λ_{S} for measuring the fluorescence intensity for the standard plate are not particularly limited as long as each wavelength indicates sufficient fluorescence intensity. In the present invention, it is preferable that the wavelength λ₁ is set to the maximum fluorescence wavelength of the test sample, and the wavelength λ_{S} is set to the maximum fluorescence wavelength of the standard plate because a more reliable result is obtained. When the near-infrared fluorescent dye contained in the test sample and the near-infrared fluorescent dye contained in the standard plate are the same type of dyes, the maximum fluorescence wavelength of the test sample and the maximum fluorescence wavelength of the standard plate are substantially the same wavelength.

Hereinafter, unless otherwise specified, "the fluorescence wavelength of the standard plate" means "the wavelength λ_{S}", "the fluorescence intensity of the standard plate" means "the fluorescence intensity F_{S} of the standard plate at the wavelength λ_{S}", "the fluorescence wavelength of the blank plate" means "the wavelength λ_{SB}", and "the fluorescence intensity of the blank plate" means "the fluorescence intensity F_{SB} of the blank plate at the wavelength λ_{SB}". In addition, "the fluorescence wavelength of the test sample" means "the wavelength λ₁", "the fluorescence intensity of the test sample" means "the fluorescence intensity F₁ of the test sample at the wavelength λ₁", "the fluorescence wavelength of the test sample blank" means "the wavelength λ_{1B}", and "the fluorescence intensity of the test sample blank" means "the fluorescence intensity F_{1B} of the test sample blank at the wavelength λ_{1B}".

### Standard Plate

The standard plate used in the present invention is a plate-shaped or film-shaped molded body of a resin composition obtained by melt-kneading a raw material mixture containing a near-infrared fluorescent dye and an amorphous resin. That is, the molded body is obtained by melt-kneading a raw material mixture containing a near-infrared fluorescent dye and an amorphous resin, and then molding the obtained resin composition into a plate shape or a film shape. Since the standard plate is a melt-molded body of a resin composition containing a near-infrared fluorescent dye and an amorphous resin, the standard plate is in a state where the near-infrared fluorescent dye is uniformly dispersed throughout the plate.

### Near-Infrared Fluorescent Dye

The near-infrared fluorescent dye contained in the standard plate used in the present invention is a near-infrared fluorescent dye having sufficient heat resistance and fastness that can be melt-kneaded in a resin and can stably emit near-infrared fluorescence even in the obtained kneaded product. The near-infrared fluorescent dye contained in the standard plate is not particularly limited as long as it has sufficient heat resistance and fastness suitable for melt-kneading.

Specific examples of the near-infrared fluorescent dye contained in the standard plate used in the present invention include compounds represented by General Formula (I₁), General Formula (I₂), General Formula (I₃), or General Formula (I₄) set forth below. Hereinafter, the compound may be referred to as "near-infrared fluorescent dye according to the present invention".

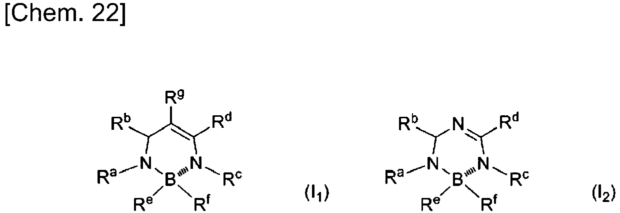

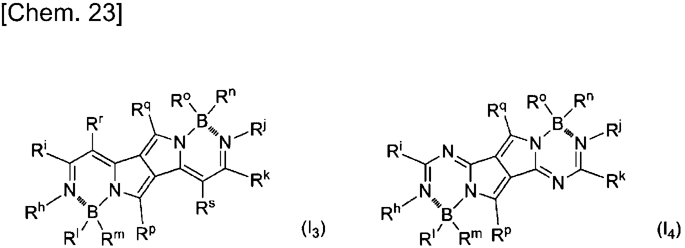

In General Formula (I₁) or General Formula (I₂), R^{a} and R^{b} form an aromatic ring composed of 1 to 3 rings together with the nitrogen atom to which R^{a} is bonded and the carbon atom to which R^{b} is bonded. Similarly, in General Formula (I₁) or General Formula (I₂), R^{c} and R^{d} form an aromatic ring composed of 1 to 3 rings together with the nitrogen atom to which R^{c} is bonded and the carbon atom to which R^{d} is bonded. Each ring of the aromatic ring formed by R^{a} and R^{b} and the aromatic ring formed by R^{c} and R^{d} is a five-membered ring or a six-membered ring. The compound represented by General Formula (I₁) or General Formula (I₂) has a ring structure in which the aromatic ring formed by R^{a} and R^{b} and the aromatic ring formed by R^{c} and R^{d} are fused with a ring containing a boron atom bonded to two nitrogen atoms. That is, the compound represented by General Formula (I₁) or General Formula (I₂) has a robust fused ring structure composed of a wide conjugate plane.

In General Formula (I₃) or General Formula (I₄), R^{h} and Rⁱ form an aromatic ring composed of 1 to 3 rings together with the nitrogen atom to which R^{h} is bonded and the carbon atom to which Rⁱ is bonded. Similarly, in General Formula (I₃) or General Formula (I₄), R^{j} and R^{k} form an aromatic ring composed of 1 to 3 rings together with the nitrogen atom to which R^{j} is bonded and the carbon atom to which R^{k} is bonded. Each ring of the aromatic ring formed by R^{h} and Rⁱ and the aromatic ring formed by R^{j} and R^{k} is a five-membered ring or a six-membered ring. The compound represented by General Formula (I₃) or General Formula (I₄) has a ring structure in which three rings in which an aromatic ring formed by R^{h} and Rⁱ, a ring containing a boron atom bonded to two nitrogen atoms, and a five-membered heterocyclic ring containing one nitrogen atom are fused, and three rings in which an aromatic ring formed by R^{j} and R^{k}, a ring containing a boron atom bonded to two nitrogen atoms, and a five-membered heterocyclic ring containing one nitrogen atom are fused are fused in five-membered heterocyclic rings, that is, a ring structure in which at least six rings are fused. In this manner, the compound represented by General Formula (I₃) or General Formula (I₄) has a robust fused ring structure composed of a very wide conjugate plane.

The aromatic ring formed by R^{a} and R^{b}, the aromatic ring formed by R^{c} and R^{d}, the aromatic ring formed by R^{h} and Rⁱ, and the aromatic ring formed by R^{j} and R^{k} are not particularly limited as long as they have aromaticity. Examples of the aromatic ring include a pyrrole ring, an imidazole ring, a pyrazole ring, an oxazole ring, a thiazole ring, a pyridine ring, a pyrimidine ring, a pyridazine ring, an isoindole ring, an indole ring, an indazole ring, a purine ring, a perimidine ring, a thienopyrrole ring, a furopyrrole ring, a pyrrolothiazole ring, and a pyrrolooxazole ring. In particular, in the case of General Formula (I₁) or General Formula (I₃), the number of fused rings of the aromatic ring is preferably 2 or 3, and more preferably 2 from the viewpoint of complexity in synthesis and the like, because the maximum fluorescence wavelength is lengthened to a long wavelength in the near-infrared region. However, even when the number of fused rings of the aromatic ring is 1, it is also possible to lengthen the wavelength by devising a substituent on the ring or a substituent on boron. In particular, in the case of General Formula (I₂) or General Formula (I₄), the wavelength can be lengthened to the near-infrared region only by bonding a substituted aryl group or a heteroaryl group.

The aromatic ring formed by R^{a} and R^{b}, the aromatic ring formed by R^{c} and R^{d}, the aromatic ring formed by R^{h} and Rⁱ, and the aromatic ring formed by R^{j} and R^{k} may have no substituent, or may have one or more substituents. The substituent of the aromatic ring is not limited as long as it is "any group that does not inhibit fluorescence of the compound".

The near-infrared fluorescent dye according to the present invention preferably has no mutagenicity, cytotoxicity, sensitization, skin irritation, or the like in a necessary biological safety test. In addition, from the viewpoint of safety, it is preferable that the near-infrared fluorescent dye according to the present invention does not dissolve out from a molded body obtained by processing a resin composition containing the near-infrared fluorescent dye with a body fluid such as blood or a tissue fluid. Thus, the near-infrared fluorescent dye according to the present invention preferably has low solubility in biological components such as blood. In consideration of these, it is preferable to select, as the substituent, a substituent that hardly exhibits mutagenicity or the like, or a substituent that lowers water solubility.

Examples of the substituent include a halogen atom, a nitro group, a cyano group, a hydroxy group, a carboxyl group, an aldehyde group, a sulfonic acid group, an alkylsulfonyl group, a halogenosulfonyl group, a thiol group, an alkylthio group, an isocyanate group, a thioisocyanate group, an alkyl group, an alkenyl group, an alkynyl group, an alkoxy group, an alkoxycarbonyl group, an alkylamidocarbonyl group, an alkylcarbonylamide group, an acyl group, an amino group, a monoalkylamino group, a dialkylamino group, a silyl group, a monoalkylsilyl group, a dialkylsilyl group, a trialkylsilyl group, a monoalkoxysilyl group, a dialkoxysilyl group, a trialkoxysilyl group, an aryl group, and a heteroaryl group. The substituent of the aromatic ring formed by R^{a} and R^{b}, the aromatic ring formed by R^{c} and R^{d}, the aromatic ring formed by R^{h} and Rⁱ, and the aromatic ring formed by R^{j} and R^{k} is preferably a cyano group, a hydroxy group, a carboxyl group, an alkylthio group, an alkyl group, an alkoxy group, an alkoxycarbonyl group, an amide group, an alkylsulfonyl group, fluorine, chlorine, an aryl group, or a heteroaryl group from the viewpoint of safety for living bodies, and these substituents may further have a substituent. However, because a substituent other than these substituents can improve safety by further introducing an appropriate substituent, the substituent is not limited to these substituents.

Examples of the halogen atom include a fluorine atom, a chlorine atom, a bromine atom, and an iodine atom. A fluorine atom, a chlorine atom, and a bromine atom are preferable, and a fluorine atom is more preferable.

The alkyl group, the alkenyl group, and the alkynyl group may be linear, branched, or cyclic (aliphatic cyclic group). The number of carbon atoms in these groups is preferably 1 to 20, more preferably 1 to 12, and still more preferably 1 to 6. Examples of the alkyl group include a methyl group, an ethyl group, a propyl group, an isopropyl group, an n-butyl group, an isobutyl group, a t-butyl group (tert-butyl group), a pentyl group, an isoamyl group, a hexyl group, a heptyl group, an octyl group, a nonyl group, a decyl group, an undecyl group, and a dodecyl group. Examples of the alkenyl group include a vinyl group, an allyl group, a 1-propenyl group, an isopropenyl group, a 2-butenyl group, a 1,3-butadienyl group, a 2-pentenyl group, and a 2-hexenyl group. Examples of the alkynyl group include an ethynyl group, a 1-propynyl group, a 2-propynyl group, an isopropynyl group, a 1-butynyl group, and an isobutynyl group.

Examples of the alkyl group moiety in the alkylsulfonyl group, the alkylthio group, the alkoxy group, the alkoxycarbonyl group, the alkylamidocarbonyl group, the alkylcarbonylamide group, the monoalkylamino group, the dialkylamino group, the monoalkylsilyl group, the dialkylsilyl group, the trialkylsilyl group, the monoalkoxysilyl group, the dialkoxysilyl group, and the trialkoxysilyl group include those similar to the alkyl group. Examples of the alkoxy group include a methoxy group, an ethoxy group, a propyloxy group, an isopropyloxy group, an n-butyloxy group, an isobutyloxy group, a t-butyloxy group, a pentyloxy group, an isoamyloxy group, a hexyloxy group, a heptyloxy group, an octyloxy group, a nonyloxy group, a decyloxy group, an undecyloxy group, and a dodecyloxy group. Examples of the monoalkylamino group include a methylamino group, an ethylamino group, a propylamino group, an isopropylamino group, a butylamino group, an isobutylamino group, a t-butylamino group, a pentylamino group, and a hexylamino group, and examples of the dialkylamino group include a dimethylamino group, a diethylamino group, a dipropylamino group, a diisopropylamino group, a dibutylamino group, a diisobutylamino group, a dipentylamino group, a dihexylamino group, an ethylmethylamino group, a methylpropylamino group, a butylmethylamino group, an ethylpropylamino group, and a butylethylamino group.

Examples of the aryl group include a phenyl group, a naphthyl group, an indenyl group, and a biphenyl group. A phenyl group is preferable. Examples of the heteroaryl group include five-membered heteroaryl groups such as a pyrrolyl group, an imidazolyl group, a pyrazolyl group, a thienyl group, a furanyl group, an oxazolyl group, an isoxazolyl group, a thiazolyl group, an isothiazolyl group, and a thiadiazole group; six-membered heteroaryl groups such as a pyridinyl group, a pyrazinyl group, a pyrimidinyl group, and a pyridazinyl group; and fused heteroaryl groups such as an indolyl group, an isoindolyl group, an indazolyl group, a quinolizinyl group, a quinolinyl group, an isoquinolinyl group, a benzofuranyl group, an isobenzofuranyl group, a chromenyl group, a benzoxazolyl group, a benzisoxazolyl group, a benzothiazolyl group, and a benzisothiazolyl group.

The alkyl group, alkenyl group, alkynyl group, aryl group, and heteroaryl group may be unsubstituted groups, and one or more hydrogen atoms may be substituted with a substituent. Examples of the substituent include a halogen atom, an alkyl group, an alkoxy group, a nitro group, a cyano group, a hydroxy group, an amino group, a thiol group, a carboxyl group, an aldehyde group, a sulfonic acid group, an isocyanate group, a thioisocyanate group, an aryl group, and a heteroaryl group.

The absorption wavelength and the fluorescence wavelength of the fluorescent dye depend on the surrounding environment. Thus, the absorption wavelength of the fluorescent dye in the resin may become shorter or longer than that in a solution. When the absorption wavelength of the near-infrared fluorescent dye according to the present invention is lengthened, the maximum absorption wavelength is preferably in the near-infrared region among various resins. The maximum absorption wavelength of the fluorescent dye can be lengthened by introducing an electron-donating group and an electron-withdrawing group at appropriate positions in the molecule to narrow the band gap between the highest occupied molecular orbital (HOMO) and the lowest unoccupied molecular orbital (LUMO).

For example, by introducing an electron-donating group into the aromatic ring formed by R^{a} and R^{b} and the aromatic ring formed by R^{c} and R^{d} and introducing an electron-withdrawing group into R^{g} among the compounds represented by General Formula (I₁), the maximum absorption wavelength and the maximum fluorescence wavelength of the compound can be further lengthened. Similarly, by introducing an electron-donating group into the aromatic ring formed by R^{h} and Rⁱ and the aromatic ring formed by R^{j} and R^{k}, by introducing an electron-donating group into the aromatic ring when R^{p} and R^{q} are aromatic rings, or by introducing an electron-withdrawing group into R^{r} and R^{s} among the compounds represented by General Formula (I₃), the maximum absorption wavelength and the maximum fluorescence wavelength of the compound can be further lengthened. By combining these designs, the wavelength can be adjusted to a target wavelength.

The compound represented by General Formula (I₂) having an aza-BODIPY skeleton is a skeleton having absorption at a relatively long wavelength even when an aromatic ring formed by R^{a} and R^{b} and an aromatic ring formed by R^{c} and R^{d} are unsubstituted. Unlike the compound represented by General Formula (I₁), in the skeleton, a substituent cannot be introduced on nitrogen because the crosslinking moiety of pyrrole is a nitrogen atom, but by introducing an electron-donating group into the pyrrole moiety (the aromatic ring formed by R^{a} and R^{b} and the aromatic ring formed by R^{c} and R^{d}), the maximum absorption wavelength and the maximum fluorescence wavelength of the compound can be further lengthened. Similarly, in the case of the compound represented by General Formula (I₄), by introducing an electron-donating group into the pyrrole moiety (the aromatic ring formed by R^{h} and Rⁱ and the aromatic ring formed by R^{j} and R^{k}), or by introducing an electron-donating group into the aromatic ring when R^{p} and R^{q} are aromatic rings, the maximum absorption wavelength and the maximum fluorescence wavelength of the compound can be further lengthened.

Thus, as the substituent of the aromatic ring formed by R^{a} and R^{b}, the aromatic ring formed by R^{c} and R^{d}, the aromatic ring formed by R^{h} and Rⁱ, and the aromatic ring formed by R^{j} and R^{k}, a group functioning as an electron-donating group for the aromatic ring is preferable among "any group that does not inhibit fluorescence of the compound". By introducing an electron-donating group into the aromatic ring, the fluorescence of the compound represented by General Formula (I₁), General Formula (I₂), General Formula (I₃), or General Formula (I₄) comes to a longer wavelength side. Examples of the group functioning as the electron-donating group include an alkyl group; alkoxy groups such as methoxy groups; aryl groups (aromatic ring groups) such as a phenyl group, a p-alkoxyphenyl group, a p-dialkylaminophenyl group, and a dialkoxyphenyl group; and heteroaryl groups (heteroaromatic ring groups) such as a 2-thienyl group and a 2-furanyl group. As the alkyl group, the alkyl group in the substituent of the phenyl group, and the alkyl group moiety in the alkoxy group, a linear or branched alkyl group having 1 to 10 carbon atoms is preferable. The number of carbon atoms in the alkyl group moiety and the presence or absence of branching may be appropriately selected in view of various physical properties of the dye. From the viewpoint of solubility, compatibility, and the like, the number of carbon atoms may be preferably 6 or more, or branching may be preferable. The substituent of the aromatic ring formed by R^{a} and R^{b}, the aromatic ring formed by R^{c} and R^{d}, the aromatic ring formed by R^{h} and Rⁱ, and the aromatic ring formed by R^{j} and R^{k} is preferably a C₁₋₆ alkyl group, a C₁₋₆ alkoxy group, an aryl group, or a heteroaryl group, more preferably a methyl group, an ethyl group, a methoxy group, a phenyl group, a p-methoxyphenyl group, a p-ethoxyphenyl group, a p-dimethylaminophenyl group, a dimethoxyphenyl group, a thienyl group, or a furanyl group, and still more preferably a methyl group, an ethyl group, a methoxy group, a phenyl group, or a p-methoxyphenyl group. Since the BODIPY skeleton has high flatness, molecules are easily aggregated through π-π stacking. By introducing an aryl group or a heteroaryl group having a bulky substituent into the BODIPY skeleton, aggregation of molecules can be suppressed, and the emission quantum yield of the standard plate containing the near-infrared fluorescent dye can be increased.

In General Formula (I₁) or General Formula (I₂), the aromatic ring formed by R^{a} and R^{b} and the aromatic ring formed by R^{c} and R^{d} may be different from each other or may be the same type. In General Formula (I₃) or General Formula (I₄), the aromatic ring formed by R^{h} and Rⁱ and the aromatic ring formed by R^{j} and R^{k} may be different from each other or may be the same type. As the near-infrared fluorescent dye according to the present invention, because synthesis is easy and the emission quantum yield tends to be higher, the aromatic ring formed by R^{a} and R^{b} and the aromatic ring formed by R^{c} and R^{d}, or the aromatic ring formed by R^{h} and Rⁱ and the aromatic ring formed by R^{j} and R^{k} are preferably the same type.

In General Formula (I₁) or General Formula (I₂), R^{e} and R^{f} each independently represent a halogen atom or an oxygen atom. When R^{e} and R^{f} are halogen atoms, a fluorine atom, a chlorine atom, a bromine atom, or an iodine atom is preferable, a fluorine atom or a chlorine atom is more preferable, and a fluorine atom is particularly preferable because it has a strong bond with a boron atom. Since a compound in which R^{e} and R^{f} are fluorine atoms has high heat resistance, it is advantageous when the compound is melt-kneaded with a resin at a high temperature. As the compound represented by General Formula (I₁) or General Formula (I₂), even when R^{e} and R^{f} are not a halogen atom or an oxygen atom but a substituent containing an atom capable of bonding to a boron atom, the compound can be contained in a resin in the same manner as the near-infrared fluorescent dye according to the present invention. Any substituent is acceptable as long as it does not inhibit fluorescence.

In General Formula (I₁) or General Formula (I₂), when R^{e} and R^{f} are oxygen atoms, R^{e}, the boron atom bonded to R^{e}, R^{a}, and the nitrogen atom bonded to R^{a} may together form a ring, and R^{f}, the boron atom bonded to R^{f}, R^{c}, and the nitrogen atom bonded to R^{c} may together form a ring. That is, in the case of forming a ring structure, a ring formed by R^{e}, the boron atom bonded to R^{e}, R^{a}, and the nitrogen atom bonded to R^{a} is fused with the aromatic ring formed by R^{a} and R^{b}, and a ring formed by R^{f}, the boron atom bonded to R^{f}, R^{c}, and the nitrogen atom bonded to R^{c} is fused with the aromatic ring formed by R^{c} and R^{d}. The ring formed by R^{e} and the like and the ring formed by R^{f} and the like are preferably six-membered rings.

In General Formula (I₁) or General Formula (I₂), when R^{e} is an oxygen atom and does not form a ring, R^{e} is an oxygen atom having a substituent (oxygen atom bonded to the substituent). Examples of the substituent include a C₁₋₂₀ alkyl group, an aryl group, a heteroaryl group, an alkylcarbonyl group, an arylcarbonyl group, and a heteroarylcarbonyl group. Similarly, in General Formula (I₁) or General Formula (I₂), when R^{f} is an oxygen atom and does not form a ring, R^{f} is an oxygen atom having a substituent (oxygen atom bonded to the substituent). Examples of the substituent include a C₁₋₂₀ alkyl group, an aryl group, a heteroaryl group, an alkylcarbonyl group, an arylcarbonyl group, and a heteroarylcarbonyl group. When both R^{e} and R^{f} are oxygen atoms having a substituent, the substituent of R^{e} and the substituent of R^{f} may be the same or different.

In General Formula (I₁) or General Formula (I₂), when R^{e} and R^{f} are oxygen atoms, R^{e}, R^{f}, and the boron atom bonded to R^{e} and R^{f} may together form a ring. Examples of the ring structure include a structure in which R^{e} and R^{f} are linked to the same aryl ring or heteroaryl ring, and a structure in which R^{e} and R^{f} are linked by an alkylene group.

In General Formula (I₃) or General Formula (I₄), R^{l}, R^{m}, Rⁿ, and R° each independently represent a halogen atom, a C₁₋₂₀ alkyl group, a C₁₋₂₀ alkoxy group, an aryl group, or a heteroaryl group. When R^{l}, R^{m}, Rⁿ, or R^{o} is a halogen atom, a fluorine atom, a chlorine atom, a bromine atom, or an iodine atom is preferable, a fluorine atom or a chlorine atom is more preferable, and a fluorine atom is particularly preferable because it has a strong bond with a boron atom. Since a compound in which R^{l}, R^{m}, Rⁿ, and R^{o} are fluorine atoms has high heat resistance, it is advantageous when the compound is melt-kneaded with a resin at a high temperature.

In the present invention and the specification of the present application, "C₁₋₂₀ alkyl group" means an alkyl group having 1 to 20 carbon atoms, and "C₁₋₂₀ alkoxy group" means an alkoxy group having 1 to 20 carbon atoms.

When R^{l}, R^{m}, Rⁿ, or R^{o} is a C₁₋₂₀ alkyl group, the alkyl group may be linear, branched, or cyclic (aliphatic cyclic group). Examples of the alkyl group include a methyl group, an ethyl group, a propyl group, an isopropyl group, an n-butyl group, an isobutyl group, a t-butyl group, a pentyl group, an isoamyl group, a hexyl group, a heptyl group, an octyl group, a nonyl group, a decyl group, an undecyl group, and a dodecyl group.

When R^{l}, R^{m}, Rⁿ, or R^{o} is a C₁₋₂₀ alkoxy group, the alkyl group moiety of the alkoxy group may be linear, branched, or cyclic (aliphatic cyclic group). Examples of the alkoxy group include a methoxy group, an ethoxy group, a propyloxy group, an isopropyloxy group, an n-butyloxy group, an isobutyloxy group, a t-butyloxy group, a pentyloxy group, an isoamyloxy group, a hexyloxy group, a heptyloxy group, an octyloxy group, a nonyloxy group, a decyloxy group, an undecyloxy group, and a dodecyloxy group.

When R^{l}, R^{m}, Rⁿ, or R^{o} is an aryl group, examples of the aryl group include a phenyl group, a naphthyl group, an indenyl group, and a biphenyl group.
When R^{l}, R^{m}, Rⁿ, or R^{o} is a heteroaryl group, examples of the heteroaryl group include five-membered heteroaryl groups such as a pyrrolyl group, an imidazolyl group, a pyrazolyl group, a thienyl group, a furanyl group, an oxazolyl group, an isoxazolyl group, a thiazolyl group, an isothiazolyl group, and a thiadiazole group; six-membered heteroaryl groups such as a pyridinyl group, a pyrazinyl group, a pyrimidinyl group, and a pyridazinyl group; and fused heteroaryl groups such as an indolyl group, an isoindolyl group, an indazolyl group, a quinolizinyl group, a quinolinyl group, an isoquinolinyl group, a benzofuranyl group, an isobenzofuranyl group, a chromenyl group, a benzoxazolyl group, a benzisoxazolyl group, a benzothiazolyl group, and a benzisothiazolyl group.

The C₁₋₂₀ alkyl group, the C₁₋₂₀ alkoxy group, the aryl group, and the heteroaryl group represented by R^{l}, R^{m}, Rⁿ, or R^{o} may be unsubstituted groups, and one or more hydrogen atoms may be substituted with a substituent. Examples of the substituent include a halogen atom, an alkyl group, an alkoxy group, a nitro group, a cyano group, a hydroxy group, an amino group, a thiol group, a carboxyl group, an aldehyde group, a sulfonic acid group, an isocyanate group, a thioisocyanate group, an aryl group, and a heteroaryl group.

As the compound represented by General Formula (I₃) or General Formula (I₄), R^{l}, R^{m}, Rⁿ, and R^{o} are preferably a halogen atom, an unsubstituted aryl group, or an aryl group having a substituent, preferably a fluorine atom, a chlorine atom, a bromine atom, an unsubstituted phenyl group, or a phenyl group substituted with a C₁₋₂₀ alkyl group or a C₁₋₂₀ alkoxy group, more preferably a fluorine atom, a chlorine atom, an unsubstituted phenyl group, or a phenyl group substituted with a C₁₋₁₀ alkyl group or a C₁₋₁₀ alkoxy group, and particularly preferably a fluorine atom or an unsubstituted phenyl group.

In General Formula (I₃) or General Formula (I₄), R^{p} and R^{q} each independently represent a hydrogen atom, a halogen atom, a C₁₋₂₀ alkyl group, a C₁₋₂₀ alkoxy group, an aryl group, or a heteroaryl group. Examples of the halogen atom, C₁₋₂₀ alkyl group, C₁₋₂₀ alkoxy group, aryl group, and heteroaryl group represented by R^{p} and R^{q} include those similar to R^{l}, R^{m}, Rⁿ, or R^{o} in General Formula (I₃).

As the compound represented by General Formula (I₃) or General Formula (I₄), a compound in which R^{p} and R^{q} are a hydrogen atom or an aryl group is preferable, a compound in which they are an unsubstituted phenyl group or a phenyl group substituted with a C₁₋₂₀ alkyl group or a C₁₋₂₀ alkoxy group is preferable, a compound in which they are an unsubstituted phenyl group or a phenyl group substituted with a C₁₋₂₀ alkoxy group is more preferable, and a compound in which they are an unsubstituted phenyl group or a phenyl group substituted with a C₁₋₁₀ alkoxy group is particularly preferable.

In General Formula (I₁), R^{g} represents a hydrogen atom or an electron-withdrawing group. In General Formula (I₃), R^{r} and R^{s} each independently represent a hydrogen atom or an electron-withdrawing group. Examples of the electron-withdrawing group include a methyl halide group such as a trifluoromethyl group; a nitro group; a cyano group; an aryl group; a heteroaryl group; an alkynyl group; an alkenyl group; substituents having a carbonyl group such as a carboxyl group, an acyl group, a carbonyloxy group, an amide group, or an aldehyde group; a sulfoxide group; a sulfonyl group; an alkoxymethyl group; an aminomethyl group. An aryl group or a heteroaryl group having these electron-withdrawing groups as substituents can also be used. Among these electron-withdrawing groups, a trifluoromethyl group, a nitro group, a cyano group, a phenyl group, a sulfonyl group, and the like that can function as a strong electron-withdrawing group are preferable from the viewpoint of lengthening the maximum fluorescence wavelength.

The near-infrared fluorescent dye according to the present invention is preferably a compound represented by General Formula (I₁-0) or (I₂-0) set forth below. A compound having a boron dipyrromethene skeleton is preferable because the maximum fluorescence wavelength is further lengthened. In particular, a compound in which a pyrrole ring is fused with an aromatic ring or a heteroaromatic ring, which satisfies the following (p2), (p3), (q2), or (q3), is preferable as a near-infrared fluorescent dye because the maximum wavelength is still further lengthened.

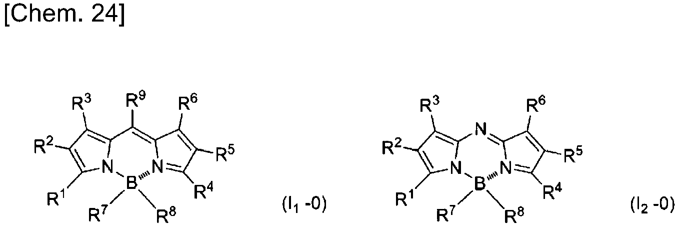

In General Formula (I₁-0) or General Formula (I₂-0), R¹, R², and R³ satisfy any of the following (p1) to (p3):
(p1) R¹, R², and R³ each independently represent a hydrogen atom, a halogen atom, a C₁₋₂₀ alkyl group, a C₁₋₂₀ alkoxy group, an aryl group, or a heteroaryl group;
(p2) R¹ and R² together form an aromatic five-membered ring or an aromatic six-membered ring, and R³ represents a hydrogen atom, a halogen atom, a C₁₋₂₀ alkyl group, a C₁₋₂₀ alkoxy group, an aryl group, or a heteroaryl group; or
(p3) R² and R³ together form an aromatic five-membered ring or an aromatic six-membered ring, and R¹ represents a hydrogen atom, a halogen atom, a C₁₋₂₀ alkyl group, a C₁₋₂₀ alkoxy group, an aryl group, or a heteroaryl group.

In General Formula (I₁-0) or General Formula (I₂-0), R⁴, R⁵, and R⁶ satisfy any of the following (q1) to (q3):
(q1) R⁴, R⁵, and R⁶ each independently represent a hydrogen atom, a halogen atom, a C₁₋₂₀ alkyl group, a C₁₋₂₀ alkoxy group, an aryl group, or a heteroaryl group;
(q2) R⁴ and R⁵ together form an aromatic five-membered ring or an aromatic six-membered ring, and R⁶ represents a hydrogen atom, a halogen atom, a C₁₋₂₀ alkyl group, a C₁₋₂₀ alkoxy group, an aryl group, or a heteroaryl group; or
(q3) R⁵ and R⁶ together form an aromatic five-membered ring or an aromatic six-membered ring, and R⁴ represents a hydrogen atom, a halogen atom, a C₁₋₂₀ alkyl group, a C₁₋₂₀ alkoxy group, an aryl group, or a heteroaryl group.

As the halogen atom, C₁₋₂₀ alkyl group, C₁₋₂₀ alkoxy group, aryl group, and heteroaryl group in (p1) to (p3) or (q1) to (q3), those exemplified as "any group that does not inhibit fluorescence of the compound" in R^{a} and R^{b} can be used.

In the above-described (p2) to (p3) or (q2) to (q3), as the aromatic five-membered ring or aromatic six-membered ring formed by R¹ and R² together, the aromatic five-membered ring or aromatic six-membered ring formed by R⁴ and R⁵ together, the aromatic five-membered ring or aromatic six-membered ring formed by R² and R³ together, and the aromatic five-membered ring or aromatic six-membered ring formed by R⁵ and R⁶ together, those represented by any of the following General Formulas (C-1) to (C-9) are preferable, and those represented by any of the following General Formulas (C-1), (C-2), and (C-9) are more preferable. In General Formulas (C-1) to (C-9), a portion marked with an asterisk is a moiety that binds to a boron dipyrromethene skeleton in General Formula (I₁-0) or General Formula (I₂-0).

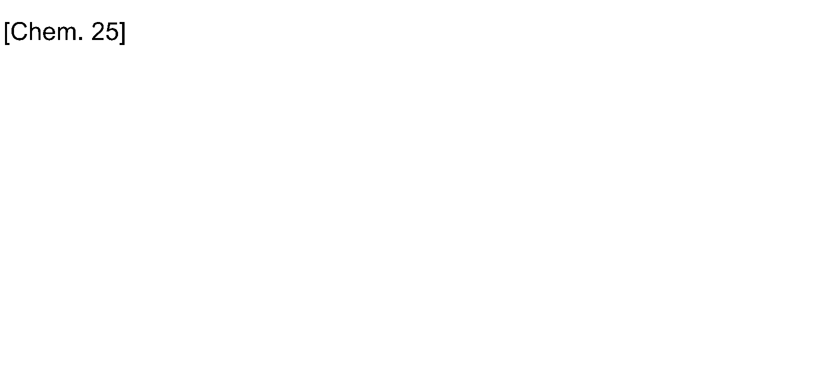

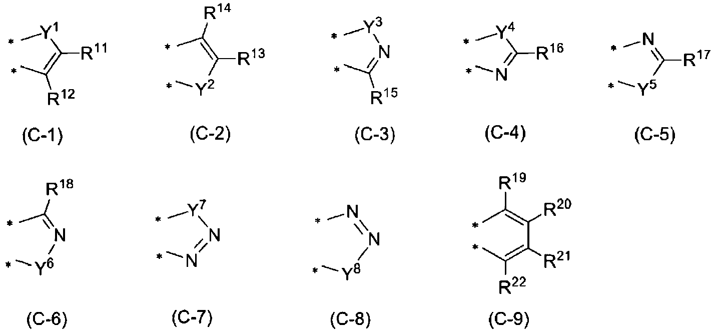

In General Formulas (C-1) to (C-8), Y¹ to Y⁸ each independently represent a sulfur atom, an oxygen atom, a nitrogen atom, or a phosphorus atom. Y¹ to Y⁸ are preferably each independently a sulfur atom, an oxygen atom, or a nitrogen atom, and they are more preferably each independently a sulfur atom or an oxygen atom.

In General Formulas (C-1) to (C-9), R¹¹ to R²² each independently represent a hydrogen atom or any group that does not inhibit fluorescence of the compound. As the "any group that does not inhibit the fluorescence of the compound", those exemplified in the "any group that does not inhibit the fluorescence of the compound" in R^{a} and R^{b} can be used. R¹¹ to R²² are preferably each independently a hydrogen atom, an unsubstituted aryl group, an aryl group having a substituent, an unsubstituted heteroaryl group, or a heteroaryl group having a substituent, more preferably each independently a hydrogen atom, an (unsubstituted) phenyl group, a p-methoxyphenyl group, a p-ethoxyphenyl group, a p-dimethylaminophenyl group, a dimethoxyphenyl group, a thienyl group, or a furanyl group, and still more preferably each independently a hydrogen atom, an (unsubstituted) phenyl group, or a p-methoxyphenyl group. It is particularly preferable that the compound is substituted with at least one of the unsubstituted aryl group, the aryl group having a substituent, the unsubstituted heteroaryl group, or the heteroaryl group having a substituent because the electron-donating property is enhanced, and the aggregation of the BODIPY skeleton can be suppressed by the bulky substituent.

As the compound of General Formula (I₁-0) or General Formula (I₂-0), R¹ and R⁴, R² and R⁵, and R³ and R⁶ may be different from each other, but are preferably the same type of groups. That is, when R¹, R², and R³ satisfy (p1), R⁴, R⁵, and R⁶ preferably satisfy (q1), when R¹, R², and R³ satisfy (p2), R⁴, R⁵, and R⁶ preferably satisfy (q2), and when R¹, R², and R³ satisfy (p3), R⁴, R⁵, and R⁶ preferably satisfy (q3).

As the compound of General Formula (I₁-0) or General Formula (I₂-0), it is preferable that R¹ and R² form a ring, and R⁴ and R⁵ form a ring, or R² and R³ form a ring, and R⁵ and R⁶ form a ring. That is, it is preferable that R¹, R², and R³ satisfy (p2) or (p3), and R⁴, R⁵, and R⁶ satisfy (q2) or (q3). This is because when an aromatic ring or a heteroaromatic ring is further fused with the boron dipyrromethene skeleton, the maximum fluorescence wavelength comes to a longer wavelength side.

In General Formula (I₁-0) or (I₂-0), R⁷ and R⁸ represent a halogen atom or an oxygen atom. When R⁷ and R⁸ are oxygen atoms, R⁷, the boron atom bonded to R⁷, the nitrogen atom bonded to the boron atom, R¹, and the carbon atom bonded to R¹ may together form a ring, and R⁸, the boron atom bonded to R⁸, the nitrogen atom bonded to the boron atom, R⁴, and the carbon atom bonded to R⁴ may together form a ring. That is, a ring formed by R⁷, a boron atom, R¹, and the like and a ring formed by R⁸, a boron atom, R⁴, and the like are both fused with the boron dipyrromethene skeleton. The ring formed by R⁷, a boron atom, R¹, and the like and the ring formed by R⁸, a boron atom, R⁴, and the like are preferably six-membered rings.

In General Formula (I₁-0) or General Formula (I₂-0), when R⁷ is an oxygen atom and does not form a ring, R⁷ is an oxygen atom having a substituent (oxygen atom bonded to the substituent). Examples of the substituent include a C₁₋₂₀ alkyl group, an aryl group, and a heteroaryl group. Similarly, in General Formula (I₁-0) or General Formula (I₂-0), when R⁸ is an oxygen atom and does not form a ring, R⁸ is an oxygen atom having a substituent (oxygen atom bonded to the substituent). Examples of the substituent include a C₁₋₂₀ alkyl group, an aryl group, and a heteroaryl group. When both R⁷ and R⁸ are oxygen atoms having a substituent, the substituent of R⁷ and the substituent of R⁸ may be the same or different.

In General Formula (I₁-0), R⁹ represents a hydrogen atom or an electron-withdrawing group. Examples of the electron-withdrawing group include the same groups as those described for R^{g}. Among them, from the viewpoint of lengthening the maximum fluorescence wavelength, a fluoroalkyl group, a nitro group, a cyano group, an aryl group, and a sulfonyl group that can function as a strong electron-withdrawing group are preferable, a trifluoromethyl group, a nitro group, a cyano group, a phenyl group, and a sulfonyl group are more preferable, and from the viewpoint of safety for living bodies, a trifluoromethyl group, a cyano group, a phenyl group, and a sulfonyl group are still more preferable. However, the electron-withdrawing group is not limited to these substituents.

As the near-infrared fluorescent dye according to the present invention, among the compounds represented by General Formula (I₁-0) or General Formula (I₂-0), a compound in which R¹ and R² together form a ring in which one of R¹¹ and R¹² is a hydrogen atom, and the other is a halogen atom, a phenyl group, a thienyl group, or a furanyl group in which 1 to 3 hydrogen atoms are optionally substituted with a halogen atom, a C₁₋₂₀ alkyl group, or a C₁₋₂₀ alkoxy group, R⁴ and R⁵ together form the same type of rings as the ring formed by R¹ and R², R³, and R⁶ are a hydrogen atom, and R⁷ and R⁸ are a halogen atom, in the ring represented by General Formula (C-1); a compound wherein R¹ and R² together form a ring in which one of R¹³ and R¹⁴ is a hydrogen atom, and the other is a halogen atom, a phenyl group, a thienyl group or a furanyl group in which 1 to 3 hydrogen atoms are optionally substituted with a halogen atom, a C₁₋₂₀ alkyl group or a C₁₋₂₀ alkoxy group, in the ring represented by General Formula (C-2), R⁴ and R⁵ together form the same type of rings as the ring formed by R¹ and R², and R³ and R⁶ are a hydrogen atom, and R⁷ and R⁸ are a halogen atom; a compound in which R² and R³ together form a ring in which one of R¹¹ and R¹² is a hydrogen atom, and the other is a halogen atom, a phenyl group, a thienyl group or a furanyl group in which 1 to 3 hydrogen atoms are optionally substituted with a halogen atom, a C₁₋₂₀ alkyl group or a C₁₋₂₀ alkoxy group, in the ring represented by General Formula (C-1), and R⁵ and R⁶ together form the same type of rings as the ring formed by R² and R³, R¹ and R⁴ are a hydrogen atom, and R⁷ and R⁸ are a halogen atom; a compound in which R² and R³ together form a ring in which one of R¹³ and R¹⁴ is a hydrogen atom, and the other is a halogen atom, a phenyl group, a thienyl group or a furanyl group in which 1 to 3 hydrogen atoms are optionally substituted with a halogen atom, a C₁₋₂₀ alkyl group or a C₁₋₂₀ alkoxy group, in the ring represented by General Formula (C-2), and R⁵ and R⁶ together form the same type of ring as the ring formed by R² and R³, R¹ and R⁴ are a hydrogen atom, and R⁷ and R⁸ are a halogen atom; a compound in which R² and R³ together form a ring in which 1 to 3 hydrogen atoms in any one of R¹⁹ to R²² are a halogen atom, a C₁₋₂₀ alkyl group or a phenyl group optionally substituted with a C₁₋₂₀ alkoxy group, a thienyl group or a furanyl group, and the remaining three group are hydrogen atoms, in the ring represented by General Formula (C-9), R⁵ and R⁶ together form a same type of ring as the ring formed by R² and R³, R¹ and R⁴ is a hydrogen atom, a halogen atom, a C₁₋₂₀ alkyl group, or a phenyl group optionally substituted with a C₁₋₂₀ alkoxy group, a thienyl group, or a furanyl group, and R⁷ and R⁸ are a halogen atom; are preferable. When these compounds are compounds represented by General Formula (I₁-0), compounds in which R⁹ is a trifluoromethyl group, a cyano group, a nitro group, or a phenyl group are more preferable, and compounds in which R⁹ is a trifluoromethyl group or a phenyl group are particularly preferable.

Preferable compounds of the near-infrared fluorescent dye according to the present invention include the compounds represented by the following General Formulas (I₁-1), (I₁-2), (I₁-3), (I₂-1), (I₂-2), and (I₂-3). In General Formula (I₁-1) and the like, R¹, R³, R⁴, and R⁶ to R⁸ have the same meanings as described above, ED represents an electron-donating group, EW represents an electron-withdrawing group, and Z¹ to Z⁴ rings each independently represent a five-membered or six-membered aryl group or a five-membered or six-membered heteroaryl group.

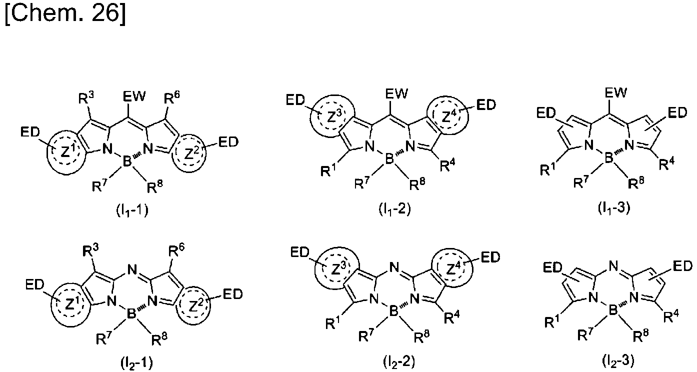

General Formula (I₁-1) is preferably compounds represented by General Formulas (I₁-1-1) to (I₁-1-6) set forth below, General Formula (I₁-2) is preferably compounds represented by General Formulas (I₁-2-1) to (I₁-2-12) set forth below, General Formula (I₂-1) is preferably compounds represented by General Formulas (I₂-1-1) to (I₂-1-6) set forth below, and General Formula (I₂-2) is preferably compounds represented by General Formulas (I₂-2-1) to (I₂-2-12) set forth below.

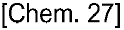

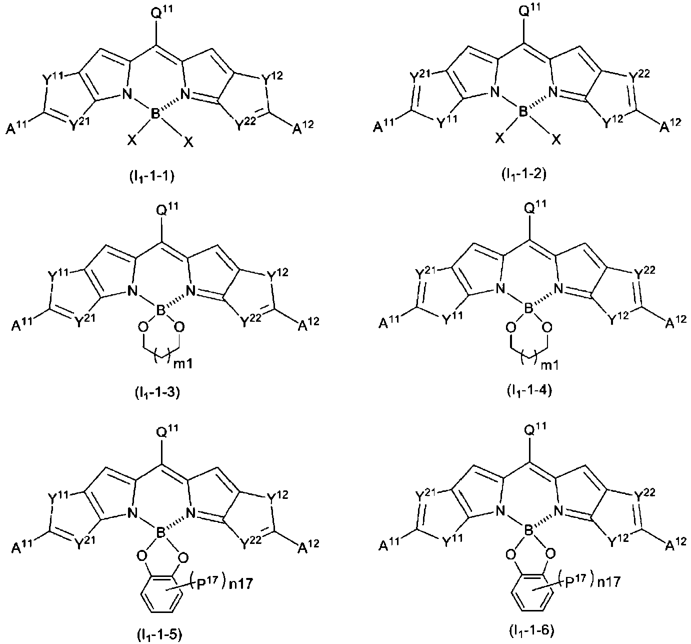

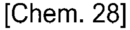

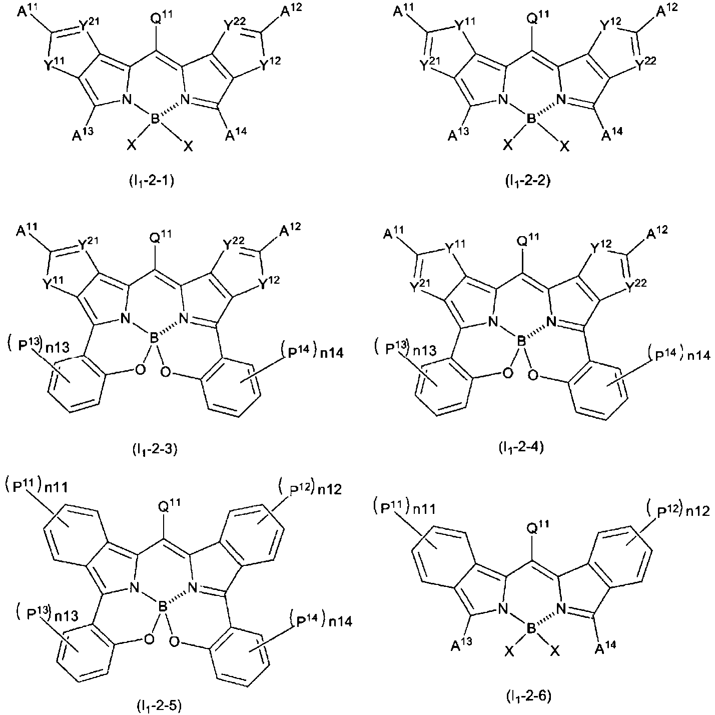

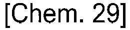

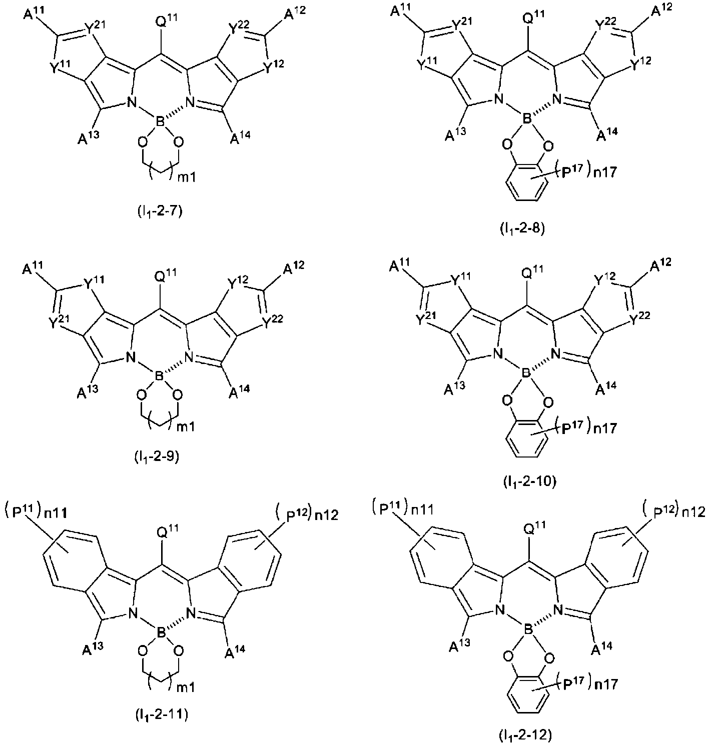

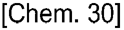

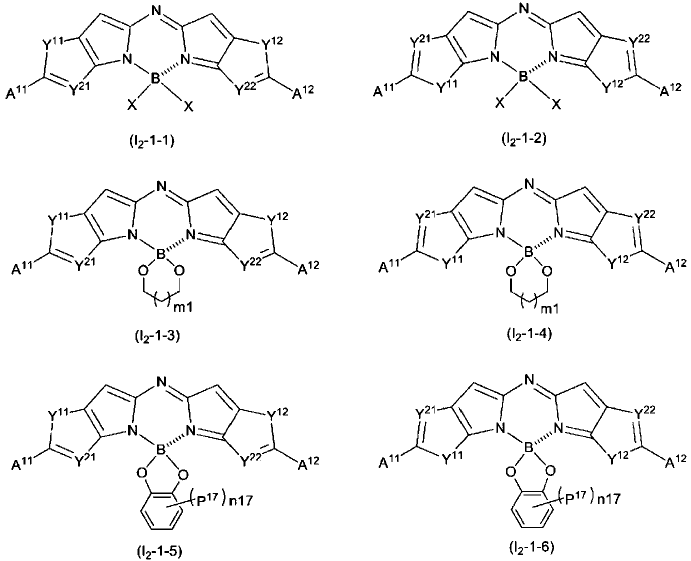

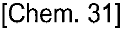

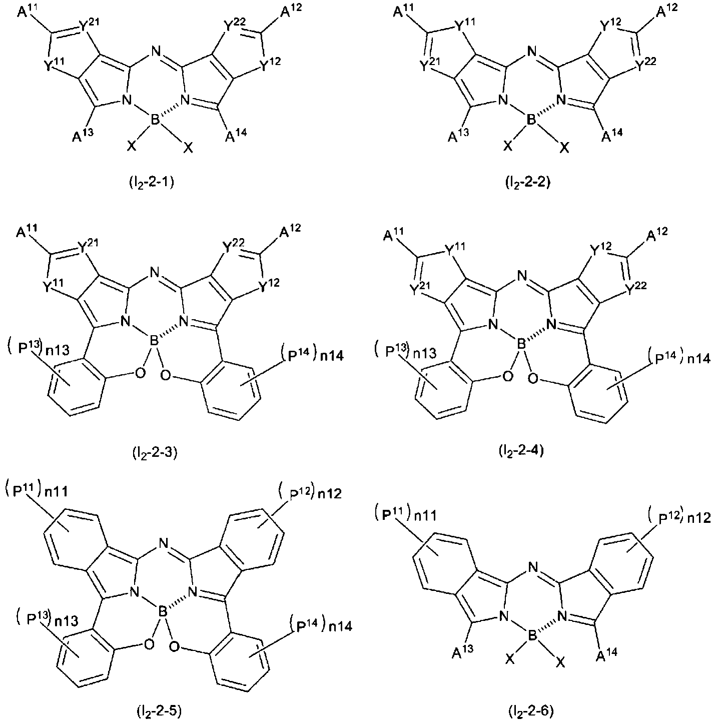

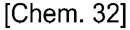

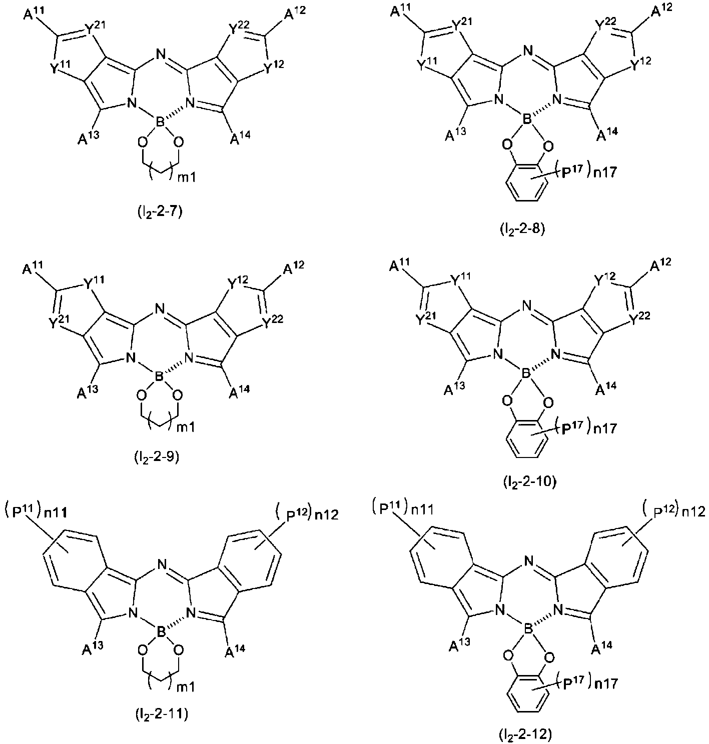

In General Formulas (I₁-1-1) to (I₁-1-6), (I₁-2-1) to (I₁-2-4), (I₁-2-7) to (I₁-2-10), (I₂-1-1)to (I₂-1-6), (I₂-2-1) to (I₂-2-4), and (I₂-2-7) to (I₂-2-10), Y¹¹ and Y¹² each independently represent an oxygen atom or a sulfur atom, and Y²¹ and Y²² each independently represent a carbon atom or a nitrogen atom. As the compound represented by General Formula (I₁-1-1) or the like, Y¹¹ and Y¹² are preferably the same type of atoms, and Y²¹ and Y²² are preferably the same type of atoms.

In General Formulas (I₁-1-1) to (I₁-1-6) and (I₁-2-1) to (I₁-2-12), Q¹¹ represents a hydrogen atom or an electron-withdrawing group. Examples of the electron-withdrawing group include the same groups as those described for R^{g}. As the compound represented by General Formula (I₁-1-1) or the like, a compound in which Q¹¹ is a trifluoromethyl group, a cyano group, a nitro group, or a phenyl group optionally having a substituent is preferable, and a compound in which the group is a trifluoromethyl group or a phenyl group optionally having a substituent is more preferable.

In General Formulas (I₁-1-1)to (I₁-1-2), (I₁-2-1) to (I₁-2-2), (I₁-2-6), (I₂-1-1) to (I₂-1-2), and (I₂-2-1) to (I₂-2-2) and (I₂-2-6), X each independently represents a halogen atom, a C₁₋₂₀ alkoxy group, an aryloxy group, or an acyloxy group.

When X is a C₁₋₂₀ alkoxy group, the alkyl group moiety of the alkoxy group may be linear, branched, or cyclic (aliphatic cyclic group). Examples of the alkoxy group include a methoxy group, an ethoxy group, a propyloxy group, an isopropyloxy group, an n-butyloxy group, an isobutyloxy group, a t-butyloxy group, a pentyloxy group, an isoamyloxy group, a hexyloxy group, a heptyloxy group, an octyloxy group, a nonyloxy group, a decyloxy group, an undecyloxy group, and a dodecyloxy group.

When X is an aryloxy group, examples of the aryloxy group include a phenyloxy group, a naphthyloxy group, an indenyloxy group, and a biphenyloxy group.

When X is an acyloxy group, the acyloxy group is preferably an alkylcarbonyloxy group or an arylcarbonyloxy group. Examples of the alkylcarbonyloxy group include a methylcarbonyloxy group (acetoxy group), an ethylcarbonyloxy group, a propylcarbonyloxy group, an isopropylcarbonyloxy group, an n-butylcarbonyloxy group, an isobutylcarbonyloxy group, a t-butylcarbonyloxy group, a pentylcarbonyloxy group, an isoamylcarbonyloxy group, a hexylcarbonyloxy group, a heptylcarbonyloxy group, an octylcarbonyloxy group, a nonylcarbonyloxy group, a decylcarbonyloxy group, an undecylcarbonyloxy group, and a dodecylcarbonyloxy group. Examples of the arylcarbonyloxy group include a phenylcarbonyloxy group (benzoyloxy group), a naphthylcarbonyloxy group, an indenylcarbonyloxy group, and a biphenylcarbonyloxy group.

As the compound represented by any of General Formulas (I₁-1-1) to (I₁-1-2), (I₁-2-1) to (I₁-2-2), (I₁-2-6), (I₂-1-1) to (I₂-1-2), (I₂-2-1) to (I₂-2-2), and (I₂-2-6), it is preferable that each X is a halogen atom, and it is particularly preferable that each X is a fluorine atom.

In General Formulas (I₁-1-3) to (I₁-1-4), (I₁-2-7), (I₁-2-9), (I₁-2-11), (I₂-1-3) to (I₂-1-4), (I₂-2-7), (I₂-2-9), and (I₂-2-11), m1 represents 0 or 1.

In General Formulas (I₁-1-5)to (I₁-1-6), (I₁-2-3) to (I₁-2-6), (I₁-2-8), (I₁-2-10) to (I₁-2-12), (I₂-1-5) to (I₂-1-6), (I₂-2-3) to (I₁-2-6), (I₂-2-8), and (I₂-2-10) to (I₂-2-12), P¹¹ to P¹⁴ and P¹⁷ each independently represent a halogen atom, a C₁₋₂₀ alkyl group, a C₁₋₂₀ alkoxy group, an amino group, a monoalkylamino group, or a dialkylamino group. Examples of the C₁₋₂₀ alkyl group, the C₁₋₂₀ alkoxy group, the monoalkylamino group, or the dialkylamino group in P¹¹ to P¹⁴ include the same groups as those described for R^{g}, (p1) to (p3), and (q1) to (q3). P¹¹ to P¹⁴ and P¹⁷ are preferably a C₁₋₂₀ alkyl group, a C₁₋₂₀ alkoxy group, an (unsubstituted) phenyl group, a p-methoxyphenyl group, a p-ethoxyphenyl group, a p-dimethylaminophenyl group, a dimethoxyphenyl group, a thienyl group, or a furanyl group, more preferably a C₁₋₂₀ alkyl group, a C₁₋₂₀ alkoxy group, a phenyl group, a p-methoxyphenyl group, a p-ethoxyphenyl group, a dimethoxyphenyl group, a thienyl group, or a furanyl group from the viewpoint of safety for living bodies, and these substituents may further have a substituent. However, because a substituent other than these substituents can improve safety by further introducing an appropriate substituent, the substituent is not limited to these substituents.

In General Formulas (I₁-1-5)to (I₁-1-6), (I₁-2-3) to (I₁-2-6), (I₁-2-8), (I₁-2-10) to (I₁-2-12), (I₂-1-5) to (I₂-1-6), (I₂-2-3) to (I₁-2-6), (I₂-2-8), and (I₂-2-10) to (I₂-2-12), n11 to n14 and n17 each independently represent an integer from 0 to 3. When a plurality of P¹¹ are present in one molecule (that is, when n11 is 2 or 3), all of the plurality of P¹¹ may be the same type of functional groups or different types of functional groups. The same applies to P¹² to P¹⁴ and P¹⁷.

In General Formulas (I₁-1-1) to (I₁-1-6), (I₁-2-1) to (I₁-2-4), (I₁-2-6) to (I₁-2-12), (I₂-1-1) to (I₂-1-6), (I₂-2-1) to (I₂-2-4), and (I₂-2-6) to (I₂-2-12), A¹¹ to A¹⁴ each independently represent a halogen atom, a phenyl group optionally having 1 to 3 substituents selected from the group consisting of a C₁₋₂₀ alkyl group, a C₁₋₂₀ alkoxy group, an amino group, a monoalkylamino group, and a dialkylamino group, or a heteroaryl group optionally having 1 to 3 substituents selected from the group consisting of a halogen atom, a C₁₋₂₀ alkyl group, a C₁₋₂₀ alkoxy group, an amino group, a monoalkylamino group, a monoalkylamino group, and a dialkylamino group. Examples of the heteroaryl group include those similar to R^{l}, R^{m}, Rⁿ, or R° in General Formula (I₃), and a thienyl group or a furanyl group is preferable. Examples of the C₁₋₂₀ alkyl group, the C₁₋₂₀ alkoxy group, the monoalkylamino group, or the dialkylamino group in the substituent which the phenyl group or the heteroaryl group may have include the same groups as those described for R^{g}, (p1) to (p3), and (q1) to (q3). A¹¹ to A¹⁴ are each preferably an unsubstituted phenyl group, a phenyl group having one or two C₁₋₂₀ alkoxy groups as a substituent, or a heteroaryl group, more preferably an unsubstituted phenyl group or a phenyl group having one C₁₋₂₀ alkoxy group as a substituent, still more preferably an unsubstituted phenyl group or a phenyl group having one C₁₋₁₀ alkoxy group as a substituent, and further still more preferably an unsubstituted phenyl group or a phenyl group having one C₁₋₆ alkoxy group as a substituent. As the compound represented by General Formula (I₁-1-1) or the like, all of A¹¹ to A¹⁴ are preferably the same type of functional groups.

As the near-infrared fluorescent dye according to the present invention, in particular, a compound represented by any of General Formulas (1-1) to (1-37), (2-1) to (2-7), (3-1) to (3-37), (4-1) to (4-7), and (5-1) to (5-2) set forth below is preferable, a compound represented by any of General Formulas (1-1) to (1-12), (1-25) to (1-31), (2-1) to (2-7), and (3-25) to (3-31) set forth below is more preferable, and a compound represented by any of General Formulas (1-1), (1-3), (1-4), (1-6), (1-25), (1-27), (2-1), (3-1), (3-3), (3-4), (3-6), (3-25), (3-27), and (4 -1) set forth below is still more preferable.

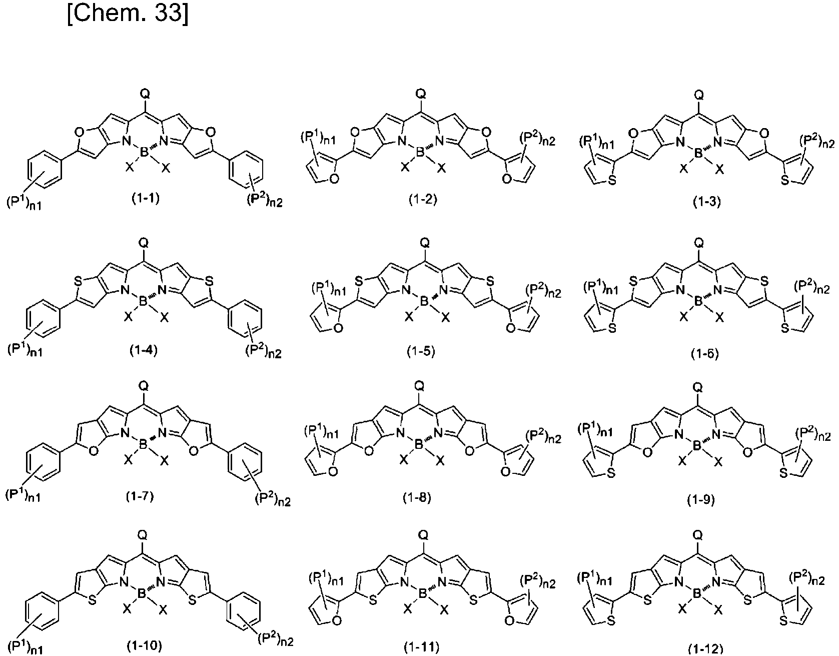

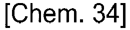

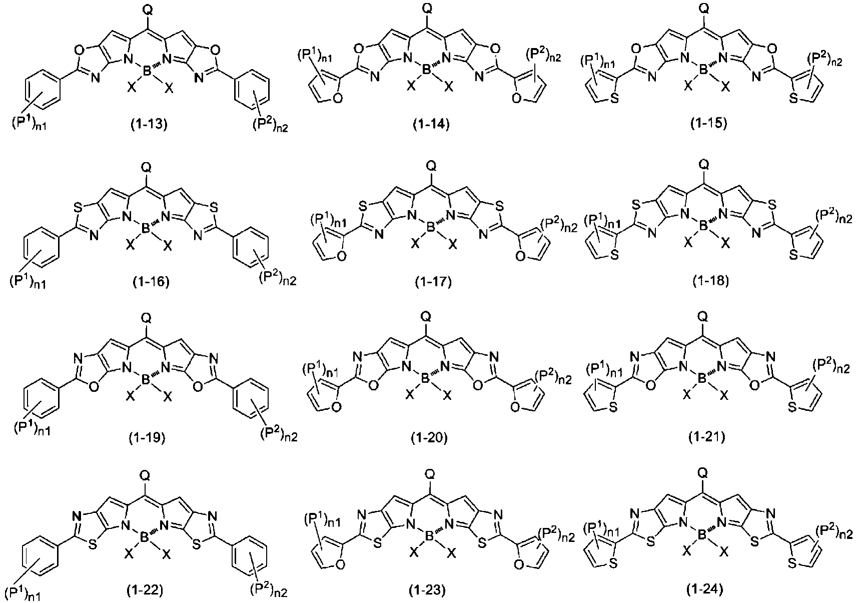

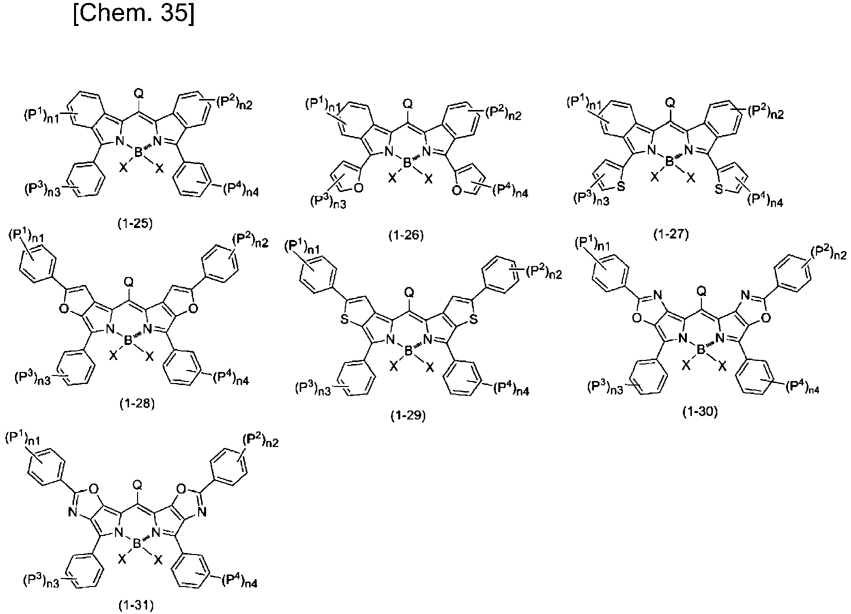

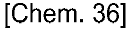

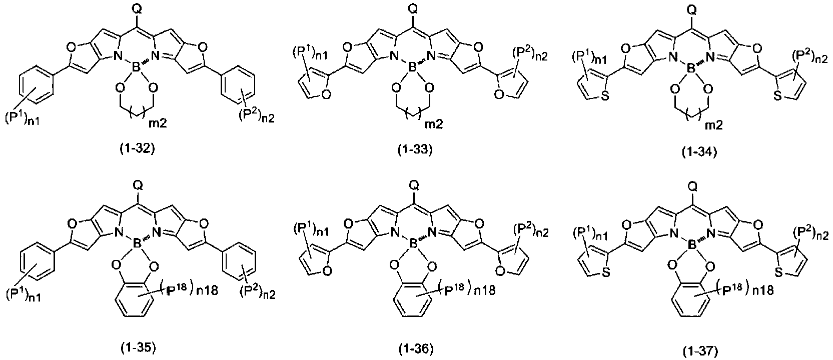

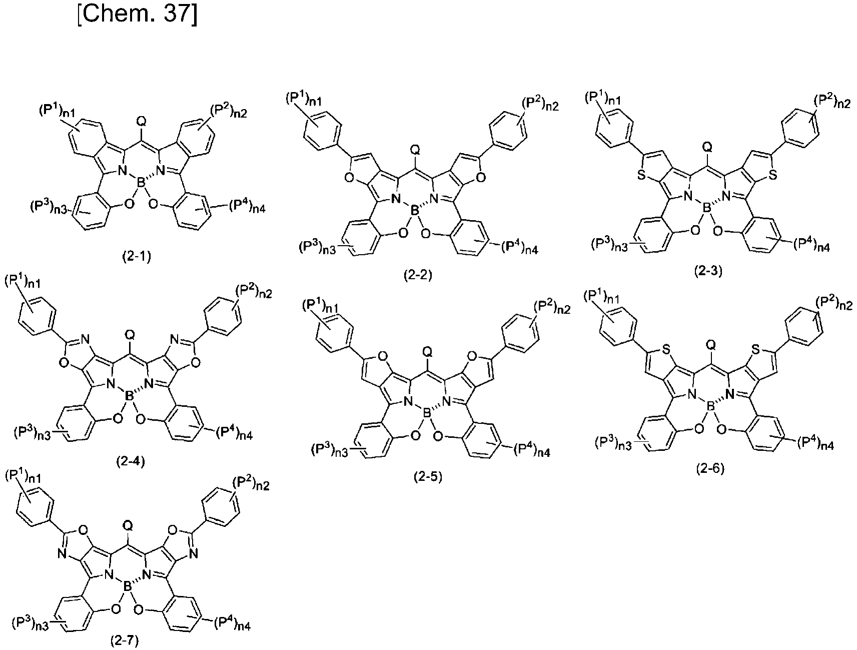

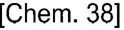

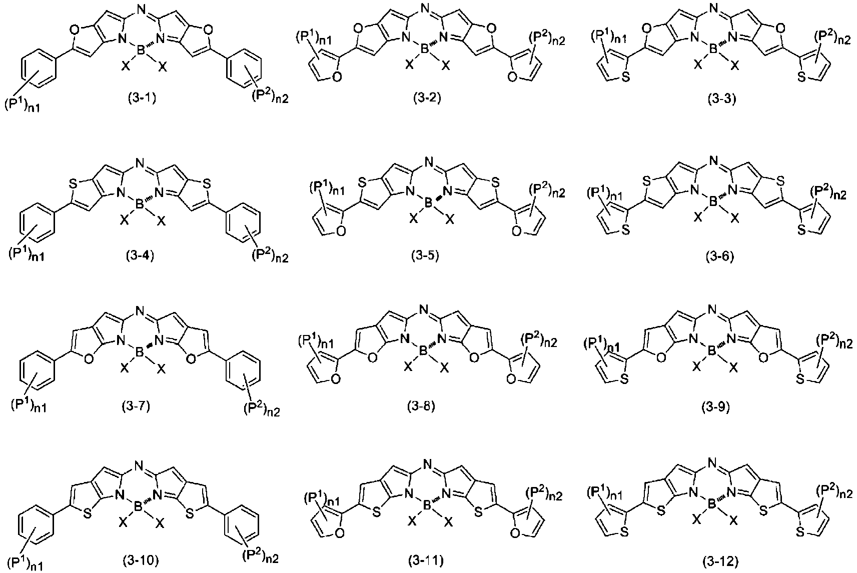

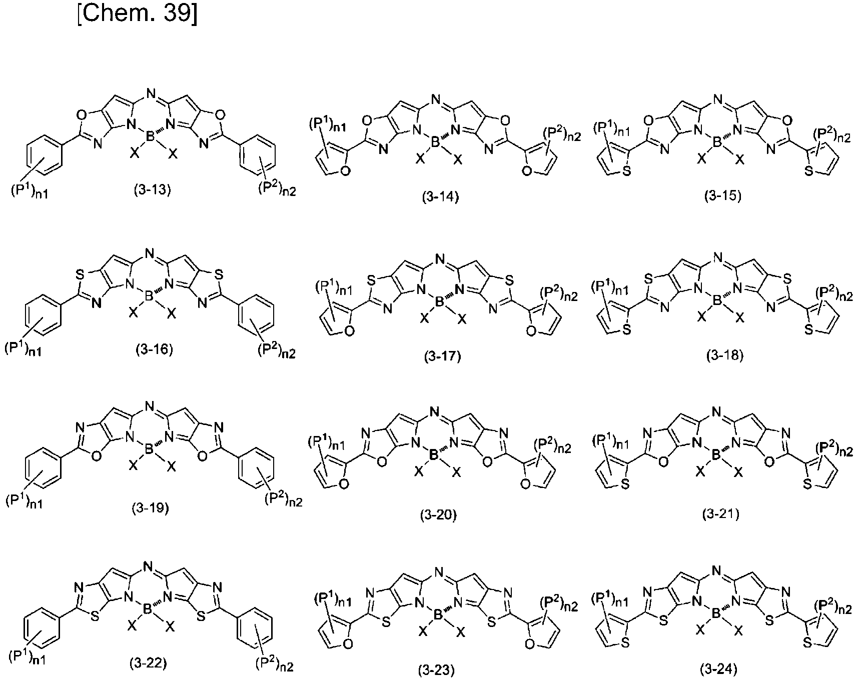

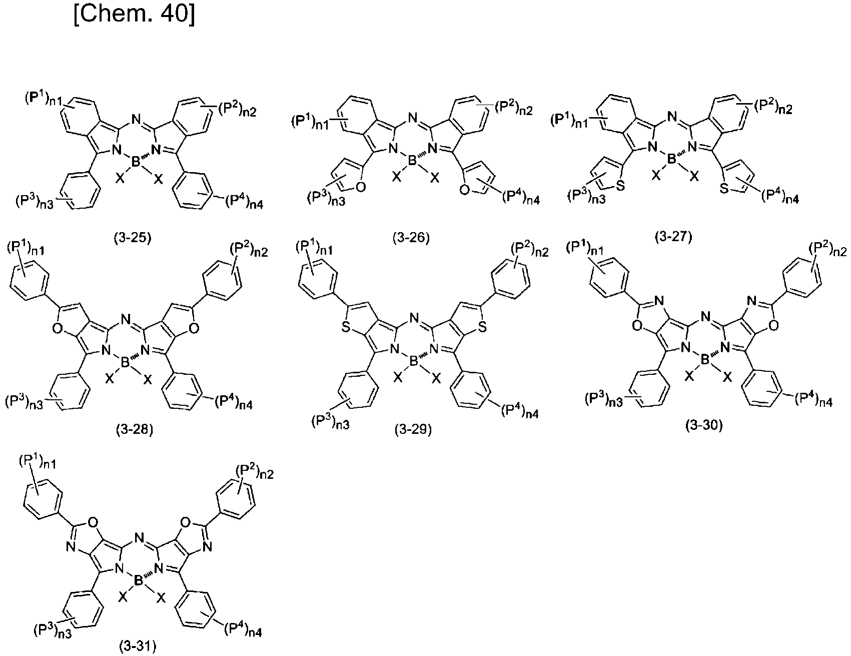

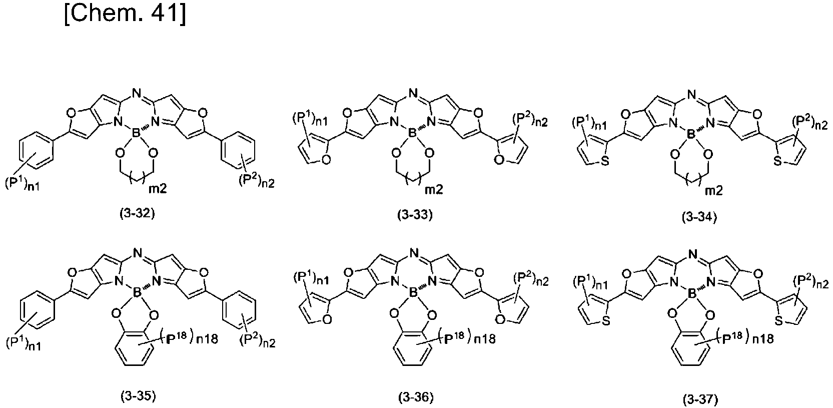

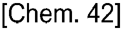

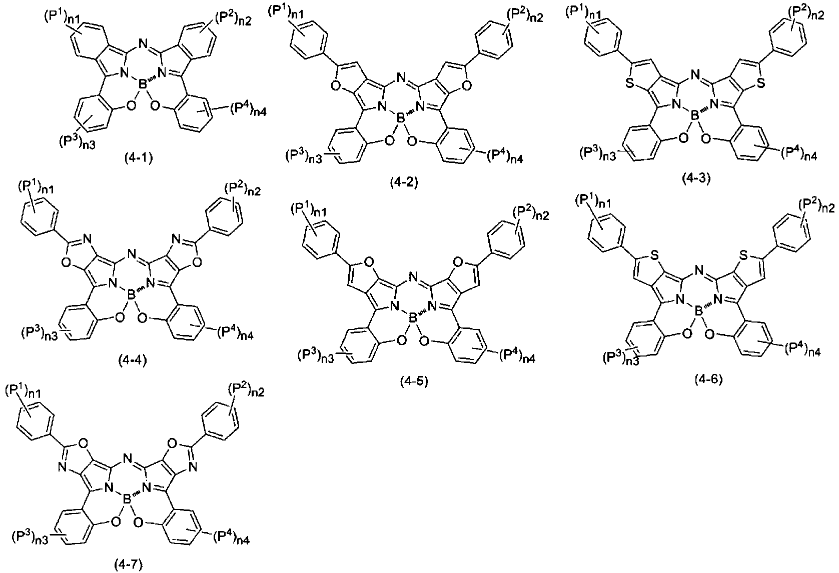

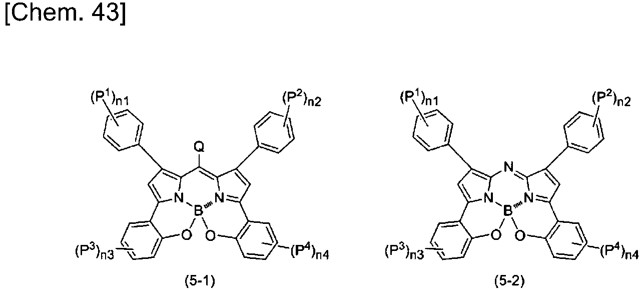

In General Formulas (1-1) to (1-37), (2-1) to (2-7), (3-1) to (3-37), (4-1) to (4-7), and (5-1) to (5-2), P¹ to P⁴ and P¹⁸ each independently represent a halogen atom, a C₁₋₂₀ alkyl group, a C₁₋₂₀ alkoxy group, an amino group, a monoalkylamino group, or a dialkylamino group. Examples of the C₁₋₂₀ alkyl group, the C₁₋₂₀ alkoxy group, the monoalkylamino group, or the dialkylamino group in P¹ to P⁴ include the same groups as those described for R^{g}, (p1) to (p3), and (q1) to (q3). P¹ to P⁴ and P¹⁸ are each preferably a C₁₋₂₀ alkyl group, a C₁₋₂₀ alkoxy group, an (unsubstituted) phenyl group, a p-methoxyphenyl group, a p-ethoxyphenyl group, a p-dimethylaminophenyl group, a dimethoxyphenyl group, a thienyl group, or a furanyl group, more preferably a C₁₋₂₀ alkyl group, a C₁₋₂₀ alkoxy group, a phenyl group, a p-methoxyphenyl group, a p-ethoxyphenyl group, a dimethoxyphenyl group, a thienyl group, or a furanyl group from the viewpoint of safety for living bodies, and these substituents may further have a substituent. However, because a substituent other than these substituents can improve safety by further introducing an appropriate substituent, the substituent is not limited to these substituents.

In General Formulas (1-1) to (1-37), (2-1) to (2-7), (3-1) to (3-37), (4-1) to (4-7)), and (5-1) to (5-2), n1 to n4 and n18 each independently represent an integer from 0 to 3. When a plurality of P¹ are present in one molecule (that is, when n1 is 2 or 3), all of the plurality of P¹ may be the same type of functional groups or different types of functional groups. The same applies to P² to P⁴ and P¹⁸.

In General Formulas (1-1) to (1-37), (2-1) to (2-7), and (5-1), Q represents a trifluoromethyl group, a cyano group, a nitro group, or a phenyl group optionally having a substituent, and is preferably a trifluoromethyl group or a phenyl group optionally having a substituent, and is more preferably a trifluoromethyl group or an unsubstituted phenyl group. Examples of the substituent which the phenyl group may have include a halogen atom, a C₁₋₂₀ alkyl group, a C₁₋₂₀ alkoxy group, an amino group, a monoalkylamino group, and a dialkylamino group.

In General Formulas (1-1) to (1-31) and (3-1) to (3-31), X is the same as in General Formula (I₁-1-1) or the like. As the compound represented by General Formula (1-1) or the like, a compound in which X is a halogen atom is preferable, and a compound in which X is a fluorine atom is particularly preferable.

In General Formulas (1-32) to (1-34) and (3-32) to (3-34), m2 is 0 or 1. In the compound represented by General Formula (1-32) or the like, m2 is preferably 1.

The compounds represented by General Formulas (1-1) to (1-37), (2-1) to (2-7), and (5-1) are each preferably a compound in which P¹ to P⁴ and P¹⁸ are each independently a C₁₋₂₀ alkyl group, a C₁₋₂₀ alkoxy group, an (unsubstituted) phenyl group, a p-methoxyphenyl group, a p-ethoxyphenyl group, a p-dimethylaminophenyl group, a dimethoxyphenyl group, a thienyl group, or a furanyl group, n1 to n4 and n18 are each independently from 0 to 2, and Q is a trifluoromethyl group or a phenyl group. Similarly, the compounds represented by General Formulas (3-1) to (3-37), (4-1) to (4-7), and (5-2) are each preferably a compound in which P¹ to P⁴ and P¹⁸ are each independently a C₁₋₂₀ alkyl group, a C₁₋₂₀ alkoxy group, a (unsubstituted) phenyl group, a p-methoxyphenyl group, a p-ethoxyphenyl group, a p-dimethylaminophenyl group, a dimethoxyphenyl group, a thienyl group, or a furanyl group, and n1 to n4 and n18 are each independently from 0 to 2.

As the near-infrared fluorescent dye according to the present invention, a compound represented by any of General Formulas (I₃-1) to (I₃-6) set forth below or a compound represented by any of General Formulas (I₄-1) to (I₄-6) set forth below is also preferable because the maximum fluorescence wavelength is further lengthened.

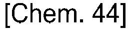

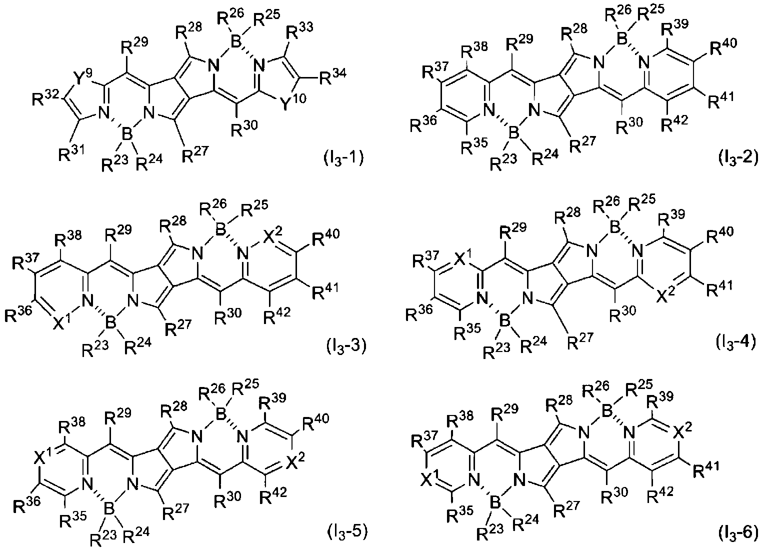

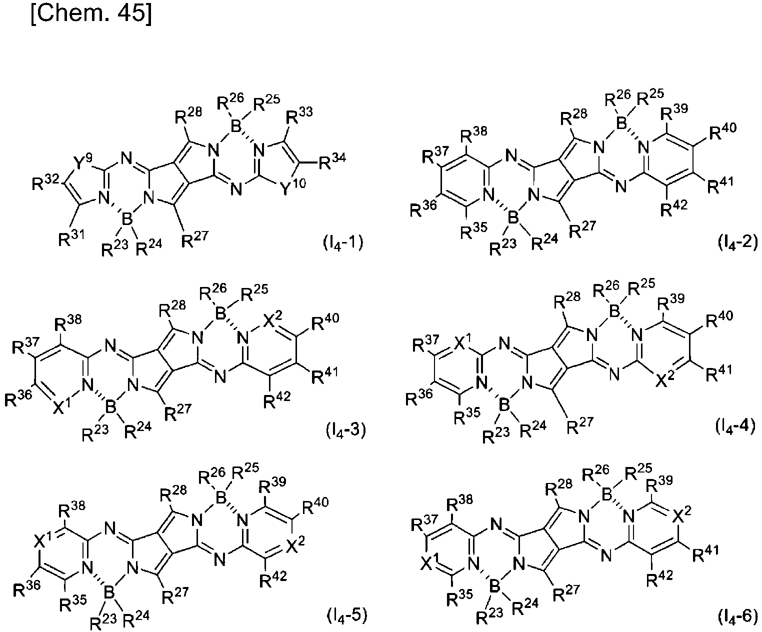

In General Formulas (I₃-1) to (I₃-6) and (I₄-1) to (I₄-6), R²³, R²⁴, R²⁵, and R²⁶ each independently represent a halogen atom, a C₁₋₂₀ alkyl group, a C₁₋₂₀ alkoxy group, an aryl group, or a heteroaryl group. Examples of the halogen atom, C₁₋₂₀ alkyl group, C₁₋₂₀ alkoxy group, aryl group, and heteroaryl group represented by R²³, R²⁴, R²⁵, or R²⁶ include those similar to R^{l}, R^{m}, Rⁿ, or R^{o} in General Formula (I₃). As the compound represented by any of General Formulas (I₃-1) to (I₃-6) or the compound represented by any of General Formulas (I₄-1) to (I₄-6), an aryl group in which R²³, R²⁴, R²⁵, and R²⁶ are a halogen atom, an unsubstituted aryl group, or an aryl group having a substituent is preferable because of high thermal stability of the compound, specifically, a fluorine atom, a chlorine atom, a bromine atom, an unsubstituted phenyl group, or a phenyl group substituted with a C₁₋₂₀ alkyl group or a C₁₋₂₀ alkoxy group is preferable, a fluorine atom, a chlorine atom, an unsubstituted phenyl group, or a phenyl group substituted with a C₁₋₁₀ alkyl group or a C₁₋₁₀ alkoxy group is more preferable, and a fluorine atom or an unsubstituted phenyl group is particularly preferable because a compound having both high luminous efficiency and thermal stability is obtained.

In General Formulas (I₃-1) to (I₃-6) and (I₄-1) to (I₄-6), R²⁷ and R²⁸ each independently represent a hydrogen atom, a halogen atom, a C₁₋₂₀ alkyl group, a C₁₋₂₀ alkoxy group, an aryl group, or a heteroaryl group. Examples of the halogen atom, C₁₋₂₀ alkyl group, C₁₋₂₀ alkoxy group, aryl group, and heteroaryl group represented by R²⁷ or R²⁸ include those similar to R^{p} or R^{q} of General Formula (I₃). As the compound represented by any of General Formulas (I₃-1) to (I₃-6) or the compound represented by any of General Formulas (I₄-1) to (I₄-6), a compound in which R²⁷ and R²⁸ are a hydrogen atom or an aryl group is preferable, a compound in which they are a hydrogen atom, an unsubstituted phenyl group, or a phenyl group substituted with a C₁₋₂₀ alkyl group or a C₁₋₂₀ alkoxy group is preferable because a compound with high luminous efficiency is obtained, a compound in which they are a hydrogen atom, an unsubstituted phenyl group, or a phenyl group substituted with a linear or branched C₁₋₂₀ alkoxy group is more preferable, and an unsubstituted phenyl group, or a phenyl group substituted with a linear or branched C₁₋₁₀ alkoxy group is particularly preferably because a compound with high luminous efficiency and excellent compatibility with a resin is obtained.

In General Formulas (I₃-1) to (I₃-6), R²⁹ and R³⁰ each independently represent a hydrogen atom or an electron-withdrawing group. Examples of the electron-withdrawing group represented by R²⁹ or R³⁰ include the same groups as R^{r} or R^{s} of General Formula (I₃). As the compound represented by any of General Formulas (I₃-1) to (I₃-6), a compound in which R²⁹ and R³⁰ are a fluoroalkyl group, a nitro group, a cyano group, or an aryl group capable of functioning as a strong electron-withdrawing group is preferable because a compound in which the fluorescence wavelength is lengthened or a compound having high luminous efficiency is obtained, a compound in which the groups are a trifluoromethyl group, a nitro group, a cyano group, or a phenyl group optionally having a substituent is more preferable, and a compound in which the groups are a trifluoromethyl group or a cyano group is more preferable because a compound having high luminous efficiency and excellent compatibility with a resin is obtained.

In General Formulas (I₃-1) and (I₄-1), Y⁹ and Y¹⁰ each independently represent a sulfur atom, an oxygen atom, a nitrogen atom, or a phosphorus atom. As the compound represented by General Formula (I₃-1) or General Formula (I₄-1), a compound in which Y⁹ and Y¹⁰ are each independently a sulfur atom, an oxygen atom, or a nitrogen atom is preferable because a compound having high luminous efficiency can be obtained, a compound in which the groups are each independently a sulfur atom or an oxygen atom is more preferable, and a compound in which the groups are each a sulfur atom or an oxygen atom is still more preferable because a compound having high luminous efficiency and thermal stability can be obtained.

In General Formulas (I₃-3) to (I₃-6) and (I₄-3) to (I₄-6), X¹ and X² each independently represent a nitrogen atom or a phosphorus atom. As the compounds represented by General Formulas (I₃-3) to (I₃-6) or General Formulas (I₄-3) to (I₄-6), compounds in which X¹ and X² are both a nitrogen atom or a phosphorus atom are preferable because a compound having high luminous efficiency can be obtained, and compounds in which X¹ and X² are both a nitrogen atom are more preferable because a compound having high luminous efficiency and thermal stability can be obtained.

In General Formula (I₃-1) and General Formula (I₄-1), R³¹ and R³² satisfy (p4) or (p5) set forth below:
(p4) R³¹ and R³² each independently represent a hydrogen atom, a halogen atom, a C₁₋₂₀ alkyl group, a C₁₋₂₀ alkoxy group, an aryl group, or a heteroaryl group;
(p5) R³¹ and R³² together form an aromatic five-membered ring optionally having a substituent or an aromatic six-membered ring optionally having a substituent.

In General Formula (I₃-1) and General Formula (I₄-1), R³³ and R³⁴ satisfy (q4) or (q5) set forth below:
(q4) R³³ and R³⁴ each independently represent a hydrogen atom, a halogen atom, a C₁₋₂₀ alkyl group, a C₁₋₂₀ alkoxy group, an aryl group, or a heteroaryl group; or
(q5) R³³ and R³⁴ together form an aromatic five-membered ring optionally having a substituent or an aromatic six-membered ring optionally having a substituent.

In General Formulas (I₃-2) to (I₃-6) and General Formulas (I₄-2) to (I₄-6), R³⁵, R³⁶, R³⁷, and R³⁸ satisfy any of (p6) to (p9) set forth below:
(p6) R³⁵, R³⁶, R³⁷, and R³⁸ each independently represent a hydrogen atom, a halogen atom, a C₁₋₂₀ alkyl group, a C₁₋₂₀ alkoxy group, an aryl group, or a heteroaryl group;
(p7) R³⁵ and R³⁶ together form an aromatic five-membered ring optionally having a substituent or an aromatic six-membered ring optionally having a substituent, and R³⁷ and R³⁸ each independently represent a hydrogen atom, a halogen atom, a C₁₋₂₀ alkyl group, a C₁₋₂₀ alkoxy group, an aryl group, or a heteroaryl group;
(p8) R³⁶ and R³⁷ together form an aromatic five-membered ring optionally having a substituent or an aromatic six-membered ring optionally having a substituent, and R³⁵ and R³⁸ each independently represent a hydrogen atom, a halogen atom, a C₁₋₂₀ alkyl group, a C₁₋₂₀ alkoxy group, an aryl group, or a heteroaryl group;
(p9) R³⁷ and R³⁸ together form an aromatic five-membered ring optionally having a substituent or an aromatic six-membered ring optionally having a substituent, and R³⁵ and R³⁶ each independently represent a hydrogen atom, a halogen atom, a C₁₋₂₀ alkyl group, a C₁₋₂₀ alkoxy group, an aryl group, or a heteroaryl group.

In General Formulas (I₃-2) to (I₃-6) and General Formulas (I₄-2) to (I₄-6), R³⁹, R⁴⁰, R⁴¹, and R⁴² satisfy any of (q6) to (q9) set forth below:
(q6) R³⁹, R⁴⁰, R⁴¹, and R⁴² each independently represent a hydrogen atom, a halogen atom, a C₁₋₂₀ alkyl group, a C₁₋₂₀ alkoxy group, an aryl group, or a heteroaryl group;
(q7) R³⁹ and R⁴⁰ together form an aromatic five-membered ring optionally having a substituent or an aromatic six-membered ring optionally having a substituent, and R⁴¹ and R⁴² each independently represent a hydrogen atom, a halogen atom, a C₁₋₂₀ alkyl group, a C₁₋₂₀ alkoxy group, an aryl group, or a heteroaryl group;
(q8) R⁴⁰ and R⁴¹ together form an aromatic five-membered ring optionally having a substituent or an aromatic six-membered ring optionally having a substituent, and R³⁹ and R⁴² each independently represent a hydrogen atom, a halogen atom, a C₁₋₂₀ alkyl group, a C₁₋₂₀ alkoxy group, an aryl group, or a heteroaryl group.
(q9) R⁴¹ and R⁴² together form an aromatic five-membered ring optionally having a substituent or an aromatic six-membered ring optionally having a substituent, and R³⁹ and R⁴⁰ each independently represent a hydrogen atom, a halogen atom, a C₁₋₂₀ alkyl group, a C₁₋₂₀ alkoxy group, an aryl group, or a heteroaryl group.

As the halogen atom, C₁₋₂₀ alkyl group, C₁₋₂₀ alkoxy group, aryl group, and heteroaryl group in (p4), (p6) to (p9), (q4), and (q6) to (q9), those exemplified as "any group that does not inhibit fluorescence of the compound" in R^{a} and R^{b} can be used.

In (p5), (p7) to (p9), (q5), and (q7) to (q9), as the aromatic five-membered ring or the aromatic six-membered ring formed by R³¹ and R³² together, the aromatic five-membered ring or the aromatic six-membered ring formed by R³³ and R³⁴ together, the aromatic five-membered ring or the aromatic six-membered ring formed by R³⁵ and R³⁶ together, the aromatic five-membered ring or the aromatic six-membered ring formed by R³⁶ and R³⁷ together, the aromatic five-membered ring or the aromatic six-membered ring formed by R³⁷ and R³⁸ together, the aromatic five-membered ring or the aromatic six-membered ring formed by R³⁹ and R⁴⁰ together, the aromatic five-membered ring or the aromatic six-membered ring formed by R⁴⁰ and R⁴¹ together, and the aromatic five-membered ring or the aromatic six-membered ring formed by R⁴¹ and R⁴² together, those represented by any of General Formulas (C-1) to (C-9) are preferable, and one represented by General Formula (C-9) is more preferable because a compound having high thermal stability can be obtained.

The compound represented by (I₃-1) is preferably a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; R²⁷ and R²⁸ are both a hydrogen atom, an unsubstituted phenyl group, or a phenyl group substituted with a C₁₋₂₀ alkyl group or a C₁₋₂₀ alkoxy group; R²⁹ and R³⁰ are both a trifluoromethyl group, a nitro group, a cyano group, or a phenyl group; Y⁹ and Y¹⁰ are both a sulfur atom or an oxygen atom; R³¹ and R³² are each independently a hydrogen atom or a C₁₋₂₀ alkyl group, or R³¹ and R³² together form a phenyl group optionally having a substituent; and R³³ and R³⁴ are independently a hydrogen atom or a C₁₋₂₀ alkyl group, or R³³ and R³⁴ together form a phenyl group optionally having a substituent, more preferably a compound in which all of R²³, R²⁴, R²⁵, and R²⁶ are a halogen atom or an unsubstituted phenyl group; R²⁷ and R²⁸ are both an unsubstituted phenyl group or a phenyl group substituted with a linear or branched C₁₋₂₀ alkoxy group; R²⁹ and R³⁰ are both a trifluoromethyl group, a nitro group, or a cyano group; Y⁹ and Y¹⁰ are both a sulfur atom or an oxygen atom; R³¹ and R³² are each independently a hydrogen atom or a C₁₋₂₀ alkyl group, or R³¹ and R³² together form an unsubstituted phenyl group or a phenyl group substituted with a C₁₋₁₀ alkyl group; and R³³ and R³⁴ are each independently a hydrogen atom or a C₁₋₂₀ alkyl group, or R³³ and R³⁴ together form an unsubstituted phenyl group or a phenyl group substituted with a C₁₋₁₀ alkyl group, because the compound has high luminous efficiency and excellent compatibility with a resin.

The compound represented by (I₃-2) is a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; both R²⁹ and R³⁰ are a trifluoromethyl group, a nitro group, a cyano group, or a phenyl group; R³⁵, R³⁶, R³⁷, and R³⁸ each independently form a hydrogen atom or a C₁₋₂₀ alkyl group, R³⁵ and R³⁶ each independently form a phenyl group optionally having a substituent, R³⁷ and R³⁸ each independently form a hydrogen atom or a C₁₋₂₀ alkyl group, R³⁶ and R³⁷ each independently form a phenyl group optionally having a substituent, R³⁵ and R³⁸ each independently form a hydrogen atom or a C₁₋₂₀ alkyl group, or R³⁷ and R³⁸ each independently form a phenyl group optionally having a substituent, and R³⁵ and R³⁶ each independently form a hydrogen atom or a C₁₋₂₀ alkyl group; R³⁹, R⁴⁰, R⁴¹, and R⁴² are independently a hydrogen atom or a C₁₋₂₀ alkyl group, R³⁹ and R⁴⁰ both form a phenyl group optionally having a substituent, R⁴¹ and R⁴² are independently a hydrogen atom or a C₁₋₂₀ alkyl group, R⁴⁰ and R⁴¹ both form a phenyl group optionally having a substituent, R³⁹ and R⁴² are independently a hydrogen atom or a C₁₋₂₀ alkyl group, or R⁴¹ and R⁴² both form a phenyl group optionally having a substituent, and R³⁹ and R⁴⁰ are independently a hydrogen atom or a C₁₋₂₀ alkyl group is preferable, and a compound in which all of R²³, R²⁴, R²⁵, and R²⁶ are a halogen atom or an unsubstituted phenyl group; both R²⁷ and R²⁸ are an unsubstituted phenyl group or a phenyl group substituted with a linear or branched C₁₋₂₀ alkoxy group, and; both R²⁹ and R³⁰ are a trifluoromethyl group, a nitro group, or a cyano group; R³⁵, R³⁶, R³⁷, and R³⁸ each independently form a hydrogen atom or a C₁₋₂₀ alkyl group, R³⁵ and R³⁶ each independently form an unsubstituted phenyl group or a phenyl group substituted with a C₁₋₁₀ alkyl group, R³⁷ and R³⁸ each independently form a hydrogen atom or a C₁₋₂₀ alkyl group, R³⁶ and R³⁷ each independently form an unsubstituted phenyl group or a phenyl group substituted with a C₁₋₁₀ alkyl group, R³⁵ and R³⁸ each independently form a hydrogen atom or a C₁₋₂₀ alkyl group, or R³⁷ and R³⁸ each independently form a phenyl group substituted with an unsubstituted phenyl group or a C₁₋₁₀ alkyl group, and R³⁵ and R³⁶ each independently form a hydrogen atom or a C₁₋₂₀ alkyl group; R³⁹, R⁴⁰, R⁴¹, and R⁴² are independently a hydrogen atom or a C₁₋₂₀ alkyl group, R³⁹ and R⁴⁰ both form an unsubstituted phenyl group or a phenyl group substituted with a C₁₋₁₀ alkyl group, R⁴¹ and R⁴² are independently a hydrogen atom or a C₁₋₂₀ alkyl group, R⁴⁰ and R⁴¹ both form an unsubstituted phenyl group or a phenyl group substituted with a C₁₋₁₀ alkyl group, R³⁹ and R⁴² are independently a hydrogen atom or a C₁₋₂₀ alkyl group, or R⁴¹ and R⁴² both form an unsubstituted phenyl group or a phenyl group substituted with a C₁₋₁₀ alkyl group, and R³⁹ and R⁴⁰ are independently a hydrogen atom or a C₁₋₂₀ alkyl group is more preferable because of high luminous efficiency and excellent compatibility with resins.

The compound represented by (I₃-3) is preferably a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; both R²⁹ and R³⁰ are a trifluoromethyl group, a nitro group, a cyano group, or a phenyl group; X¹ and X² are both a nitrogen atom; R³⁶, R³⁷, and R³⁸ are independently of one another a hydrogen atom or a C₁₋₂₀ alkyl group, R³⁶ and R³⁷ both form a phenyl group optionally having a substituent, R³⁸ is a hydrogen atom or a C₁₋₂₀ alkyl group, or R³⁷ and R³⁸ both form a phenyl group optionally having a substituent, and R³⁶ is a hydrogen atom or a C₁₋₂₀ alkyl group; R⁴⁰, R⁴¹, and R⁴² are independently a hydrogen atom or a C₁₋₂₀ alkyl group, R⁴⁰ and R⁴¹ both form a phenyl group optionally having a substituent, R⁴² is a hydrogen atom or a C₁₋₂₀ alkyl group, or R⁴¹ and R⁴² both form a phenyl group optionally having a substituent, R⁴⁰ is a hydrogen atom or a C₁₋₂₀ alkyl group, and a compound in which R²³, R²⁴, R²⁵, and R²⁶ are both a halogen atom or an unsubstituted phenyl group; both R²⁷ and R²⁸ are an unsubstituted phenyl group or a phenyl group substituted with a linear or branched C₁₋₂₀ alkoxy group; both R²⁹ and R³⁰ are a trifluoromethyl group, a nitro group, or a cyano group; X¹ and X² are both a nitrogen atom; R³⁶, R³⁷, and R³⁸ are each independently a hydrogen atom or a C₁₋₂₀ alkyl group, R³⁶ and R³⁷ both form an unsubstituted phenyl group or a phenyl group substituted with a C₁₋₁₀ alkyl group, R³⁸ is a hydrogen atom or a C₁₋₂₀ alkyl group, or R³⁷ and R³⁸ both form an unsubstituted phenyl group or a phenyl group substituted with a C₁₋₁₀ alkyl group, and R³⁶ is a hydrogen atom or a C₁₋₂₀ alkyl group; R⁴⁰, R⁴¹, and R⁴² are each independently a hydrogen atom or a C₁₋₂₀ alkyl group, R⁴⁰ and R⁴¹ both form an unsubstituted phenyl group or a phenyl group substituted with a C₁₋₁₀ alkyl group, R⁴² is a hydrogen atom or a C₁₋₂₀ alkyl group, or R⁴¹ and R⁴² both form an unsubstituted phenyl group or a phenyl group substituted with a C₁₋₁₀ alkyl group, and R⁴⁰ is a hydrogen atom or a C₁₋₂₀ alkyl group is more preferable because of high luminous efficiency and excellent compatibility with resins.

The compound represented by (I₃-4) is preferably a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; both R²⁹ and R³⁰ are a trifluoromethyl group, a nitro group, a cyano group, or a phenyl group; X¹ and X² are both a nitrogen atom; R³⁵, R³⁶, and R³⁷ are each independently a hydrogen atom or a C₁₋₂₀ alkyl group, R³⁵ and R³⁶ both form a phenyl group optionally having a substituent, R³⁷ is a hydrogen atom or a C₁₋₂₀ alkyl group, or R³⁶ and R³⁷ both form a phenyl group optionally having a substituent, R³⁵ is a hydrogen atom or a C₁₋₂₀ alkyl group; R³⁹, R⁴⁰, and R⁴¹ are independently a hydrogen atom or a C₁₋₂₀ alkyl group, R³⁹ and R⁴⁰ both form a phenyl group optionally having a substituent, R⁴¹ is a hydrogen atom or a C₁₋₂₀ alkyl group, or R⁴⁰ and R⁴¹ both form a phenyl group optionally having a substituent, R³⁹ is a hydrogen atom or a C₁₋₂₀ alkyl group, and a compound in which all of R²³, R²⁴, R²⁵, and R²⁶ are a halogen atom or an unsubstituted phenyl group; both R²⁷ and R²⁸ are an unsubstituted phenyl group or a phenyl group substituted with a linear or branched C₁₋₂₀ alkoxy group; both R²⁹ and R³⁰ are a trifluoromethyl group, a nitro group, or a cyano group; X¹ and X² are both a nitrogen atom; R³⁵, R³⁶, and R³⁷ are each independently a hydrogen atom or a C₁₋₂₀ alkyl group, R³⁵ and R³⁶ both form an unsubstituted phenyl group or a phenyl group substituted by a C₁₋₁₀ alkyl group, R³⁷ is a hydrogen atom or a C₁₋₂₀ alkyl group, or R³⁶ and R³⁷ both form an unsubstituted phenyl group or a phenyl group substituted with a C₁₋₁₀ alkyl group, and R³⁵ is a hydrogen atom or a C₁₋₂₀ alkyl group; R³⁹, R⁴⁰, and R⁴¹ are independently a hydrogen atom or a C₁₋₂₀ alkyl group, R³⁹ and R⁴⁰ both form an unsubstituted phenyl group or a phenyl group substituted with a C₁₋₁₀ alkyl group, R⁴¹ is a hydrogen atom or a C₁₋₂₀ alkyl group, or R⁴⁰ and R⁴¹ both form an unsubstituted phenyl group or a phenyl group substituted with a C₁₋₁₀ alkyl group, and R³⁹ is a hydrogen atom or a C₁₋₂₀ alkyl group is more preferable because of high luminous efficiency and excellent compatibility with resins.

The compound represented by (I₃-5) is preferably a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; both R²⁹ and R³⁰ are a trifluoromethyl group, a nitro group, a cyano group, or a phenyl group; X¹ and X² are both a nitrogen atom; R³⁵, R³⁶, and R³⁸ are each independently a hydrogen atom or a C₁₋₂₀ alkyl group, or both R³⁵ and R³⁶ form a phenyl group optionally having a substituent, and R³⁸ is a hydrogen atom or a C₁₋₂₀ alkyl group; R³⁹, R⁴⁰, and R⁴² are each independently a hydrogen atom or a C₁₋₂₀ alkyl group, or both R³⁹ and R⁴⁰ form a phenyl group optionally having a substituent, and R⁴² is a hydrogen atom or a C₁₋₂₀ alkyl group, and a compound in which all of R²³, R²⁴, R²⁵, and R²⁶ are a halogen atom or an unsubstituted phenyl group; both R²⁷ and R²⁸ are an unsubstituted phenyl group or a phenyl group substituted with a linear or branched C₁₋₂₀ alkoxy group; both R²⁹ and R³⁰ are a trifluoromethyl group, a nitro group, or a cyano group; X¹ and X² are both a nitrogen atom, and; R³⁵, R³⁶, and R³⁸ are each independently a hydrogen atom or a C₁₋₂₀ alkyl group, or R³⁵ and R³⁶ both form an unsubstituted phenyl group or a phenyl group substituted with a C₁₋₁₀ alkyl group, and R³⁸ is a hydrogen atom or a C₁₋₂₀ alkyl group; R³⁹, R⁴⁰, and R⁴² are each independently a hydrogen atom or a C₁₋₂₀ alkyl group, or both R³⁹ and R⁴⁰ form an unsubstituted phenyl group or a phenyl group substituted with a C₁₋₁₀ alkyl group, and R⁴² is a hydrogen atom or a C₁₋₂₀ alkyl group is more preferable because of high luminous efficiency and excellent compatibility with resins.

The compound represented by (I₃-6) is preferably a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; both R²⁹ and R³⁰ are a trifluoromethyl group, a nitro group, a cyano group, or a phenyl group; X¹ and X² are both a nitrogen atom; R³⁵, R³⁷, and R³⁸ are each independently a hydrogen atom or a C₁₋₂₀ alkyl group, or both R³⁷ and R³⁸ form a phenyl group optionally having a substituent, and R³⁵ is a hydrogen atom or a C₁₋₂₀ alkyl group; R³⁹, R⁴¹, and R⁴² are each independently a hydrogen atom or a C₁₋₂₀ alkyl group, or both R⁴¹ and R⁴² form a phenyl group optionally having a substituent, and R³⁹ is a hydrogen atom or a C₁₋₂₀ alkyl group, and a compound in which all of R²³, R²⁴, R²⁵, and R²⁶ are a halogen atom or an unsubstituted phenyl group; both R²⁷ and R²⁸ are an unsubstituted phenyl group or a phenyl group substituted with a linear or branched C₁₋₂₀ alkoxy group; both R²⁹ and R³⁰ are a trifluoromethyl group, a nitro group, or a cyano group; X¹ and X² are both a nitrogen atom; R³⁵, R³⁷, and R³⁸ are each independently a hydrogen atom or a C₁₋₂₀ alkyl group, or R³⁷ and R³⁸ both form an unsubstituted phenyl group or a phenyl group substituted with a C₁₋₁₀ alkyl group, and R³⁵ is a hydrogen atom or a C₁₋₂₀ alkyl group; R³⁹, R⁴¹, and R⁴² are each independently a hydrogen atom or a C₁₋₂₀ alkyl group, or both R⁴¹ and R⁴² form an unsubstituted phenyl group or a phenyl group substituted with a C₁₋₁₀ alkyl group, and R³⁹ is a hydrogen atom or a C₁₋₂₀ alkyl group is more preferable because of high luminous efficiency and excellent compatibility with resins.

As the compound represented by (I₄-1), a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; Y⁹ and Y¹⁰ are both a sulfur atom or an oxygen atom; R³¹ and R³² are each independently a hydrogen atom or a C₁₋₂₀ alkyl group, or both R³¹ and R³² form a phenyl group optionally having a substituent; R³³ and R³⁴ are each independently a hydrogen atom or a C₁₋₂₀ alkyl group, or both R³³ and R³⁴ form a phenyl group optionally having a substituent is preferable, and a compound in which all of R²³, R²⁴, R²⁵, and R²⁶ are a halogen atom or an unsubstituted phenyl group; both R²⁷ and R²⁸ are an unsubstituted phenyl group or a phenyl group substituted with a linear or branched C₁₋₂₀ alkoxy group; Y⁹ and Y¹⁰ are both a sulfur atom or an oxygen atom; R³¹ and R³² are each independently a hydrogen atom or a C₁₋₂₀ alkyl group, or both R³¹ and R³² form an unsubstituted phenyl group or a phenyl group substituted with a C₁₋₁₀ alkyl group; R³³ and R³⁴ are each independently a hydrogen atom or a C₁₋₂₀ alkyl group, or both R³³ and R³⁴ form an unsubstituted phenyl group or a phenyl group substituted with a C₁₋₁₀ alkyl group is more preferable because of high luminous efficiency and excellent compatibility with resins.

As the compound represented by (I₄-2), a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; R³⁵, R³⁶, R³⁷, and R³⁸ each independently form a hydrogen atom or a C₁₋₂₀ alkyl group, R³⁵ and R³⁶ each independently form a phenyl group optionally having a substituent, R³⁷ and R³⁸ each independently form a hydrogen atom or a C₁-₂₀ alkyl group, R³⁶ and R³⁷ each independently form a phenyl group optionally having a substituent, R³⁵ and R³⁸ each independently form a hydrogen atom or a C₁₋₂₀ alkyl group, or R³⁷ and R³⁸ each independently form a phenyl group optionally having a substituent, and R³⁵ and R³⁶ each independently form a hydrogen atom or a C₁-₂₀ alkyl group; R³¹, R⁴⁰, R⁴¹, and R⁴² are independently a hydrogen atom or a C₁₋₂₀ alkyl group, R³⁹ and R⁴⁰ both form a phenyl group optionally having a substituent, R⁴¹ and R⁴² are independently a hydrogen atom or a C₁₋₂₀ alkyl group, R⁴⁰ and R⁴¹ both form a phenyl group optionally having a substituent, R³⁹ and R⁴² are independently a hydrogen atom or a C₁₋₂₀ alkyl group, or R⁴¹ and R⁴² both form a phenyl group optionally having a substituent, and R³⁹ and R⁴² are independently a hydrogen atom or a C₁-₂₀ alkyl group is preferable, and a compound in which all of R²³, R²⁴, R²⁵, and R²⁶ are a halogen atom or an unsubstituted phenyl group; both R²⁷ and R²⁸ are an unsubstituted phenyl group or a phenyl group substituted with a linear or branched C₁₋₂₀ alkoxy group; R³⁵, R³⁶, R³⁷, and R³⁸ each independently form a hydrogen atom or a C₁₋₂₀ alkyl group, R³⁵ and R³⁶ each independently form an unsubstituted phenyl group or a phenyl group substituted with a C₁₋₁₀ alkyl group, R³⁷ and R³⁸ each independently form a hydrogen atom or a C₁₋₂₀ alkyl group, R³⁶ and R³⁷ form an unsubstituted phenyl group or a phenyl group substituted with a C₁₋₁₀ alkyl group, R³⁵ and R³⁸ each independently form a hydrogen atom or a C₁₋₂₀ alkyl group, or R³⁷ and R³⁸ each independently form a phenyl group substituted with an unsubstituted phenyl group or a C₁₋₁₀ alkyl group, and R³⁵ and R³⁶ each independently form a hydrogen atom or a C₁₋₂₀ alkyl group; R³⁹, R⁴⁰, R⁴¹, and R⁴² are each independently a hydrogen atom or a C₁₋₂₀ alkyl group, R³⁹ and R⁴⁰ both form an unsubstituted phenyl group or a phenyl group substituted with a C₁₋₁₀ alkyl group, R⁴¹ and R⁴² are each independently a hydrogen atom or a C₁₋₂₀ alkyl group, R⁴⁰ and R⁴¹ both form an unsubstituted phenyl group or a phenyl group substituted with a C₁₋₁₀ alkyl group, R³⁹ and R⁴² are each independently a hydrogen atom or a C₁-₂₀ alkyl group, or R⁴¹ and R⁴² both form an unsubstituted phenyl group or a phenyl group substituted with a C₁₋₁₀ alkyl group, and R³⁹ and R⁴² are each independently a hydrogen atom or a C₁-₂₀ alkyl group is more preferable because of high luminous efficiency and excellent compatibility with resins.

The compound represented by (I₄-3) is preferably a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; X¹ and X² are both a nitrogen atom; R³⁶, R^{37,} and R³⁸ are each independently a hydrogen atom or a C₁₋₂₀ alkyl group, R³⁶ and R³⁷ both form a phenyl group optionally having a substituent, R³⁸ is a hydrogen atom or a C₁₋₂₀ alkyl group, or R³⁷ and R³⁸ both form a phenyl group optionally having a substituent, and R³⁶ is a hydrogen atom or a C₁₋₂₀ alkyl group; R⁴⁰, R⁴¹, and R⁴² are independently a hydrogen atom or a C₁₋₂₀ alkyl group, R⁴⁰ and R⁴¹ both form a phenyl group optionally having a substituent, R⁴² is a hydrogen atom or a C₁₋₂₀ alkyl group, or R⁴¹ and R⁴² both form a phenyl group optionally having a substituent, R⁴⁰ is a hydrogen atom or a C₁₋₂₀ alkyl group, and a compound in which all of R²³, R²⁴, R²⁵, and R²⁶ are a halogen atom or an unsubstituted phenyl group; both R²⁷ and R²⁸ are an unsubstituted phenyl group or a phenyl group substituted with a linear or branched C₁₋₂₀ alkoxy group; R³⁶, R^{37,} and R³⁸ are each independently a hydrogen atom or a C₁₋₂₀ alkyl group, R³⁶ and R³⁷ both form an unsubstituted phenyl group or a phenyl group substituted with a C₁₋₁₀ alkyl group, R³⁸ is a hydrogen atom or a C₁₋₂₀ alkyl group, or R³⁷ and R³⁸ both form an unsubstituted phenyl group or a phenyl group substituted with a C₁₋₁₀ alkyl group, and R³⁶ is a hydrogen atom or a C₁₋₂₀ alkyl group; R⁴⁰, R⁴¹, and R⁴² are each independently a hydrogen atom or a C₁₋₂₀ alkyl group, R⁴⁰ and R⁴¹ both form an unsubstituted phenyl group or a phenyl group substituted with a C₁₋₁₀ alkyl group, R⁴² is a hydrogen atom or a C₁₋₂₀ alkyl group, or R⁴¹ and R⁴² both form an unsubstituted phenyl group or a phenyl group substituted with a C₁₋₁₀ alkyl group, and R⁴⁰ is a hydrogen atom or a C₁-₂₀ alkyl group is more preferable because of high luminous efficiency and excellent compatibility with resins.

The compound represented by (I₄-4) is preferably a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; X¹ and X² are both a nitrogen atom; R³⁵, R³⁶, and R³⁷ are each independently a hydrogen atom or a C₁₋₂₀ alkyl group, R³⁵ and R³⁶ both form a phenyl group optionally having a substituent, R³⁷ is a hydrogen atom or a C₁₋₂₀ alkyl group, or R³⁶ and R³⁷ both form a phenyl group optionally having a substituent, and R³⁵ is a hydrogen atom or a C₁₋₂₀ alkyl group; R³⁹, R⁴⁰, and R⁴¹ are independently a hydrogen atom or a C₁₋₂₀ alkyl group, R³⁹ and R⁴⁰ both form a phenyl group optionally having a substituent, R⁴¹ is a hydrogen atom or a C₁₋₂₀ alkyl group, or R⁴⁰ and R⁴¹ both form a phenyl group optionally having a substituent, R³⁹ is a hydrogen atom or a C₁₋₂₀ alkyl group, and a compound in which all of R²³, R²⁴, R²⁵, and R²⁶ are a halogen atom or an unsubstituted phenyl group; both R²⁷ and R²⁸ are an unsubstituted phenyl group or a phenyl group substituted with a linear or branched C₁₋₂₀ alkoxy group; X¹ and X² are both a nitrogen atom, R³⁵, R³⁶, and R³⁷ are each independently a hydrogen atom or a C₁₋₂₀ alkyl group, R³⁵ and R³⁶ both form an unsubstituted phenyl group or a phenyl group substituted with a C₁₋₁₀ alkyl group, R³⁷ is a hydrogen atom or a C₁₋₂₀ alkyl group, or R³⁶ and R³⁷ both form an unsubstituted phenyl group or a phenyl group substituted with a C₁₋₁₀ alkyl group, R³⁵ is a hydrogen atom or a C₁₋₂₀ alkyl group; R³⁹ and R⁴⁰, and R⁴¹ are each independently a hydrogen atom or a C₁₋₂₀ alkyl group, R³⁹ and R⁴⁰ both form an unsubstituted phenyl group or a phenyl group substituted with a C₁₋₁₀ alkyl group, R⁴¹ is a hydrogen atom or a C₁₋₂₀ alkyl group, or R⁴⁰ and R⁴¹ form an unsubstituted phenyl group or a phenyl group substituted with a C₁₋₁₀ alkyl group, and R³⁹ is a hydrogen atom or a C₁₋₂₀ alkyl group is more preferable because of high luminous efficiency and excellent compatibility with resins.

The compound represented by (I₄-5)is preferably a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; X¹ and X² are both a nitrogen atom; R³⁵, R³⁶, and R³⁸ are each independently a hydrogen atom or a C₁₋₂₀ alkyl group, or both R³⁵ and R³⁶ form a phenyl group optionally having a substituent, and R³⁸ is a hydrogen atom or a C₁₋₂₀ alkyl group; R³⁹, R⁴⁰, and R⁴² are each independently a hydrogen atom or a C₁₋₂₀ alkyl group, or both R³⁹ and R⁴⁰ form a phenyl group optionally having a substituent, and R⁴² is a hydrogen atom or a C₁₋₂₀ alkyl group, and a compound in which all of R²³, R²⁴, R²⁵, and R²⁶ are a halogen atom or an unsubstituted phenyl group; both R²⁷ and R²⁸ are an unsubstituted phenyl group or a phenyl group substituted with a linear or branched C₁₋₂₀ alkoxy group; X¹ and X² are both a nitrogen atom; R³⁵, R³⁶, and R³⁸ are each independently a hydrogen atom or a C₁₋₂₀ alkyl group, or R³⁵ and R³⁶ both form an unsubstituted phenyl group or a phenyl group substituted with a C₁₋₁₀ alkyl group, and R³⁸ is a hydrogen atom or a C₁₋₂₀ alkyl group; R³⁹, R⁴⁰, and R⁴² are independently a hydrogen atom or a C₁₋₂₀ alkyl group, or both R³⁹ and R⁴⁰ form an unsubstituted phenyl group or a phenyl group substituted with a C₁₋₁₀ alkyl group, and R⁴² is a hydrogen atom or a C₁₋₂₀ alkyl group is more preferable because of high luminous efficiency and excellent compatibility with resins.

The compound represented by (I₄-6) is preferably a compound in which all of R²³, R²⁴, R²⁵, and R²⁶ are a halogen atom, an unsubstituted phenyl group, or a phenyl group substituted with a C₁₋₁₀ alkyl group or a C₁₋₁₀ alkoxy group; both R²⁷ and R²⁸ are a hydrogen atom, an unsubstituted phenyl group, or a phenyl group substituted with a C₁₋₂₀ alkyl group or a C₁₋₂₀ alkoxy group; X¹ and X² are both a nitrogen atom; R³⁵, R³⁷, and R³⁸ are each independently a hydrogen atom or a C₁₋₂₀ alkyl group, or both R³⁷ and R³⁸ form a phenyl group optionally having a substituent, and R³⁵ is a hydrogen atom or a C₁₋₂₀ alkyl group; R³⁹, R⁴¹, and R⁴² are each independently a hydrogen atom or a C₁₋₂₀ alkyl group, or both R⁴¹ and R⁴² form a phenyl group optionally having a substituent, and R³⁹ is a hydrogen atom or a C₁-₂₀ alkyl group, and a compound in which all of R²³, R²⁴, R²⁵, and R²⁶ are a halogen atom or an unsubstituted phenyl group; both R²⁷ and R²⁸ are an unsubstituted phenyl group or a phenyl group substituted with a linear or branched C₁₋₂₀ alkoxy group; X¹ and X² are both a nitrogen atom; R³⁵, R³⁷, and R³⁸ are each independently a hydrogen atom or a C₁₋₂₀ alkyl group, or R³⁷ and R³⁸ both form an unsubstituted phenyl group or a phenyl group substituted with a C₁₋₁₀ alkyl group, and R³⁵ is a hydrogen atom or a C₁₋₂₀ alkyl group; R³⁹, R⁴¹, and R⁴² are each independently a hydrogen atom or a C₁₋₂₀ alkyl group, or both R⁴¹ and R⁴² form an unsubstituted phenyl group or a phenyl group substituted with a C₁₋₁₀ alkyl group, and R³⁹ is a hydrogen atom or a C₁₋₂₀ alkyl group is more preferable because of high luminous efficiency and excellent compatibility with resins.

The compound represented by any of (I₃-1) to (I₃-6) is preferably a compound represented by any of General Formulas (I₃-7) to (I₃-9) set forth below, and the compound represented by any of (I₄-1) to (I₄-6) is preferably a compound represented by any of General Formulas (I₄-7) to (I₄-9) set forth below.

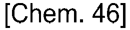

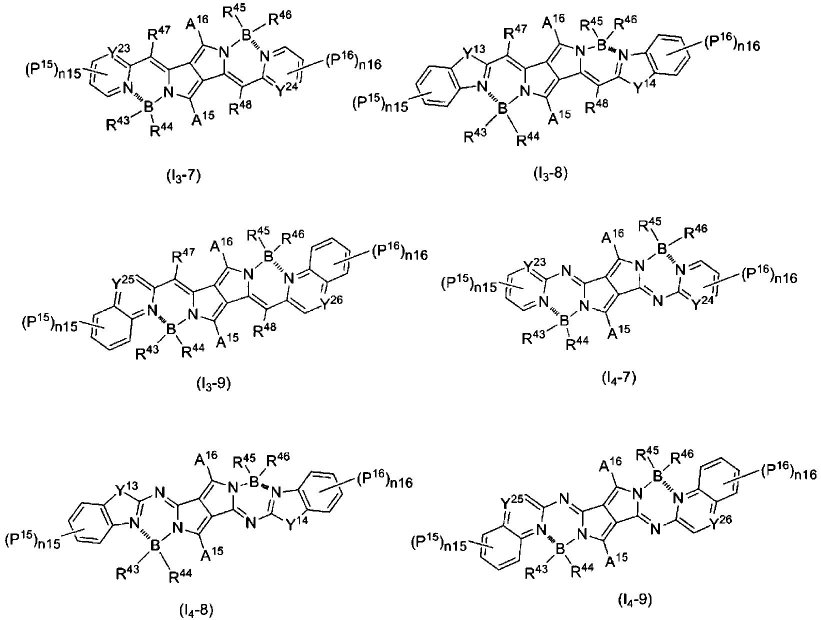

In General Formulas (I₃-7) and (I₄-7), Y²³ and Y²⁴ each independently represent a carbon atom or a nitrogen atom. In General Formula (I₃-7) and the like, Y²³ and Y²⁴ are preferably the same type of atoms.

In General Formulas (I₃-8) and (I₄-8), Y¹³ and Y¹⁴ each independently represent an oxygen atom or a sulfur atom. In General Formula (I₃-8) and the like, Y¹³ and Y¹⁴ are preferably the same type of atoms.

In General Formulas (I₃-9) and (I₄-9), Y²⁵ and Y²⁶ each independently represent a carbon atom or a nitrogen atom. In General Formula (I₃-9) and the like, Y²⁵ and Y²⁰ are preferably the same type of atoms.

In General Formulas (I₃-7) to (I₃-9), R⁴⁷ and R⁴⁰ each independently represent a hydrogen atom or an electron-withdrawing group, and are preferably a trifluoromethyl group, a cyano group, a nitro group, a sulfonyl group, or a phenyl group, and particularly preferably a trifluoromethyl group or a cyano group because fluorescence intensity is increased. In General Formula (I₃-7) and the like, R⁴⁷ and R⁴⁶ are preferably the same type of functional groups.

In General Formulas (I₃-7) to (I₃-9) and (I₄-7) to (I₄-9), R⁴³, R⁴⁴, R⁴⁵, and R⁴⁶ represent a halogen atom or an aryl group optionally having a substituent. As the aryl group, those exemplified as "any group that does not inhibit fluorescence of the compound" in R^{a} and R^{b} can be used. The substituent that the aryl group may have may be "any group that does not inhibit fluorescence of the compound", and examples thereof include a C₁₋₆ alkyl group, a C₁₋₆ alkoxy group, an aryl group, and a heteroaryl group. In General Formulas (I₃-7) to (I₃-9) and (I₄-7) to (I₄-9), R⁴³ to R⁴⁶ may be different groups from each other, but are all preferably the same type of groups. As the compound represented by any of General Formulas (I₃-7) to (I₃-9) and (I₄-7) to (I₄-9), compounds in which R⁴³ to R⁴⁶ are all the same type of halogen atoms or are all phenyl groups optionally having the same type of substituents are preferable, compounds in which R⁴³ to R⁴⁶ are all fluorine atoms or unsubstituted phenyl groups are more preferable, and compounds in which R⁴³ to R⁴⁶ are all fluorine atoms are particularly preferable.

In General Formulas (I₃-7) to (I₃-9) and (I₄-7) to (I₄-9), P¹⁵ to P¹⁶ each independently represent a halogen atom, a C₁₋₂₀ alkyl group, a C₁-₂₀ alkoxy group, an amino group, a monoalkylamino group, or a dialkylamino group. Examples of the C₁-₂₀ alkyl group, the C₁-₂₀ alkoxy group, the monoalkylamino group, or the dialkylamino group in P¹⁵ to P¹⁶ include the same groups as those described for R^{g}, (p1) to (p3), and (q1) to (q3). P¹⁵ to P¹⁶ are each preferably a C₁-₂₀ alkyl group, a C₁₋₂₀ alkoxy group, an (unsubstituted) phenyl group, a p-methoxyphenyl group, a p-ethoxyphenyl group, a p-dimethylaminophenyl group, a dimethoxyphenyl group, a thienyl group, or a furanyl group, more preferably a C₁₋₂₀ alkyl group, a C₁₋₂₀ alkoxy group, a phenyl group, a p-methoxyphenyl group, a p-ethoxyphenyl group, a dimethoxyphenyl group, a thienyl group, or a furanyl group from the viewpoint of safety for living bodies, and these substituents may further have a substituent. However, because a substituent other than these substituents can improve safety by further introducing an appropriate substituent, the substituent is not limited to these substituents.

In General Formulas (I₃-7) to (I₃-9) and (I₄-7) to (I₄-9), n15 to n16 each independently represent an integer from 0 to 3. When a plurality of P¹⁵ are present in one molecule (that is, when n15 is 2 or 3), all of the plurality of P¹⁵ may be the same type of functional groups or different types of functional groups. The same applies to P¹⁶,

In General Formulas (I₃-7) to (I₃-9) and (I₄-7) to (I₄-9), A¹⁵ to A¹⁶ each independently represent a phenyl group optionally having 1 to 3 substituents selected from the group consisting of a hydrogen atom, a halogen atom, a C₁₋₂₀ alkyl group, a C₁₋₂₀ alkoxy group, an amino group, a monoalkylamino group, and a dialkylamino group. Examples of the C₁₋₂₀ alkyl group, the C₁₋₂₀ alkoxy group, the monoalkylamino group, or the dialkylamino group in the substituent which the phenyl group may have include the same groups as those described for R^{g}, (p1) to (p3), and (q1) to (q3). A¹⁵ to A¹⁶ are each preferably a phenyl group having an unsubstituted phenyl group or one or two C₁₋₂₀ alkoxy groups as a substituent, more preferably a phenyl group having an unsubstituted phenyl group or one C₁₋₂₀ alkoxy group as a substituent, and still more preferably a phenyl group having an unsubstituted phenyl group or one C₁₋₁₀ alkoxy group as a substituent. In the compounds represented by General Formula (I₃-7) and the like, all of A¹⁵ to A¹⁶ are preferably the same type of functional groups.

Examples of the compound represented by any of (I₃-1) to (I₃-6) and (I₄-1) to (I₄-6) include compounds represented by any of General Formulas (6-1) to (6-12) and (7-1) to (7-12). In General Formulas (6-7) to (6-12) and (7-7) to (7-12), Ph represents an unsubstituted phenyl group. The compound represented by any of (I₃-1) to (I₃-6) and (I₄-1) to (I₄-6) is particularly preferably a compound represented by General Formula (6-4), (6-5), (6-7), (6-8), (7-4), (7-5), (7-7) or (7-8), and more preferably a compound represented by General Formula (6-4), (6-5), (6-7) or (6-8).

In General Formulas (6-1) to (6-12) and (7-1) to (7-12), P⁵ to P⁸ each independently represent a halogen atom, a C₁₋₂₀ alkyl group, a C₁₋₂₀ alkoxy group, an amino group, a monoalkylamino group, or a dialkylamino group. Examples of the C₁₋₂₀ alkyl group, the C₁₋₂₀ alkoxy group, the monoalkylamino group, or the dialkylamino group in P⁵ to P⁸ include the same groups as those described for R^{g}, (p1) to (p3), and (q1) to (q3). P⁵ to P⁸ are each preferably a C₁₋₂₀ alkyl group, a C₁₋₂₀ alkoxy group, an (unsubstituted) phenyl group, a p-methoxyphenyl group, a p-ethoxyphenyl group, a p-dimethylaminophenyl group, a dimethoxyphenyl group, a thienyl group, or a furanyl group, more preferably a C₁₋₂₀ alkyl group, a C₁₋₂₀ alkoxy group, a phenyl group, a p-methoxyphenyl group, a p-ethoxyphenyl group, a dimethoxyphenyl group, a thienyl group, or a furanyl group, still more preferably a C₁₋₂₀ alkyl group or a C₁₋₂₀ alkoxy group, and further still more preferably a C₁₋₁₀ alkyl group or a C₁₋₁₀ alkoxy group from the viewpoint of safety for living bodies, and these substituents may further have a substituent. However, because a substituent other than these substituents can improve safety by further introducing an appropriate substituent, the substituent is not limited to these substituents.

In General Formulas (6-1) to (6-12) and (7-1) to (7-12), n5 to n8 each independently represent an integer from 0 to 3. When a plurality of P⁵ are present in one molecule (that is, when n5 is 2 or 3), all of the plurality of P⁵ may be the same type of functional group or different types of functional groups. The same applies to P⁶ to P⁸.

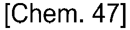

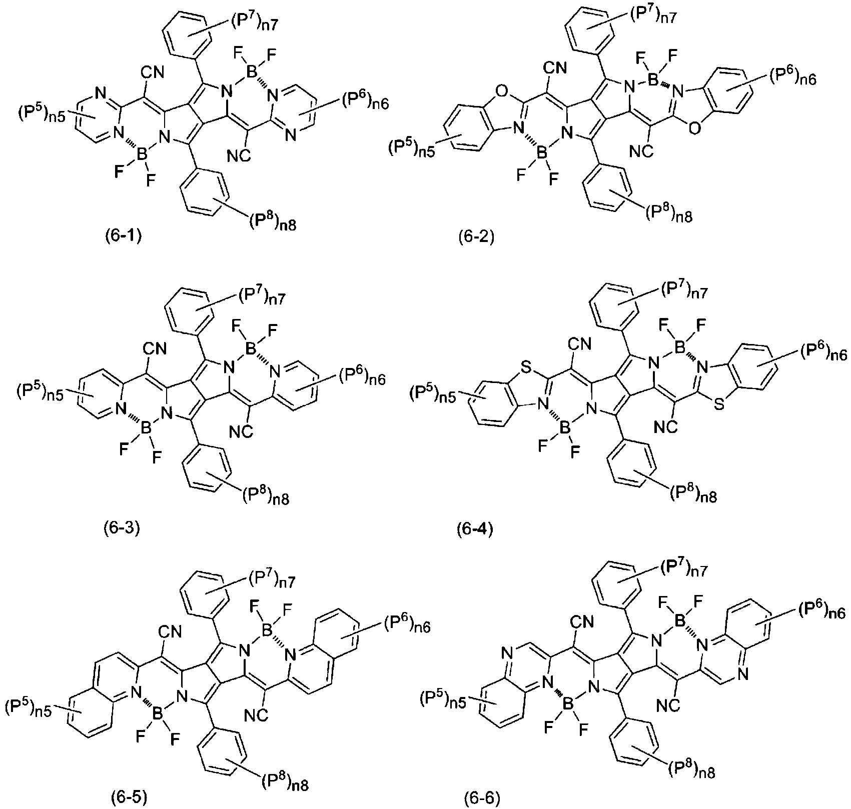

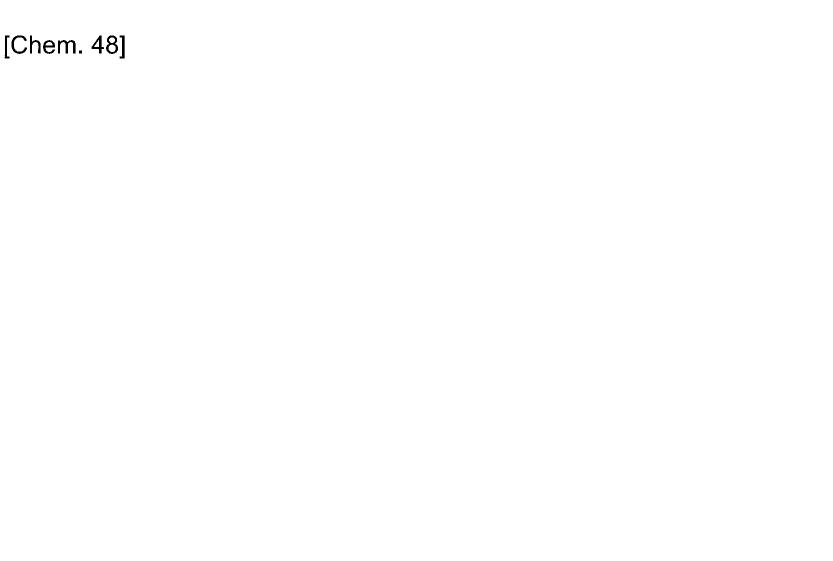

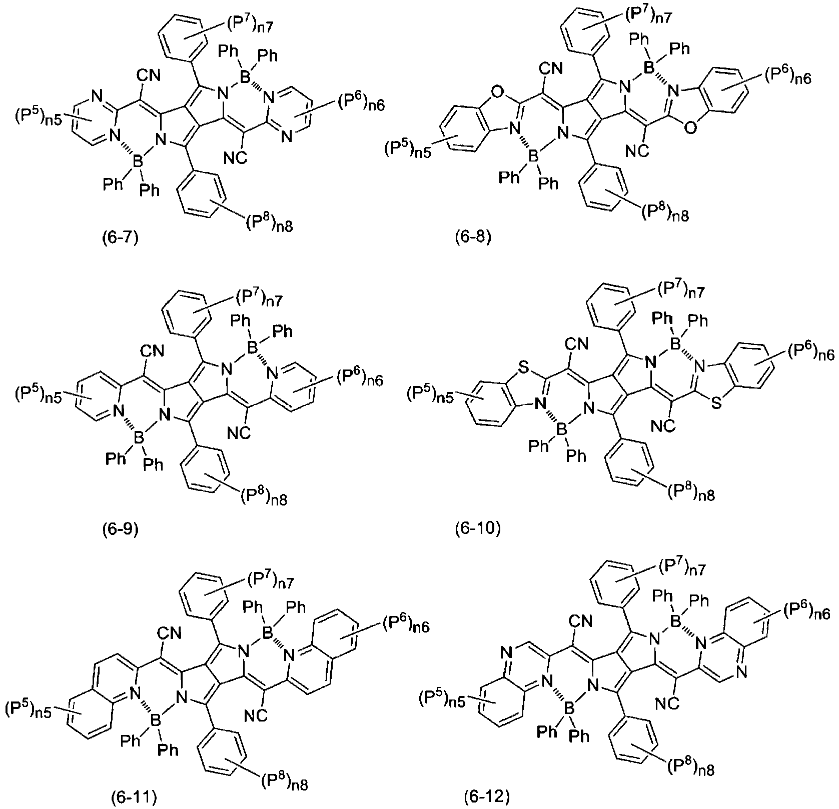

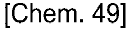

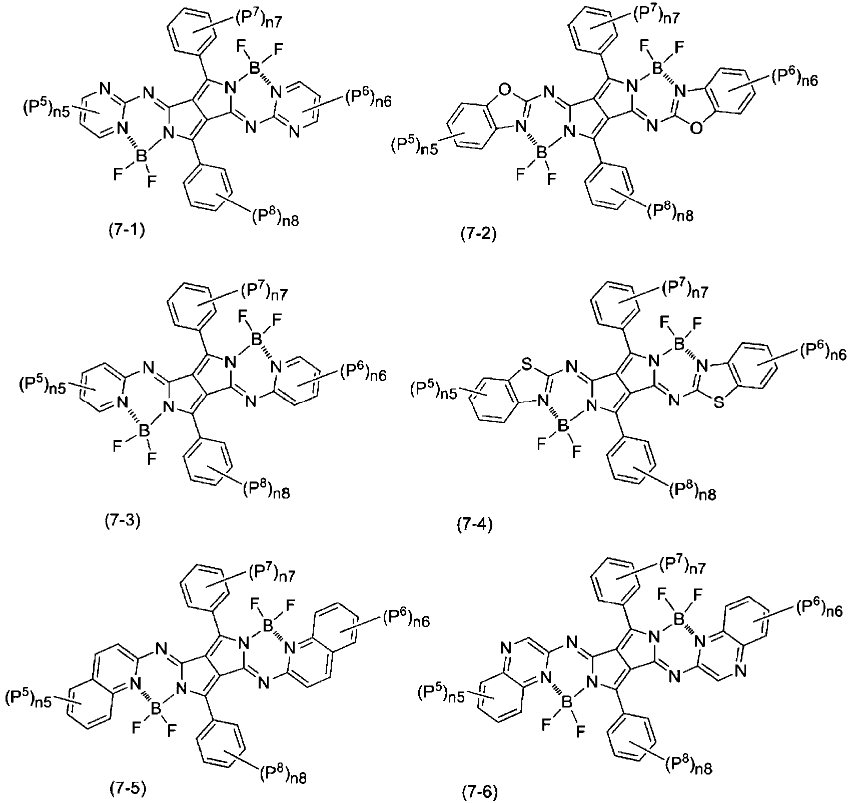

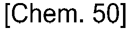

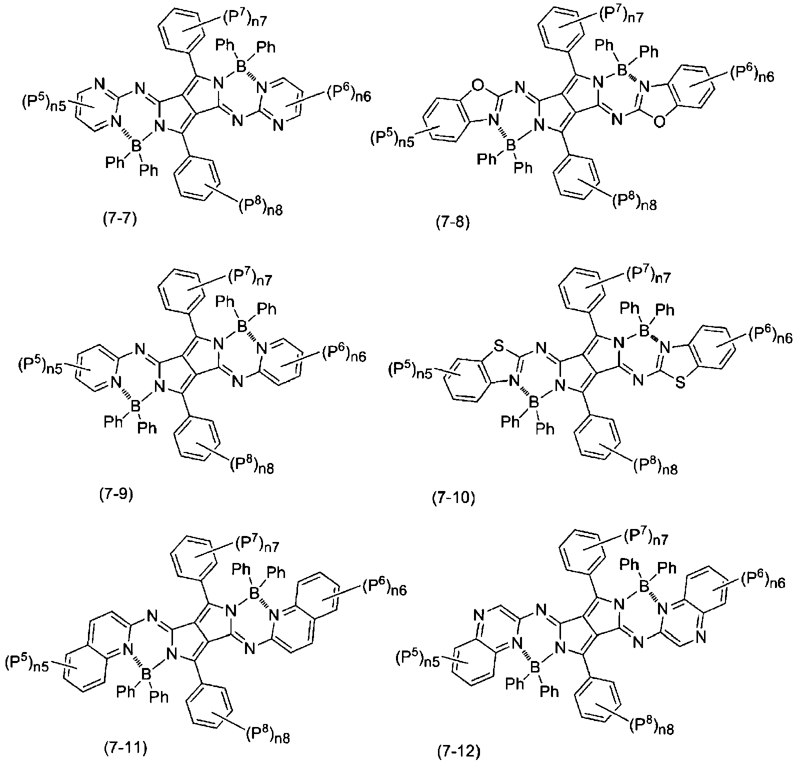

The compounds represented by General Formulas (6-1) to (6-12) and (7-1) to (7-12) are preferably compounds in which P⁵ to P⁸ are each independently a C₁₋₂₀ alkyl group or a C₁₋₂₀ alkoxy group, and n5 to n8 are each independently from 0 to 2, more preferably compounds in which P⁵ and P⁶ are each independently a C₁₋₂₀ alkyl group, n5 and n6 are each independently from 0 to 2, P⁷ and P⁸ are each independently a C₁₋₂₀ alkoxy group, and n7 and n8 are each independently 0 to 1, still more preferably compounds in which P⁵ and P⁶ are each independently a C₁₋₂₀ alkyl group, n5 and n6 are each independently 1 to 2, P⁷ and P⁸ are each independently a C₁₋₂₀ alkoxy group, and n7 and n8 are 1.

Specific examples of the compounds represented by General Formulas (6-1) to (6-12) include compounds represented by Formulas (6-1-1) to (6-12-1) set forth below. "λ" is the peak wavelength of the absorption spectrum of each compound, and "Em" is the peak wavelength of the fluorescence spectrum.

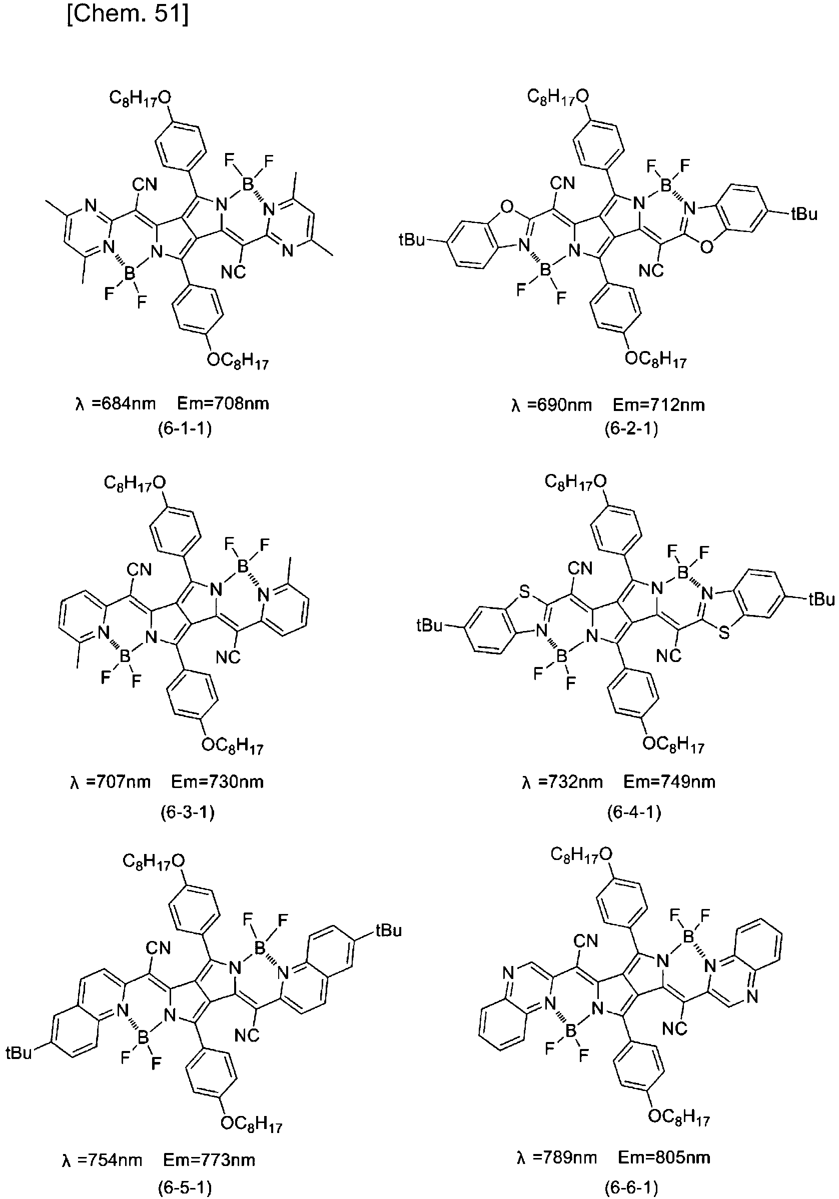

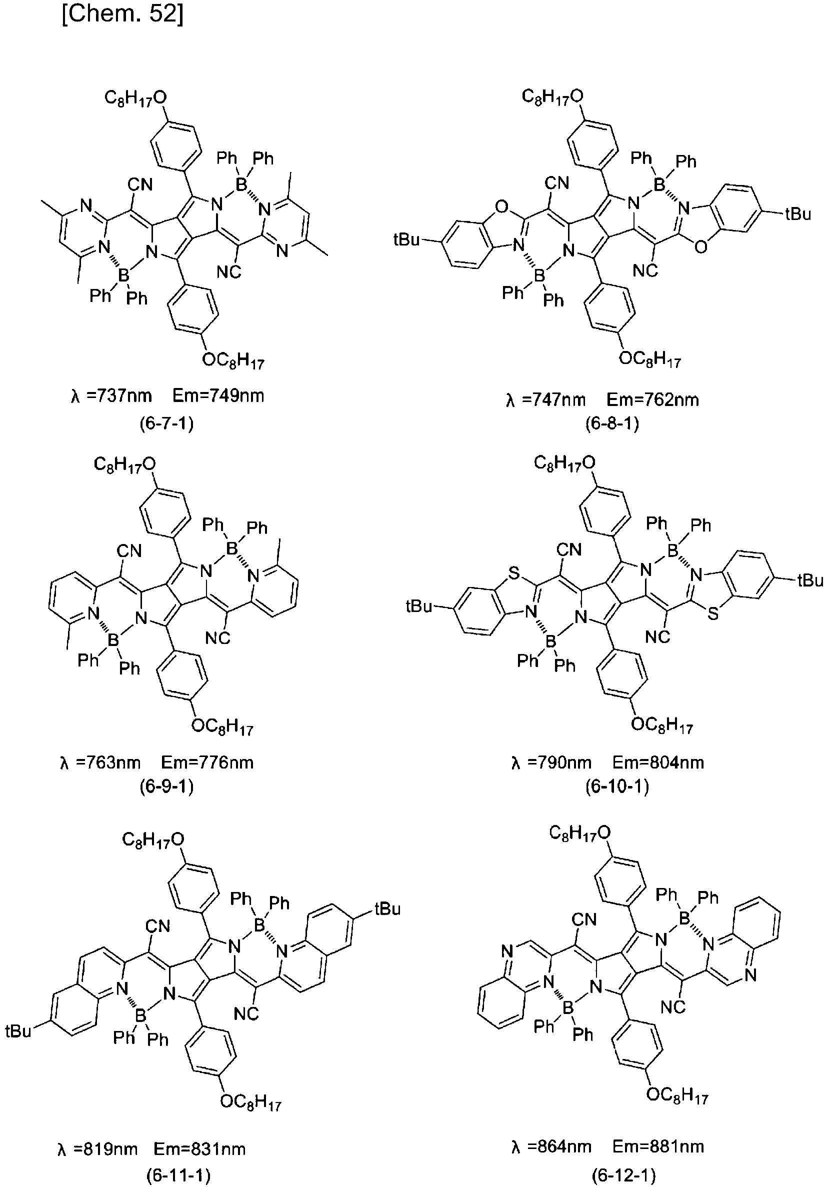

The near-infrared fluorescent dye contained in the standard plate used in the present invention may have a maximum fluorescence wavelength of the standard plate within the range from 650 nm to 1000 nm, and only one type may be contained or two or more types may be contained. As the standard plate used in the present invention, the maximum fluorescence wavelength is preferably 700 nm or more, and more preferably 720 nm or more. In the standard plate used in the present invention, there may be 2 or more peaks of the fluorescence wavelength within the range from 650 nm to 1000 nm. However, it is preferable that there is only one peak of the maximum fluorescence wavelength. Thus, the standard plate used in the present invention preferably contains one type of near-infrared fluorescent dye.

### Amorphous Resin

In general, the amorphous resin is characterized in that a temporal change tends to be small, and the dye in the resin composition is easily made uniform. Thus, the near-infrared fluorescence chromaticity can be uniformly present in the entire plate, and the standard plate can be stably used for a long period of time. Thus, an amorphous resin is used as the resin constituting the standard plate used in the present invention.

The amorphous resin is not particularly limited as long as it is a resin in which crystals are not present in the molded body, but the amorphous resin is preferably a so-called transparent resin having transparency that is a molded body molded from only a resin and having transparency. Here, "having transparency" means that the total light transmittance of a thickness of 2 mm in the visible region (within a wavelength range from 380 to 650 nm) is 70% or more. This is because not only the light emitted inside the resin reaches the outside of the resin, but also light is hardly diffused inside the resin, and thus the influence of scratches or the like on the fluorescence intensity can be reduced.

The amorphous resin constituting the standard plate used in the present invention may be a thermoplastic resin or a thermosetting resin. When a thermosetting resin is used for the molded body, the thermosetting resin may be cured during melt-kneading. Thus, the resin component contained in the standard plate used in the present invention is preferably a thermoplastic resin. For example, when the standard plate used in the present invention is a thermoplastic resin composition, the resin component may be a thermoplastic resin as a whole, and may contain a small amount of a non-thermoplastic resin.

Specific examples of the amorphous resin constituting the standard plate used in the present invention include polycarbonate-based resins such as polycarbonate (PC), polystyrene-based resins such as polystyrene (PS), imide-modified polystyrene, acrylonitrile-butadiene-styrene (ABS) resin, imide-modified ABS resin, styrene-acrylonitrile copolymer (SAN) resin, and acrylonitrile-ethylene-propylene-diene-styrene (AES) resin; acrylic-based resins such as polyacrylic acid, polymethacrylic acid, polymethyl acrylate, polymethyl methacrylate (PMMA), and polyethyl methacrylate; polyoxymethylene-based resins such as polyoxymethylene (POM); polyester-based resins such as polyethylene terephthalate (PET), polybutylene terephthalate, polytrimethylene terephthalate, polyethylene naphthalate, and polybutylene naphthalate; and vinyl chloride-based resins such as polyvinyl chloride (PVC) and vinyl chloride-vinyl acetate copolymer resins. As the resin component contained in the standard plate used in the present invention, only one type may be used, or two or more types may be mixed and used. When two or more types are mixed, it is preferable to use a combination of highly compatible resins. As the amorphous resin constituting the standard plate used in the present invention, it is particularly preferable to use one or more selected from the group consisting of PC, PS, PMMA, POM, PET, PVC, and transparent ABS. The PS may be general-purpose transparent polystyrene (GPPS) or high-impact polystyrene (HIPS). As the amorphous resin constituting the standard plate used in the present invention, PC is particularly preferable because it has high hardness and is stable against scratches and deflection.

### Molding

The melt-kneading of the raw material mixture containing the near-infrared fluorescent dye and the amorphous resin and the molding of the obtained resin composition into a plate can be performed by a common method using a commercially available melt-kneading machine, molding machine, or the like. For example, a powder composition of a near-infrared fluorescent dye and pellets of an amorphous resin are mixed in advance, the mixture is used as a raw material mixture, the raw material mixture is charged into a melt-kneading machine, the amorphous resin is kneaded in a molten state under a high temperature environment at a temperature equal to or higher than a melting point of the amorphous resin, and then the obtained kneaded product (resin composition) is molded into a plate. The molding method is not particularly limited, and examples thereof include casting (casting method), injection molding using a mold, compression molding, extrusion molding using a T-die or the like, and blow molding.

As the standard plate used in the present invention, instead of a molded body of a resin composition obtained by melt-kneading a raw material mixture containing a near-infrared fluorescent dye and an amorphous resin, a plate obtained by applying a liquid resin composition obtained by dissolving the raw material mixture containing a near-infrared fluorescent dye and an amorphous resin in a solvent to a surface of a glass substrate to form a coating film, or a coating film (film) obtained by forming a coating film on the glass substrate and then peeling off the glass substrate can also be used. As the raw material mixture containing the near-infrared fluorescent dye and the amorphous resin, the same materials as described above can be used. The solvent for dissolving the raw material mixture is not particularly limited, but is preferably a volatile solvent. Examples of the solvent include toluene, xylene, naphthalene, hexane, benzene, dichloromethane, tetrachloromethane, methanol, ethanol, propanol, butanol, acetone, formic acid, methyl ethyl ketone, acetonitrile, dimethyl sulfoxide, and dimethylformamide. A mixed solvent of two or more thereof may also be used. The method for applying the liquid resin composition to a surface of the transparent plate as a base material is not particularly limited, and examples thereof include spray coating, spin coating, slit coating, and roll coating. The dry film thickness of the coating film containing the near-infrared fluorescent dye and the amorphous resin formed on a surface of the transparent plate is not particularly limited, but it is preferably 1 to 100 µm, more preferably 5 to 50 µm because the relative fluorescence intensity of a test sample having a higher concentration can be measured.

The shape of the standard plate is not particularly limited as long as it is a plate shape, and is appropriately molded into a shape that can be measured with a measuring instrument used for measuring the near-infrared fluorescence intensity. As the standard plate, the top surface may have a circular shape, an elliptical shape, a polygonal shape such as a quadrangle, a pentagon, a hexagon, or an octagon, or any other shape. When the top surface of the standard plate has a quadrangle shape, the quadrangle can be, for example, a quadrangle in which the length and the width are each independently in a range from 50 to 200 mm.

The standard plate preferably has a uniform thickness because the variation in the measured value of the near-infrared fluorescence intensity depending on the type of the measuring device can be suppressed. Specifically, the absolute value of the difference between the maximum thickness and the minimum thickness in the entire plate of the standard plate is preferably 20% or less, preferably 10% or less in the same manner, more preferably 5% or less in the same manner, and particularly preferably 1% or less in the same manner with respect to the average value of the thicknesses. The average value of the thicknesses is the number average of any 20 points in the plate.

The thickness of the standard plate is not particularly limited, but is preferably 1 µm or more, more preferably 50 µm or more, and still more preferably 100 µm or more. The thickness is particularly preferably 1 mm or more, and most preferably 2 mm or more because the influence of fine scratches due to use is suppressed, and the standard plate can be stably used for a long period of time. In addition, the thickness of the standard plate is preferably 15 mm or less, more preferably 10 mm or less, and still more preferably 5 mm or less because these thicknesses are suitable for measurement with various spectrofluorometers.

When a plate having a coating film containing a near-infrared fluorescent dye formed on a surface of a glass substrate is used as the standard plate, the thickness of the glass substrate is not particularly limited, but when a film is formed on a glass substrate and used without peeling, the thickness is preferably 1 µm or more, more preferably 50 µm or more, still more preferably 100 µm or more, particularly preferably 1 mm or more, and most preferably 2 mm or more from the viewpoint of securing transparency and mechanical strength. The thickness of the standard plate is preferably 15 mm or less, more preferably 10 mm or less, and still more preferably 5 mm or less.

The content of the near-infrared fluorescent dye in the standard plate is not particularly limited as long as the standard plate has a concentration that emits near-infrared fluorescence, but is preferably 0.0001 mass% or more, more preferably 0.0005 mass% or more, still more preferably 0.001 mass% or more from the viewpoint of fluorescence intensity and detection sensitivity thereof. A low dye concentration is desirable because the possibility of dissolving out is low, and the possibility of bleeding out from the standard plate is low. On the other hand, the content of the near-infrared fluorescent dye in the standard plate is preferably 10 mass% or less, more preferably 5 mass% or less, still more preferably 1 mass% or less because concentration quenching can be avoided.

When a plate on which a coating film containing a near-infrared fluorescent dye is formed on a surface of a glass substrate is used as the standard plate, the content of the near-infrared fluorescent dye in the standard plate is calculated as the proportion of the content of the near-infrared fluorescent dye in the applied liquid resin composition to the total amount of the solid content of the liquid resin composition applied to the surface of the glass substrate as the base material ([amount of near-infrared fluorescent dye in applied liquid resin composition (g)]/[solid content of applied liquid resin composition (g)] × 100%).

The fluorescence intensity of the standard plate depends on the content of the near-infrared fluorescent dye in the standard plate. Thus, the concentration of the near-infrared fluorescent dye in the standard plate can be appropriately adjusted according to the range of the fluorescence intensity value that can be taken by the test sample to be measured. In addition, for example, it is also preferable to prepare a plurality of standard plates having different concentrations within a range from 0001 mass% to 10 mass%, and use an appropriate standard plate according to the fluorescence intensity of the test sample.

### Additive

The resin composition containing the near-infrared fluorescent dye and the amorphous resin to be melt-kneaded for molding the standard plate may contain other additives as long as the function as the standard plate is not impaired. Examples of the additive include a colorant, an ultraviolet absorber, a heat stabilizer, a light stabilizer, an antioxidant, a flame retardant, a flame retardant aid, a plasticizer, an antistatic agent, and a mold release agent. For example, by blending a colorant that does not affect fluorescence, such as titanium or a pigment, a standard plate that is visually recognized easily is obtained.

### Blank Plate

The blank value of the fluorescence intensity measurement can be measured by using a blank plate containing no near-infrared fluorescent dye. The blank plate is produced with the same composition and by the same production method as those of the standard plate except that the blank plate does not contain a near-infrared fluorescent dye. Specifically, first, a raw material mixture prepared for melt-kneading when a standard plate is produced and a raw material mixture having the same composition except that a near-infrared fluorescent dye is not contained are prepared. That is, the raw material mixture for producing the blank plate is a mixture having a composition obtained by removing the near-infrared fluorescent dye from the raw material mixture for producing the standard plate. This raw material mixture is melt-kneaded under the same conditions as in the production of the standard plate, and molded into the same shape as the standard plate. Among the components of the raw material mixture prepared for melt-kneading in the production of the standard plate, the presence or absence and the content of the component that does not affect fluorescence may be different in the raw material mixture prepared for melt-kneading in the production of the blank plate. For example, a raw material mixture prepared for melt-kneading in producing the blank plate may contain a colorant having a color tone that does not affect fluorescence and is different from that of the standard plate.

### Standard Plate Set for Relative Fluorescence Intensity Measurement

The standard plate and the blank plate used in the method for measuring a relative fluorescence intensity according to the present invention are preferably used as a set. By using the standard plate set for relative fluorescence intensity measurement including these plates, the method for measuring a relative fluorescence intensity according to the present invention can be more easily performed. The standard plate set for relative fluorescence intensity measurement may include a plurality of standard plates having different concentrations of near-infrared fluorescent dyes.

### Test Sample

The test sample used in the method for measuring a relative fluorescence intensity according to the present invention is not particularly limited as long as it is a molded body of a resin composition containing a near-infrared fluorescent dye and has a maximum fluorescence wavelength in the range from 650 nm to 1000 nm. The near-infrared fluorescent dye contained in the test sample may be the same or different from the near-infrared fluorescent dye in the standard plate used for measurement. Examples of the test sample include a molded body obtained by molding a resin composition containing a near-infrared fluorescent dye in advance, and a molded body obtained by molding a resin composition not containing a near-infrared fluorescent dye and then attaching a near-infrared fluorescent dye to a surface of the obtained molded body.

When the test sample is a molded body obtained by molding a resin composition containing a near-infrared fluorescent dye in advance, the test sample can be produced, for example, by preparing a raw material mixture containing a near-infrared fluorescent dye and a resin and molding the raw material mixture. The raw material mixture may further contain an additive. As the additive, the same additives as described above can be used. The raw material mixture may be prepared by any known method as long as the near-infrared fluorescent dye is uniformly mixed and dispersed in the resin component.

For example, a molded body obtained by molding a resin composition obtained by melt-kneading a raw material mixture containing a near-infrared fluorescent dye, a resin, and an additive as necessary can be used as the test sample. The molding method is not particularly limited, and molding may be performed by any known method such as casting (casting method), injection molding using a mold, compression molding, extrusion molding using a T-die or the like, or blow molding.

In addition, a film formed by applying a raw material mixture in which a near-infrared fluorescent dye to a base material or the like, a resin, and an additive as necessary are dissolved or dispersed in a solvent and then curing the mixture can be used as the test sample. The application method is not particularly limited, and examples thereof include spray coating, spin coating, slit coating, and roll coating. As the base material, various base materials such as a glass plate, a metal plate, and a resin plate can be used. The solvent is not particularly limited as long as the resin can be dissolved, and examples thereof include toluene, xylene, naphthalene, hexane, benzene, tetrachloromethane, methanol, ethanol, propanol, butanol, acetone, formic acid, methyl ethyl ketone, acetonitrile, dimethyl sulfoxide, and dimethylformamide, and a mixed solvent of two or more thereof may also be used.

The resin constituting the test sample is not particularly limited, and for example, a thermoplastic resin or a thermosetting resin can be used. Examples of the thermoplastic resin include urethane-based resins such as polyurethane (PU) and thermoplastic polyurethane (TPU); polycarbonate (PC); vinyl chloride-based resins such as polyvinyl chloride (PVC) and vinyl chloride-vinyl acetate copolymer resin; acrylic-based resins such as polyacrylic acid, polymethacrylic acid, polymethyl acrylate, polymethyl methacrylate (PMMA), and polyethyl methacrylate; polyester-based resins such as polyethylene terephthalate (PET), polybutylene terephthalate, polytrimethylene terephthalate, polyethylene naphthalate, and polybutylene naphthalate; polyamide-based resins such as nylon (registered trademark); polystyrene-based resins such as polystyrene (PS), imide-modified polystyrene, an acrylonitrile-butadiene-styrene (ABS) resin, an imide-modified ABS resin, a styrene-acrylonitrile copolymer (SAN) resin, and an acrylonitrile-ethylene-propylene-diene-styrene (AES) resin; olefin-based resins such as a polyethylene (PE) resin, a polypropylene (PP) resin, and a cycloolefin resin; cellulose-based resins such as nitrocellulose and cellulose acetate; siliconebased resin; and fluorine-based resins. Examples of the thermosetting resin include epoxy resins such as a bisphenol A type epoxy resin, a bisphenol F type epoxy resin, an isocyanurate type epoxy resin, and a hydantoin type epoxy resin; amino resins such as melamine resin and urea resin; phenolic resins; and unsaturated polyester-based resins.

When the test sample is a molded body obtained by molding a resin composition not containing a near-infrared fluorescent dye and then attaching the near-infrared fluorescent dye to a surface of the obtained molded body, examples of a method of attaching the near-infrared fluorescent dye to a surface of the molded body include a method of applying a near-infrared fluorescent dye solution dissolved in a volatile solvent on a surface of the molded body and a method of immersing the molded body itself in a near-infrared fluorescent dye solution and then removing the solvent. The solvent is not particularly limited as long as it is a solvent in which the near-infrared fluorescent dye can be dissolved, but a volatile solvent is preferable. Specifically, the solvents listed above can be appropriately used. The method for applying the near-infrared fluorescent dye solution is not particularly limited, and examples thereof include spray coating, spin coating, slit coating, and roll coating.

In addition, also by applying a liquid resin composition containing a near-infrared fluorescent dye to a surface of a molded body of a resin composition not containing a near-infrared fluorescent dye, and then curing the resin composition to form a coating film, a molded body having the near-infrared fluorescent dye attached to the surface is obtained. This molded body can be used as the test sample. The method for applying the liquid resin composition containing a near-infrared fluorescent dye to a surface of the molded body is not particularly limited, and examples thereof include the same method as described above, such as spray coating. The dry film thickness of the resin coating film containing a near-infrared fluorescent dye on a surface of the molded body is not particularly limited, but it is preferably from 1 to 100 µm, more preferably from 5 to 50 µm.

The shape of the test sample is not particularly limited. The test sample is preferably a film-shaped (sheet-shaped) or plate-shaped molded body from the viewpoint of ease of measurement, but may be a tubular or other more complicated shaped molded body. When the test sample has a plate shape, the shape of the test sample, for example, the shape, size, thickness, and the like of the top surface can be the same as those exemplified as the shape of the standard plate.

The content of the near-infrared fluorescent dye in the test sample is not particularly limited, but is preferably 0.0001 mass% or more, more preferably 0.0005 mass% or more, and still more preferably 0.001 mass% or more. On the other hand, the content of the near-infrared fluorescent dye in the test sample is preferably 10 mass% or less, more preferably 5 mass% or less, still more preferably 1 mass% or less.

The method for measuring a relative fluorescence intensity according to the present invention is particularly useful for evaluating the fluorescence intensity of an industrial product. That is, the test sample used in the present invention is preferably an industrial product. From the viewpoint of quality control, industrial products are desired to minimize variations between production lots. The standard plate used in the method for measuring a relative fluorescence intensity according to the present invention is excellent in temporal stability of fluorescence intensity, and the same standard plate can be commonly used for near-infrared fluorescence measurement of products derived from a plurality of production lots. Thus, by using the standard plate, variations between production lots can be sufficiently suppressed, and a highly reliable relative fluorescence intensity can be obtained for the test sample.

The test sample used in the present invention is preferably a molded body to be used as a medical device. This is because homogeneity of product quality is particularly required for medical devices, and quality control higher than that of other industrial products is required. The medical device is particularly preferably a medical device at least a part of which is used in the body of a patient because the characteristics of near-infrared fluorescence are utilized as the medical device. Examples of the medical device at least a part of which is inserted into or indwelled in the body of a patient include a stent, a coil embolus, a catheter tube, a medical clip, an injection needle, an indwelling needle, a port, a shunt tube, a drain tube, and an implant. Examples of the catheter tube include ureteral and urethral catheters, biliary catheters, and vascular catheters. Examples of the medical clip include gastrointestinal clips.

The test sample used in the present invention is also preferably a molded body of a resin composition which is a raw material of various industrial products that emit near-infrared fluorescence, including medical devices. For example, the near-infrared fluorescence intensity of a catheter tube produced by molding a resin composition containing a near-infrared fluorescent dye into a tubular shape can also be measured as the near-infrared fluorescence intensity of a plate produced by molding the resin composition under the same molding conditions.

### Test Sample Blank

In the method for measuring a relative fluorescence intensity according to the present invention, a molded body having the same composition as that of the test sample except that the near-infrared fluorescent dye contained in the test sample is not contained is used as the test sample blank for measuring the blank value of the fluorescence intensity value. However, a molded body having a composition excluding components that do not affect the near-infrared fluorescence intensity of the test sample among the components contained in the test sample can also be used as the test sample blank.

For example, when the test sample is a molded body of a resin composition obtained by melt-kneading a raw material mixture containing a near-infrared fluorescent dye, a molded body of a resin composition obtained by melt-kneading a raw material mixture having the same composition as that of the raw material mixture of the test sample except that the near-infrared fluorescent dye contained in the test sample is not contained can be used as the test sample blank. When the test sample is a molded body in which a near-infrared fluorescent dye is attached to a surface, the molded body before the near-infrared fluorescent dye is attached to the surface can be used as the test sample blank. When the test sample is a molded body obtained by applying a liquid resin composition containing a near-infrared fluorescent dye to a surface of a molded body not containing a near-infrared fluorescent dye to form a coating film, a molded body obtained by applying a liquid resin composition having the same composition as that of the liquid resin composition except that the near-infrared fluorescent dye is not contained to a surface of a molded body not containing a near-infrared fluorescent dye to form a coating film can also be used as the test sample blank.

The shape of the test sample blank may be the same as or different from the shape of the test sample. In the present invention, the measurement accuracy of the fluorescence intensity of the test sample can be enhanced by forming the test sample blank into a molded body having the same shape as the test sample. When the test sample is a molded body having a complicated shape, the test sample blank is preferably a molded body having the same shape as the test sample, but is also preferably a film-shaped or plate-shaped molded body.

### Measurement of Fluorescence Intensity

In the method for measuring a relative fluorescence intensity according to the present invention, the fluorescence intensity of the fluorescence wavelength in the near-infrared region is measured for the test sample, the test sample blank, the standard plate, and the blank plate. Specifically, a fluorescence spectrum in a wavelength range of 650 nm or more is measured for the test sample, the test sample blank, the standard plate, and the blank plate, and the fluorescence intensity of the fluorescence wavelength present at 650 to 1000 nm is obtained from the obtained fluorescence spectrum.

The fluorescence spectrum can be measured by a common method using a commercially available fluorescence detection device or the like. In the present invention, as the spectrofluorometer that is preferably measured by using a spectrofluorometer, various commercially available devices can be used. As the excitation light used for fluorescence detection, any light source can be used, and in addition to a near-infrared lamp having a long wavelength width, a laser, an LED, or the like having a narrow wavelength width can be used.

The fluorescence intensity also depends on the thickness of the sample. Thus, when the thicknesses of the test sample and the standard plate are very large, the fluorescence intensity value can be corrected with the thickness.

The fluorescence intensity F₁ of the test sample at the fluorescence wavelength λ₁, the fluorescence intensity F_{1B} of the test sample blank at the fluorescence wavelength λ_{1B}, the fluorescence intensity Fs of the standard plate at the fluorescence wavelength λ_{S}, and the fluorescence intensity F_{SB} of the blank plate at the fluorescence wavelength λ_{SB} are defined, and the relative fluorescence intensity (F₁-F_{1B})/(Fs-F_{SB})) of the test sample is calculated from these values. The standard plate used in the present invention is excellent in temporal stability of fluorescence, and a homogeneous plate can be massproduced. Thus, it is possible to compare relative fluorescence intensity values measured at different facilities and different time points by the method for measuring a relative fluorescence intensity according to the present invention using the standard plate. That is, by using the standard plate, data correlation with a third party can be checked.

When the test sample or the test sample blank is not in the form of a film or a plate, the test sample or the test sample blank can be prepared in the form of a film or a plate and then subjected to fluorescence intensity measurement. For example, when the test sample or the like is a tubular molded body, the fluorescence intensity of a film or plate formed by opening the tube can be measured. When the test sample or the like is a molded body having a more complicated shape, the molded body can be sliced, and the fluorescence intensity of the obtained film-shaped or plate-shaped section can be measured.

### EXAMPLES

Hereinafter, the present invention will be described in more detail with reference to Examples and Comparative Examples, but the present invention is not limited to these Examples and the like.

### [Synthesis Example 1] Synthesis of Near-Infrared Fluorescent Dye H

Synthesis of the near-infrared fluorescent dye H was performed as follows with reference to Organic Letters, 2012, Vol. 4, pages 2670 to 2673 and Chmestry: A European Journal, 2009, Vol. 15, pages 4857 to 4864.

A red solid of 3,6-(4-(2-ethylhexyl)oxyphenyl)pyrrolo[3,4-c]pyrrole-1,4(2H,5H)-dione (h-2) was obtained (obtained amount: 4.6 g) by performing the same operation as in Synthesis Example 2 except for using 1-bromo-2-ethylhexane (48 g, 249 mmol) in place of 1-bromooctane (48 g, 249 mmol).

Next, to a 100 mL two-necked flask, 2-amino-4-tert-butylphenol (5.24 g, 31.7 mmol), 2-cyano-acetimidic acid ethyl ester hydrochloride (4.45 g, 33.3 mmol), and dichloromethane (30 mL) were added and refluxed overnight. The reaction liquid was diluted with dichloromethane (100 mL), and washed twice with a 1 mol/L aqueous sodium hydroxide solution. The organic layer was dried over anhydrous magnesium sulfate, and the solvent was distilled off to obtain a yellow liquid of (5-tert-butyl-benzoxazole-2-yl)-acetonitrile (h-3) (obtained amount: 6.3 g, yield: 88%).

Subsequently, under an argon stream, the compound (h-2) (1.64 g, 3.0 mmol), the compound (h-3) (1.41 g, 6.6 mmol), and dehydrated toluene (50 mL) were added to a 200 mL three-necked flask, and the mixture was heated and refluxed. Phosphoryl chloride (2.34 mL, 25 mmol) was added dropwise with a syringe under heating reflux, and the mixture was further heated and refluxed for 2 hours. After completion of the reaction, dichloromethane (40 mL) and a saturated aqueous sodium bicarbonate solution (40 mL) were added thereto with ice cooling, and the mixture was extracted with dichloromethane. The organic layer was treated with anhydrous magnesium sulfate, and magnesium sulfate was filtered off, then the solvent was removed under reduced pressure, and the residue was subjected to silica gel column chromatography (eluent: hexane/ethyl acetate) to roughly remove impurities. The residue obtained by distilling off the solvent was purified again by silica gel column chromatography (eluent: dichloromethane) to obtain a blue-green solid of a precursor (h-4) (obtained amount: 0.98 g, yield: 35%).

Finally, under an argon stream, the precursor (h-4) (973 mg, 1.0 mmol), N,N-diisopropylethylamine (387 mg, 3.0 mmol), and dichloromethane (30 mL) were charged in a 100 mL two-necked flask, and chlorodiphenylborane (900 mg, 4.5 mmol) was added thereto while refluxing the mixture, and the mixture was reacted overnight. The reaction liquid was washed with water, and then the organic layer was dried over anhydrous magnesium sulfate and concentrated. The residue was washed with methanol and then purified by column chromatography (eluent: dichloromethane) to obtain a powder composition consisting of a green solid of a near-infrared fluorescent dye H (obtained amount: 0.42 g, yield: 35%).

¹H-NMR (300 MHz, CDCl₃): δ = 7.11 (m, 24H), 6.62 (m, 4H), 6.32 (m, 6H), 3.8 to 3.9 (m, 4H), 2.27 (s, 6H), 1.8 (m, 2H), 1.6 to 1.3 (m, 16H), 1.38 (s, 18H), 0.9 to 1.0 (m, 12H) ppm.

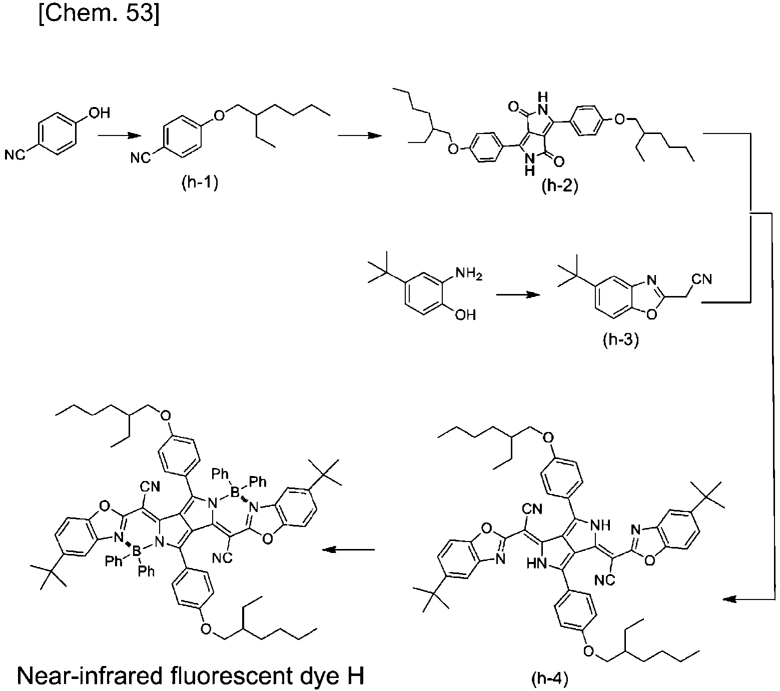

### [Example 1]

Using the near-infrared fluorescent dye H obtained in Synthesis Example 1 and resin pellets, a resin composition was produced by a melt-kneading method, and a plate was molded from the obtained resin composition. As the resin pellets, PC pellets "SD POLYCA (trademark) 301-4" (manufactured by Sumika Polycarbonate Limited) were used as an amorphous resin.

First, the near-infrared fluorescent dye H and the resin pellets were mixed in a concentration of the near-infrared fluorescent dye H of 0.005 mass% (50 ppm). Then, the obtained mixture was melt-kneaded, and a near-infrared fluorescent dye-containing plate (90 mm × 50 mm × 3 mm) was injection-molded. Melt-kneading and injection molding of the plate were performed using an injection molding machine under the following conditions. The cylinder set temperature and the mold temperature of the injection molding machine were set according to the type of the resin pellets.

### Conditions of Melt-Kneading and Injection Molding

Device: injection molding machine (product name: EC50SXII-1.5A, manufactured by TOSHIBA CORPORATION)
Set temperature under hopper: 60°C
Injection pressure: 99 MPa
Back pressure: 20 MPa
Screw rotation: 140/min
Injection speed: 70 mm/s
Injection time: 10 seconds
Cooling time: 20 seconds
Nozzle operation: backward movement for 2 seconds after completion of metering
Cylinder set temperature: 280°C
Mold temperature: 80°C

A plate was molded in the same manner as the near-infrared fluorescent dye-containing plate described above except that the near-infrared fluorescent dye H was not contained, and the plate was used as a blank plate.

A total of 6 sets (sets 1 to 6) of the near-infrared fluorescent dye-containing plate and the blank plate were produced, one set every week. The fluorescence intensity profile of each produced plate was measured on the day of production. The fluorescence intensity profile was measured by using a fluorescence spectrophotometer under the following measurement conditions.

### Measurement Conditions for Fluorescence Spectrum of Plate

Fluorescence spectrophotometer: "FP-8600" (manufactured by JASCO Corporation)
Excitation-side bandwidth: 10 nm
Fluorescence-side bandwidth: 10 nm
Response: 0.2 seconds
PMT voltage: 740 V
Measurement range: 680 to 1000 nm
Data capture interval: 1 nm
Excitation wavelength: 700.0 nm
Scanning speed: 500 nm/min
Light source: xenon lamp

For both the near-infrared fluorescent dye-containing plate and the blank plate of each plate, the fluorescence intensity at the maximum fluorescence wavelength was measured from the measured fluorescence spectrum at a wavelength of 600 to 1000 nm, and the fluorescence intensity value obtained by subtracting the fluorescence intensity value at the maximum fluorescence wavelength of the blank plate from the fluorescence intensity value at the maximum fluorescence wavelength of the near-infrared fluorescent dye-containing plate was defined as the fluorescence intensity value at the maximum fluorescence wavelength of each resin plate.

**[Table 1]**

| PC plate set | Fluorescence intensity value at maximum fluorescence wavelength |
|---|---|
| Set 1 | 17929 |
| Set 2 | 17966 |
| Set 3 | 17895 |
| Set 4 | 17766 |
| Set 5 | 17649 |
| Set 6 | 17614 |
| Average value (standard deviation, coefficient of variation) | 17803 (149.5, 0.008) |

The measurement results of the fluorescence intensity value at the maximum fluorescence wavelength of each resin plate are presented in Table 1. As a result, as presented in Table 1, in the PC plate, the fluorescence intensity values at the maximum fluorescence wavelengths of the six near-infrared fluorescent dye-containing plates of different preparation dates and times were almost the same, and the variations were very small. It has been confirmed that a plate obtained by melt-kneading a near-infrared fluorescent dye with PC that is an amorphous resin has a very stable fluorescence intensity value at the maximum fluorescence wavelength, and is suitable as a standard plate in fluorescence intensity measurement of a molded body containing a near-infrared fluorescent dye.

### [Comparative Example 1]

Rhodamine B standard solutions were produced once about every two weeks, a total of six times, and their fluorescence intensity profiles were measured to examine the variations between measurements. Rhodamine B has large time degradation of fluorescence, and thus a Rhodamine B standard solution (concentration: 0.005 mass% (50 ppm), solvent: ethylene glycol) prepared by opening a new Rhodamine B and dissolving the Rhodamine B in a solvent immediately before measurement of fluorescence intensity was used. It was used as a blank solution. The fluorescence intensity profiles of the Rhodamine B standard solution and the blank solution were measured under the following measurement conditions using a fluorescence spectrophotometer.

### Measurement Conditions for Fluorescence Spectrum of Rhodamine B Standard Solution

Fluorescence spectrophotometer: "FP-8600" (manufactured by JASCO Corporation)
Excitation-side bandwidth: 10 nm
Fluorescence-side bandwidth: 10 nm
Response: 0.2 seconds
PMT voltage: 780 V
Measurement range: 4300 to 800 nm
Data capture interval: 1 nm
Excitation wavelength: 450.0 nm
Scanning speed: 500 nm/min
Light source: xenon lamp

For both Rhodamine B standard solution and the blank solution, the fluorescence intensity at the maximum fluorescence wavelength was measured from the measured fluorescence spectrum, and the fluorescence intensity value obtained by subtracting the fluorescence intensity value at the maximum fluorescence wavelength of the blank solution from the fluorescence intensity value at the maximum fluorescence wavelength of the Rhodamine B standard solution was defined as the fluorescence intensity value at the maximum fluorescence wavelength of each Rhodamine B standard solution. The measurement results are presented in Table 2. As presented in Table 2, the fluorescence intensity value of the Rhodamine B standard solution had a large variation in measurements despite that mixing immediately before use was performed, and it was difficult to say that the Rhodamine B standard solution was suitable as a standard solution.

**[Table 2]**

| | Fluorescence intensity value at maximum fluorescence wavelength |
|---|---|
| Number of measurements | Rhodamine B standard solution |
| First time | 1201 |
| Second time | 663 |
| Third time | 690 |
| Fourth time | 706 |
| Fifth time | 857 |
| Sixth time | 668 |
| Average value (standard deviation, coefficient of variation) | 797.5 (210.3, 0.26) |

### [Example 2]

Five types of near-infrared fluorescent dye-containing plates having different near-infrared fluorescent dye concentrations were produced using the near-infrared fluorescent dye H obtained in Synthesis Example 1 and the PC pellets, and the relationship between the relative fluorescence intensity value of the maximum fluorescence wavelength and the near-infrared fluorescent dye concentration was examined. The same PC pellets as those used in Example 1 were used, and a PC plate containing the near-infrared fluorescent dye H and a corresponding blank plate were produced in the same manner as in Example 1 except that the concentration of the near-infrared fluorescent dye H was set to 0.001, 0.002, 0.003, 0.004, or 0.005 mass% (10, 20, 30, 40, or 50 ppm).

For both of the produced near-infrared fluorescent dye-containing plates and blank plates, the fluorescence intensity at the maximum fluorescence wavelength was measured in the same manner as in Example 1, and the fluorescence intensity value obtained by subtracting the fluorescence intensity value at the maximum fluorescence wavelength of the blank plate from the fluorescence intensity value at the maximum fluorescence wavelength of the near-infrared fluorescent dye-containing plate was defined as the fluorescence intensity value at the maximum fluorescence wavelength of each near-infrared fluorescent dye-containing plate.

**[Table 3]**

| | | | | | |
|---|---|---|---|---|---|
| Concentration of near-infrared fluorescent dye [ppm] | 10 | 20 | 30 | 40 | 50 |
| Fluorescence intensity value at maximum fluorescence wavelength | 35556 | 50480 | 59722 | 65928 | 69512 |

The measurement results of the fluorescence intensity value at the maximum fluorescence wavelength of the near-infrared fluorescent dye-containing plate at each concentration are presented in Table 3. As presented in Table 3, the fluorescence intensity value at the maximum fluorescence wavelength of the plate obtained by melt-kneading the near-infrared fluorescent dye and PC was dependent on the near-infrared fluorescent dye concentration.

### [Example 3]

A near-infrared fluorescent dye-containing plate was produced using the near-infrared fluorescent dye H obtained in Synthesis Example 1 and the PC pellets, and the influence of the storage environment on the relative fluorescence intensity value at the maximum fluorescence wavelength of the plate was examined. The same PC pellets as those used in Example 1 were used, and a near-infrared fluorescent dye-containing plate containing the near-infrared fluorescent dye H and a corresponding blank plate were produced in the same manner as in Example 1 such that the concentration of the near-infrared fluorescent dye H was 0.005 mass% (50 ppm).

The produced near-infrared fluorescent dye-containing plate and corresponding blank plate were stored at 4°C, 23°C, 40°C, or 55°C for 19, 39, 68, 111, or 172 days. The fluorescence intensity value at the maximum fluorescence wavelength of each near-infrared fluorescent dye-containing plate after storage was measured in the same manner as in Example 1. The measurement results are presented in Table 4.

**[Table 4]**

| | Fluorescence intensity value at maximum fluorescence wavelength | | |
|---|---|---|---|
| Storage temperature | 68 days | 111 days | 172 days |
| 4°C | 39662.46 | 39768.5 | 42514.46 |
| 23°C | 39744.46 | 40655.4 | 41900.16 |
| 40°C | 39870.96 | 40195.1 | 41969.36 |
| 55°C | 39969.26 | 40428.8 | 42114.36 |
| [Relative fluorescence intensity value at 23°C] / [relative fluorescence intensity value at 4°C] | 1.002 | 1.022 | 0.986 |
| [Relative fluorescence intensity value at 40°C] / [relative fluorescence intensity value at 4°C] | 1.005 | 1.011 | 0.987 |
| [Relative fluorescence intensity value at 55°C] / [relative fluorescence intensity value at 4°C] | 1.008 | 1.017 | 0.991 |

From the results of the fluorescence spectra of the respective plates, it was found that there was almost no change in the fluorescence spectrum at any storage temperature of 4 to 55°C, and there was almost no decrease in the fluorescence intensity due to the temperature during storage. As presented in Table 4, the relative fluorescence intensity values of the near-infrared fluorescent dye-containing plates stored at 23, 40, or 55°C were almost the same as those at 4°C regardless of the storage days. The relative fluorescence intensity values at the storage periods of 111 days and 172 days were similar to the relative fluorescence intensity value at 68 days. From these results, it has been confirmed that the storage in the temperature zone of 4 to 55°C hardly affects the fluorescence intensity of the near-infrared fluorescent dye-containing plate even when the plate is stored for a very long period of time of 172 days, and the relative fluorescence intensity value at the maximum fluorescence wavelength of the plate in which the near-infrared fluorescent dye and the amorphous resin are melt-kneaded has very high temporal stability.

### [Example 4]

A near-infrared fluorescent dye-containing plate was produced using the near-infrared fluorescent dye H obtained in Synthesis Example 1 and the PC pellets, and the influence of the measurement point in the plate on the relative fluorescence intensity value at the maximum fluorescence wavelength of the plate was examined. The same PC pellets as those used in Example 1 were used, and a near-infrared fluorescent dye-containing plate containing the near-infrared fluorescent dye H and a corresponding blank plate were produced in the same manner as in Example 1 such that the concentration of the near-infrared fluorescent dye H was 0.005 mass% (50 ppm).

For both of the produced near-infrared fluorescent dye-containing plate and blank plate, the fluorescence intensity at the maximum fluorescence wavelength was measured in the same manner as in Example 1, and the fluorescence intensity value obtained by subtracting the fluorescence intensity value at the maximum fluorescence wavelength of the blank plate from the fluorescence intensity value at the maximum fluorescence wavelength of the near-infrared fluorescent dye-containing plate was defined as the fluorescence intensity value at the maximum fluorescence wavelength of each near-infrared fluorescent dye-containing plate. At this time, the fluorescence spectrum was measured at the central portion of the plate, the back of the central portion, a portion shifted from the central portion of the plate in the left direction by 5 mm, a portion shifted from the central portion of the plate in the left direction by 10 mm, or a damaged portion in the plate. The measurement results of the fluorescence intensity value of the maximum fluorescence wavelength at each measurement point are presented in Table 5.

**[Table 5]**

| Measurement point of fluorescence intensity | Central portion | Back of central portion | 5 mm leftward from central portion | 10 mm leftward from central portion | Damaged portion |
|---|---|---|---|---|---|
| Fluorescence intensity value at maximum fluorescence wavelength | 41172.2 | 40775.4 | 41201.6 | 41249.3 | 41732.4 |

As presented in Table 5, the fluorescence intensity value at the maximum fluorescence wavelength of the near-infrared fluorescent dye-containing plate was hardly affected by the position in the plate, the presence or absence of damages, or the like, and the fluorescence intensity values were almost the same at any position. These results indicate that the near-infrared fluorescent dye H is uniformly dispersed in the plate, and the fluorescence intensity can be stably measured at any position as a measurement position of the fluorescence intensity, and there is almost no influence on the fluorescence intensity even when the plate is slightly damaged. That is, it has been found that a plate formed of a melt-kneaded product of a resin composition containing a near-infrared fluorescent dye and an amorphous resin is very suitable as a standard plate for measurement of near-infrared fluorescence because the plate is stable over time and is less affected by damages and the like.

### [Example 5]

Five types of near-infrared fluorescent dye-containing plates having different near-infrared fluorescent dye concentrations were produced using the near-infrared fluorescent dye H obtained in Synthesis Example 1 and the PC pellets, and the relationship between the relative fluorescence intensity value at the fluorescence wavelength and the near-infrared fluorescent dye concentration was examined.

The near-infrared fluorescent dye H and resin pellets "SD POLYCA (trademark) 301-4" were mixed so that the concentration of the near-infrared fluorescent dye H was 0.2 mass% (2000 ppm). Next, the obtained mixture was melt-kneaded (screw rotation: 140/min, cylinder set temperature: 280°C, mold temperature: 80°C), extruded into a strand shape, and then cut to form dye-containing resin pellets. Subsequently, the dye-containing resin pellets and resin pellets "SD POLYCA (trademark) 301-4" were dissolved in a solvent (dichloromethane) so that the concentration of the near-infrared fluorescent dye H after solvent removal was 500, 1000, 1500, or 2000 ppm, and the solution was dropped onto a glass substrate (5 cm × 5 cm). After the dropwise addition, waiting was performed for 5 seconds, the rotation speed was increased to 1500 rpm over 10 seconds, and then spin coating was performed for 180 seconds at the rotation speed. The resulting film-shaped plate (7 µm thick) was subjected to spectrum measurement as it was without being peeled off from the glass substrate.

A film-shaped object was prepared in the same manner as in the near-infrared fluorescent dye-containing plate described above except that the near-infrared fluorescent dye H was not contained, and the object was used as a blank plate.

The fluorescence intensity was measured for both the produced near-infrared fluorescent dye-containing plate and blank plate. The fluorescence intensity at a fluorescence wavelength of 835.0 nm was measured in the same manner as in Example 1 except that the excitation wavelength of 700.0 nm was changed to an excitation wavelength of 760.0 nm, and the fluorescence intensity value obtained by subtracting the fluorescence intensity value at the fluorescence wavelength of the blank plate from the fluorescence intensity value of the fluorescence wavelength of the near-infrared fluorescent dye-containing plate was defined as the fluorescence intensity value at the fluorescence wavelength of each near-infrared fluorescent dye-containing plate.

**[Table 6]**

| | | | | |
|---|---|---|---|---|
| Concentration of near-infrared fluorescent dye [ppm] | 500 | 1000 | 1500 | 2000 |
| Fluorescence intensity value at fluorescence wavelength of 835.0 nm | 3053 | 4981 | 6180 | 7915 |
| Relative fluorescence intensity | 1 | 1.63 | 2.02 | 2.59 |

The measurement results of the fluorescence intensity value at the maximum fluorescence wavelength of the near-infrared fluorescent dye-containing plate at each concentration are presented in Table 6. As presented in Table 6, the fluorescence intensity value in the near-infrared region of the film-shaped near-infrared fluorescent dye-containing plate obtained via the solution containing the near-infrared fluorescent dye and PC was dependent on the near-infrared fluorescent dye concentration. In addition, in Table 6, when the relative fluorescence intensity was calculated with the fluorescence intensity at 500 ppm defined as 1, high linearity was observed between the fluorescence intensity and the near-infrared fluorescent dye concentration.

## Claims

1. A method for measuring a relative fluorescence intensity of a test sample,
the test sample having a maximum fluorescence wavelength within a range from 650 nm to 1000 nm,
the method using, as a standard plate, a plate-shaped or film-shaped molded body of a resin composition obtained by melt-kneading a raw material mixture containing a near-infrared fluorescent dye and an amorphous resin,
the method using, as a blank plate, a plate-shaped or film-shaped molded body of a resin composition obtained by melt-kneading a raw material mixture having a composition identical to a composition of the raw material mixture except that the near-infrared fluorescent dye is not contained,
the test sample being a molded body of a resin composition containing a near-infrared fluorescent dye of the same or different type of the near-infrared fluorescent dye in the standard plate,
the method using, as a test sample blank, a molded body having a composition identical to a composition of the test sample except that the near-infrared fluorescent dye contained in the test sample is not contained,
the method comprising measuring a fluorescence intensity F₁ of the test sample at a wavelength λ₁, a fluorescence intensity F_{1B} of the test sample blank at a wavelength λ_{1B}, a fluorescence intensity F_{S} of the standard plate at a wavelength λ_{S}, and a fluorescence intensity F_{SB} of the blank plate at a wavelength λ_{SB}, wherein the wavelength λ₁ is within a range from 650 to 1000 nm, a difference between the wavelength λ₁ and the wavelength λ_{1B} is within 10 nm, the wavelength λ_{S} is within a range from 650 to 1000 nm, and a difference between the wavelength λ_{S} and the wavelength λ_{SB} is within 10 nm, and
(F₁-F_{1B})/(Fs-F_{SB}) is defined as the relative fluorescence intensity of the test sample.

2. The method for measuring a relative fluorescence intensity according to claim 1, wherein fluorescence intensities of the test sample, the test sample blank, the standard plate, and the blank plate are measured by using a spectrofluorometer.

3. The method for measuring a relative fluorescence intensity according to claim 1, wherein the amorphous resin is a transparent resin.

4. The method for measuring a relative fluorescence intensity according to claim 1, wherein the amorphous resin is one or more selected from the group consisting of a polycarbonate-based resin, a polystyrene-based resin, an acrylic-based resin, a polyoxymethylene-based resin, a polyester-based resin, and a vinyl chloride-based resin.

5. The method for measuring a relative fluorescence intensity according to claim 1, wherein the standard plate is a plate having a thickness from 1 µm to 15 mm.

6. The method for measuring a relative fluorescence intensity according to claim 1, wherein the test sample has a maximum fluorescence wavelength of 700 nm or more.

7. The method for measuring a relative fluorescence intensity according to claim 1, wherein the test sample is a molded body obtained by melt-molding a resin composition obtained by melt-kneading a mixture containing a near-infrared fluorescent dye as a raw material.

8. The method for measuring a relative fluorescence intensity according to claim 7, wherein the test sample is a molded body to be used as a medical device.

9. The method for measuring a relative fluorescence intensity according to claim 8, wherein the test sample is a medical device at least a part of which is used in a patient's body.

10. The method for measuring a relative fluorescence intensity according to claim 1, wherein the near-infrared fluorescent dye comprises one, or two or more compounds selected from the group consisting of a compound represented by General Formula (I₁), a compound represented by General Formula (I₂), a compound represented by General Formula (I₃), and a compound represented by General Formula (I₄) set forth below: 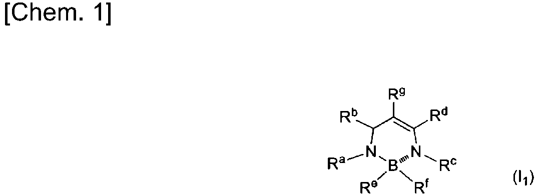 where in Formula (I₁),
R^{a} and R^{b}, together with a nitrogen atom to which R^{a} is bonded and a carbon atom to which R^{b} is bonded, form an aromatic five-membered ring, an aromatic six-membered ring, or a fused aromatic ring in which 2 to 3 five-membered rings or six-membered rings are fused;
R^{c} and R^{d}, together with a nitrogen atom to which R^{c} is bonded and a carbon atom to which R^{d} is bonded, form an aromatic five-membered ring, an aromatic six-membered ring, or a fused aromatic ring in which 2 to 3 five-membered rings or six-membered rings are fused;
R^{e} and R^{f} represent a halogen atom or an oxygen atom; and
R^{g} represents a hydrogen atom or an electron-withdrawing group,
provided that, when R^{e} and R^{f} are oxygen atoms, R^{e}, a boron atom to which R^{e} is bonded, R^{a}, and a nitrogen atom to which R^{a} is bonded may together form a ring, and R^{f}, a boron atom to which R^{f} is bonded, R^{c}, and a nitrogen atom to which R^{c} is bonded may together form a ring; and when R^{e} is an oxygen atom and does not form a ring, R^{e} is an oxygen atom having a substituent, and when R^{f} is an oxygen atom and does not form a ring, R^{f} is an oxygen atom having a substituent; 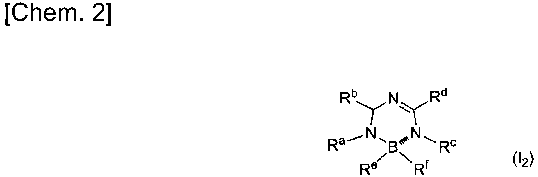 where in Formula (I₂),
R^{a} to R^{f} are the same as those in Formula (I₁); 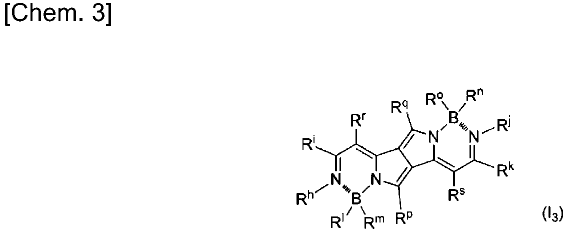 where in Formula (I₃),
R^{h} and Rⁱ, together with a nitrogen atom to which R^{h} is bonded and a carbon atom to which Rⁱ is bonded, form an aromatic five-membered ring, an aromatic six-membered ring, or a fused aromatic ring in which 2 to 3 five-membered rings or six-membered rings are fused;
R^{j} and R^{k}, together with a nitrogen atom to which R^{j} is bonded and a carbon atom to which R^{k} is bonded, form an aromatic five-membered ring, an aromatic six-membered ring, or a fused aromatic ring in which 2 to 3 five-membered rings or six-membered rings are fused;
R^{l}, R^{m}, Rⁿ, and R^{o} each independently represent a halogen atom, a C₁₋₂₀ alkyl group, a C₁₋₂₀ alkoxy group, an aryl group, or a heteroaryl group;
R^{p} and R^{q} each independently represent a hydrogen atom, a halogen atom, a C₁₋₂₀ alkyl group, a C₁₋₂₀ alkoxy group, an aryl group, or a heteroaryl group; and
R^{r} and R^{s} each independently represent a hydrogen atom or an electron-withdrawing group; and 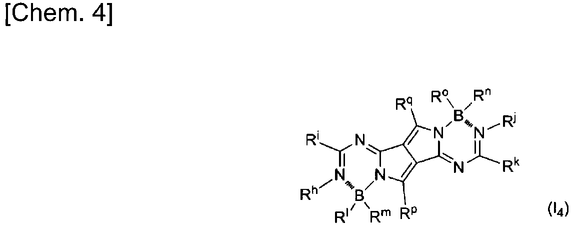 where in Formula (I₄),
R^{h} to R^{q} are the same as those in Formula (I₃).

11. The method for measuring a relative fluorescence intensity according to claim 10, wherein the near-infrared fluorescent dye comprises one, or two or more compounds selected from the group consisting of a compound represented by General Formula (I₁-0) and a compound represented by General Formula (I₂-0) set forth below: 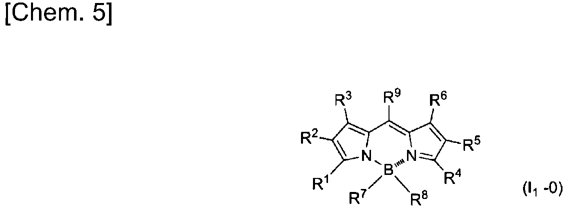 where in Formula (I₁-0),
R¹, R², and R³ satisfy (p1), (p2), or (p3):
(p1) R¹, R², and R³ each independently represent a hydrogen atom, a halogen atom, a C₁₋₂₀ alkyl group, a C₁₋₂₀ alkoxy group, an aryl group, or a heteroaryl group;
(p2) R¹ and R² together form an aromatic five-membered or aromatic six-membered ring, and R³ represents a hydrogen atom, a halogen atom, a C₁₋₂₀ alkyl group, a C₁₋₂₀ alkoxy group, an aryl group, or a heteroaryl group; or
(p3) R² and R³ together form an aromatic five-membered ring or an aromatic six-membered ring, and R¹ represents a hydrogen atom, a halogen atom, C₁₋₂₀ alkyl group, C₁₋₂₀ alkoxy group, an aryl group, or a heteroaryl group,
R⁴, R⁵, and R⁶ satisfy (q1), (q2) or (q3):
(q1) R⁴, R⁵, and R⁶ each independently represent a hydrogen atom, a halogen atom, a C₁₋₂₀ alkyl group, a C₁₋₂₀ alkoxy group, an aryl group, or a heteroaryl group;
(q2) R⁴ and R⁵ together form an aromatic five-membered ring or an aromatic six-membered ring, and R⁶ represents a hydrogen atom, a halogen atom, a C₁₋₂₀ alkyl group, a C₁₋₂₀ alkoxy group, an aryl group, or a heteroaryl group; or
(q3) R⁵ and R⁶ together form an aromatic five-membered ring or an aromatic six-membered ring, and R⁴ represents a hydrogen atom, a halogen atom, a C₁₋₂₀ alkyl group, a C₁₋₂₀ alkoxy group, an aryl group, or a heteroaryl group,
R⁷ and R⁸ represent a halogen atom or an oxygen atom, and
R⁹ represents a hydrogen atom or an electron-withdrawing group,
provided that, when R⁷ and R⁸ are oxygen atoms, R⁷, a boron atom bonded to R⁷, a nitrogen atom bonded to the boron atom, R¹, and a carbon atom bonded to R¹ may form a ring together, and R⁸, a boron atom bonded to R⁸, a nitrogen atom bonded to the boron atom, R⁴, and a carbon atom bonded to R⁴ may form a ring together, and when R⁷ is an oxygen atom and does not form a ring, R⁷ is an oxygen atom having a substituent, and when R⁸ is an oxygen atom and does not form a ring, R⁸ is an oxygen atom having a substituent; and 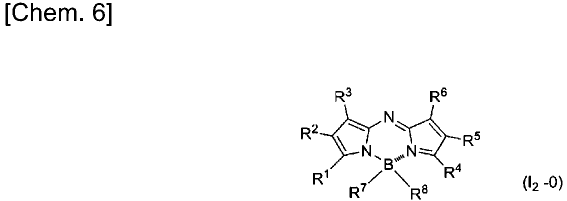 where in Formula (I₂-0),
R¹ to R⁸ are the same as those in Formula (I₁-0).

12. The method for measuring a relative fluorescence intensity according to claim 11, wherein
in General Formula (I₁-0) or General Formula (I₂-0),
R¹ and R² form a ring, and R⁴ and R⁵ form a ring, or
R² and R³ form a ring, and R⁵ and R⁶ form a ring, and
the ring is represented by any one of General Formulas (C-1) to (C-9) set forth below: 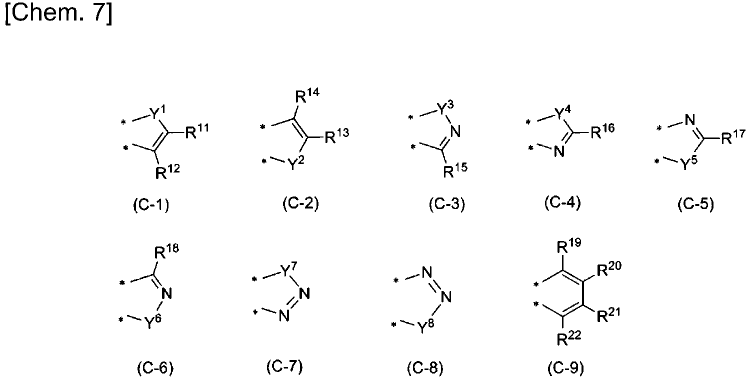
where in Formulas (C-1) to (C-9), Y¹ to Y⁸ each independently represent a sulfur atom, an oxygen atom, a nitrogen atom, or a phosphorus atom, and R¹¹ to R²² each independently represent a hydrogen atom or any group that does not inhibit fluorescence of the compound.

13. The method for measuring a relative fluorescence intensity according to claim 10, wherein the near-infrared fluorescent dye comprises one, or two or more compounds selected from the group consisting of a compound represented by any one of General Formulas (I₃-1) to (I₃-6) and a compound represented by any one of General Formulas (I₄-1) to (I₄-6) set forth below: 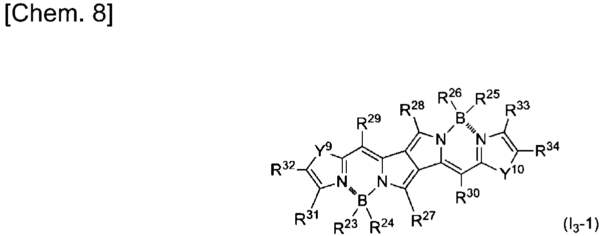 where in Formula (I₃-1),
R²³, R²⁴, R²⁵, and R²⁶ each independently represent a halogen atom, a C₁₋₂₀ alkyl group, a C₁₋₂₀ alkoxy group, an aryl group, or a heteroaryl group;
R²⁷ and R²⁸ each independently represent a hydrogen atom, a halogen atom, a C₁₋₂₀ alkyl group, a C₁₋₂₀ alkoxy group, an aryl group, or a heteroaryl group;
R²⁹ and R³⁰ each independently represent a hydrogen atom or an electron-withdrawing group;
Y⁹ and Y¹⁰ each independently represent a sulfur atom, an oxygen atom, a nitrogen atom, or a phosphorus atom;
R³¹ and R³² satisfy (p4) or (p5):
(p4) R³¹ and R³² each independently represent a hydrogen atom, a halogen atom, a C₁₋₂₀ alkyl group, a C₁₋₂₀ alkoxy group, an aryl group, or a heteroaryl group; or
(p5) R³¹ and R³² together form an aromatic five-membered ring optionally having a substituent or an aromatic six-membered ring optionally having a substituent; and
R³³ and R³⁴ satisfy (q4) or (q5):
(q4) R³³ and R³⁴ each independently represent a hydrogen atom, a halogen atom, a C₁₋₂₀ alkyl group, a C₁₋₂₀ alkoxy group, an aryl group, or a heteroaryl group; or
(q5) R³³ and R³⁴ together form an aromatic five-membered ring optionally having a substituent or an aromatic six-membered ring optionally having a substituent; 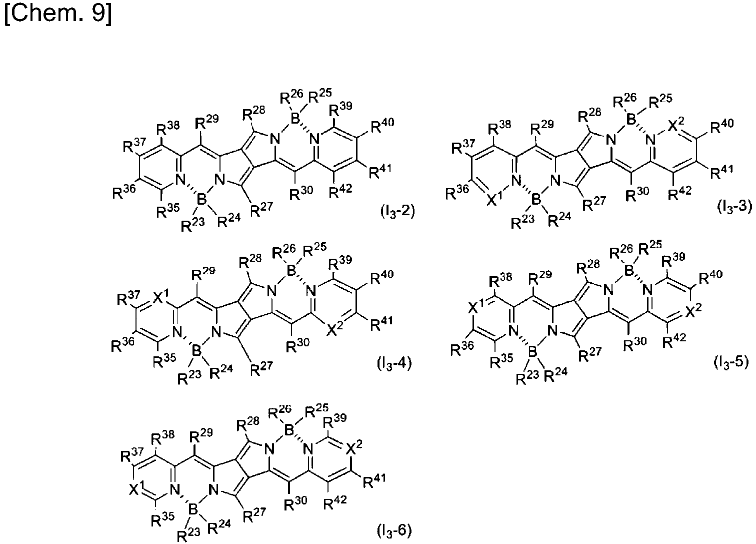
where in Formulas (I₃-2) to (I₃-6), R²³ to R³⁰ are the same as those in Formula (I₃-1);
X¹ and X² each independently represent a nitrogen atom or a phosphorus atom;
R³⁵, R³⁶, R³⁷, and R³⁸ satisfy (p6), (p7), (p8), or (p9):
(p6) R³⁵, R³⁶, R³⁷, and R³⁸ each independently represent a hydrogen atom, a halogen atom, a C₁₋₂₀ alkyl group, a C₁₋₂₀ alkoxy group, an aryl group, or a heteroaryl group;
(p7) R³⁵ and R³⁶ together form an aromatic five-membered ring optionally having a substituent or an aromatic six-membered ring optionally having a substituent, and R³⁷ and R³⁸ each independently represent a hydrogen atom, a halogen atom, a C₁₋₂₀ alkyl group, a C₁₋₂₀ alkoxy group, an aryl group, or a heteroaryl group;
(p8) R³⁶ and R³⁷ together form an aromatic five-membered ring optionally having a substituent or an aromatic six-membered ring optionally having a substituent, and R³⁵ and R³⁸ each independently represent a hydrogen atom, a halogen atom, a C₁₋₂₀ alkyl group, a C₁₋₂₀ alkoxy group, an aryl group, or a heteroaryl group; or
(p9) R³⁷ and R³⁸ together form an aromatic five-membered ring optionally having a substituent or an aromatic six-membered ring optionally having a substituent, and R³⁵ and R³⁶ each independently represent a hydrogen atom, a halogen atom, a C₁₋₂₀ alkyl group, a C₁₋₂₀ alkoxy group, an aryl group, or a heteroaryl group;
R³⁹, R⁴⁰, R⁴¹, and R⁴² satisfy (q6), (q7), (q8), or (q9):
(q6) R³⁹, R⁴⁰, R⁴¹, and R⁴² each independently represent a hydrogen atom, a halogen atom, a C₁₋₂₀ alkyl group, a C₁₋₂₀ alkoxy group, an aryl group, or a heteroaryl group;
(q7) R³⁹ and R⁴⁰ together form an aromatic five-membered ring optionally having a substituent or an aromatic six-membered ring optionally having a substituent, and R⁴¹ and R⁴² each independently represent a hydrogen atom, a halogen atom, a C₁₋₂₀ alkyl group, a C₁₋₂₀ alkoxy group, an aryl group, or a heteroaryl group;
(q8) R⁴⁰ and R⁴¹ together form an aromatic five-membered ring optionally having a substituent or an aromatic six-membered ring optionally having a substituent, and R³⁹ and R⁴² each independently represent a hydrogen atom, a halogen atom, a C₁₋₂₀ alkyl group, a C₁₋₂₀ alkoxy group, an aryl group, or a heteroaryl group; or
(q9) R⁴¹ and R⁴² together form an aromatic five-membered ring optionally having a substituent or an aromatic six-membered ring optionally having a substituent, and R³⁹ and R⁴⁰ each independently represent a hydrogen atom, a halogen atom, a C₁₋₂₀ alkyl group, a C₁₋₂₀ alkoxy group, an aryl group, or a heteroaryl group; and 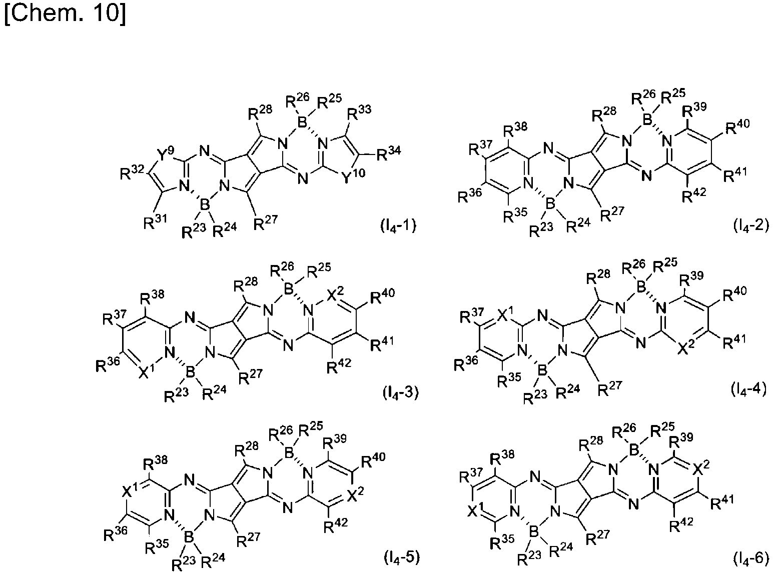
where in Formulas (I₄-1) to (I₄-6), R²³ to R²⁸ are the same as those in Formula (I₃-1); in Formula (I₄-1), R³¹ to R³⁴, Y⁹, and Y¹⁰ are the same as those in Formula (I₃-1); in Formulas (I₄-2) to (I₄-6), R³⁵ to R⁴² are the same as those in Formula (I₃-2), and in Formulas (I₄-3) to (I₄-6), X¹ and X² are the same as those in Formula (I₃-3).

14. The method for measuring a relative fluorescence intensity according to claim 10, wherein the near-infrared fluorescent dye comprises one, or two or more compounds selected from the group consisting of compounds represented by any one of General Formulas (I₁-1-1) to (I₁-1-6), (I₁-2-1) to (I₁-2-12), (I₂-1-1) to (I₂-1-6), and (I₂-2-1) to (I₂-2-12):
[Chem. 11] 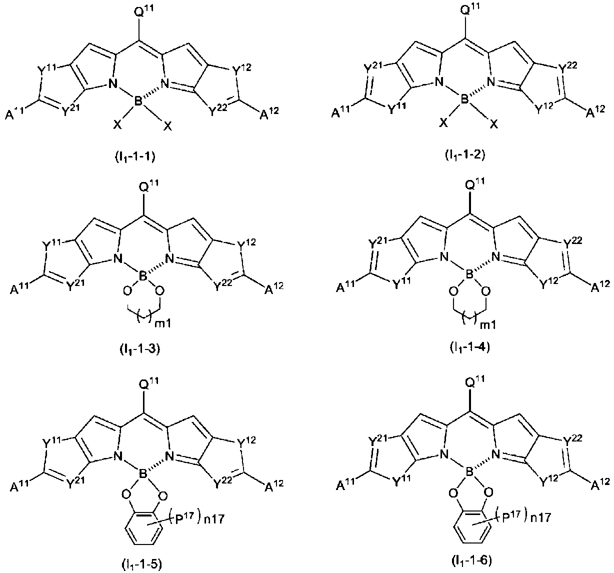 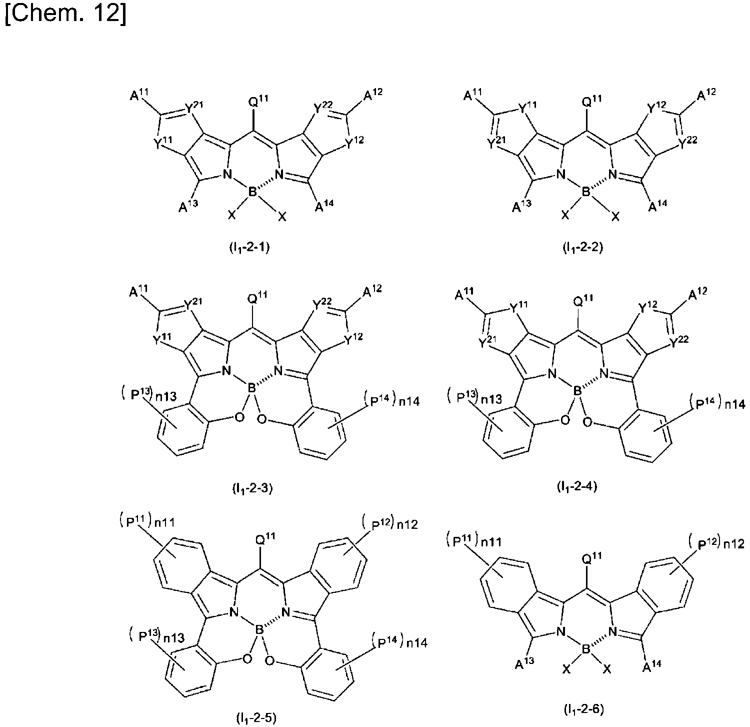 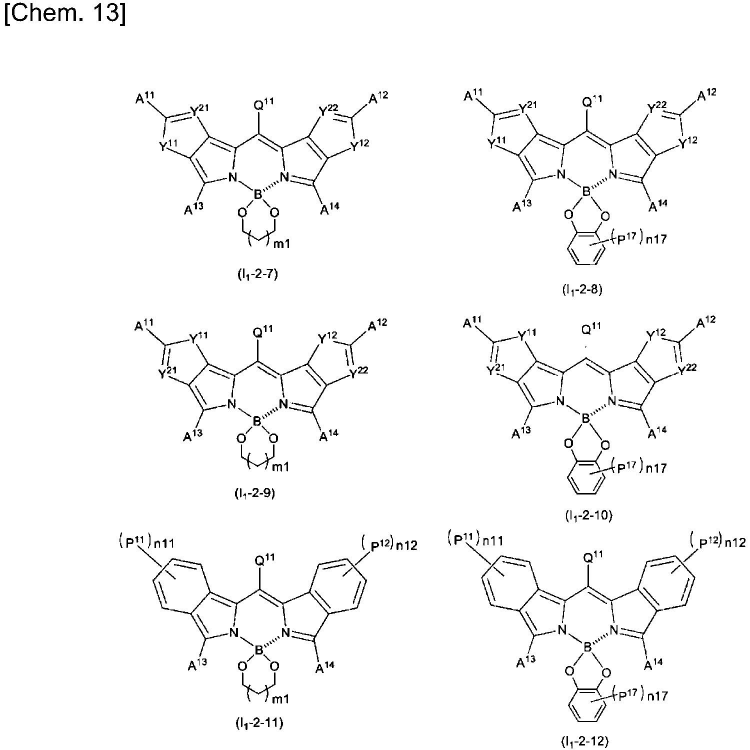 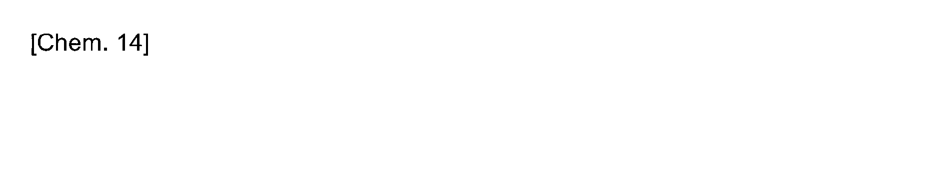 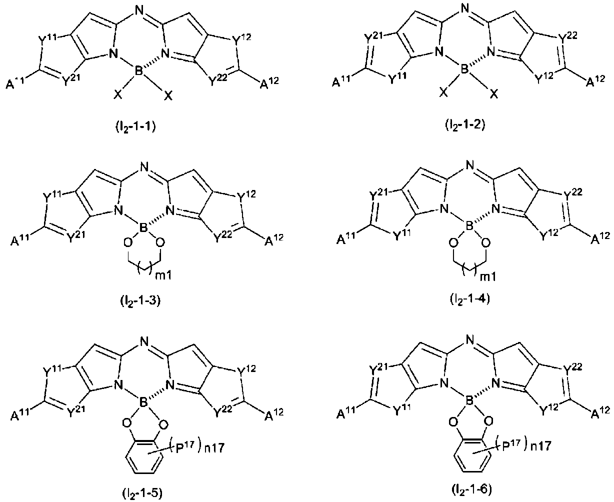 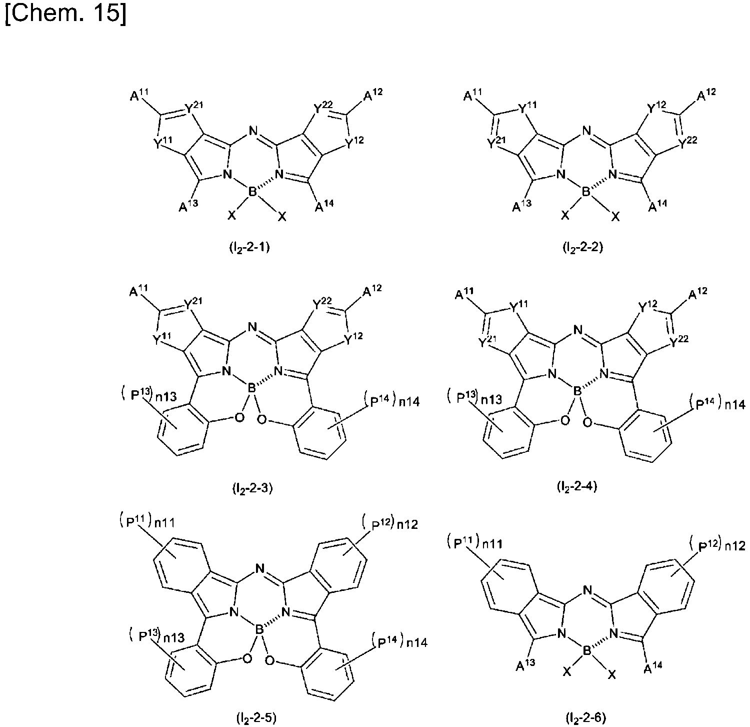 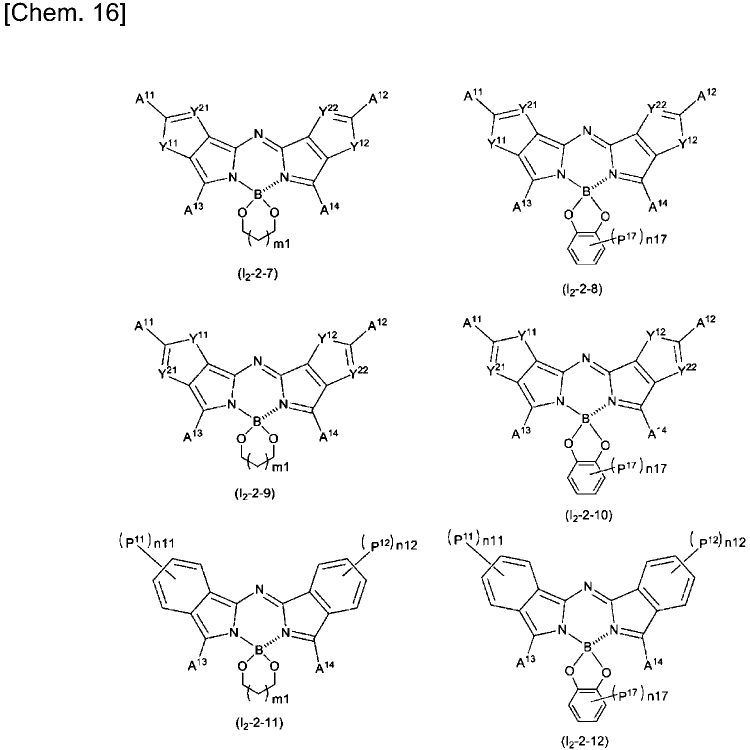
where Y¹¹ and Y¹² each independently represent an oxygen atom or a sulfur atom;
Y²¹ and Y²² each independently represent a carbon atom or a nitrogen atom;
Q¹¹ represents a trifluoromethyl group, a cyano group, a nitro group, or a phenyl group;
X each independently represents a halogen atom, a C₁₋₂₀ alkoxy group, an aryloxy group, or an acyloxy group;
P¹¹ to P¹⁴ and P¹⁷ each independently represent a halogen atom, a C₁₋₂₀ alkyl group, a C₁₋₂₀ alkoxy group, an amino group, a monoalkylamino group, or a dialkylamino group;
A¹¹ to A¹⁴ each independently represent a phenyl group optionally having 1 to 3 substituents selected from the group consisting of a halogen atom, a C₁₋₂₀ alkyl group, a C₁₋₂₀ alkoxy group, an amino group, a monoalkylamino group, and a dialkylamino group, or a heteroaryl group optionally having 1 to 3 substituents selected from the group consisting of a halogen atom, a C₁₋₂₀ alkyl group, a C₁₋₂₀ alkoxy group, an amino group, a monoalkylamino group, and a dialkylamino group;
n11 to n14 and n17 each independently represent an integer from 0 to 3; and
m1 represents 0 or 1.

15. The method for measuring a relative fluorescence intensity according to claim 10, wherein the near-infrared fluorescent dye comprises one, or two or more compounds selected from the group consisting of compounds represented by any one of General Formulas (I₃-7) to (I₃-9) and (I₄-7) to (I₄-9): 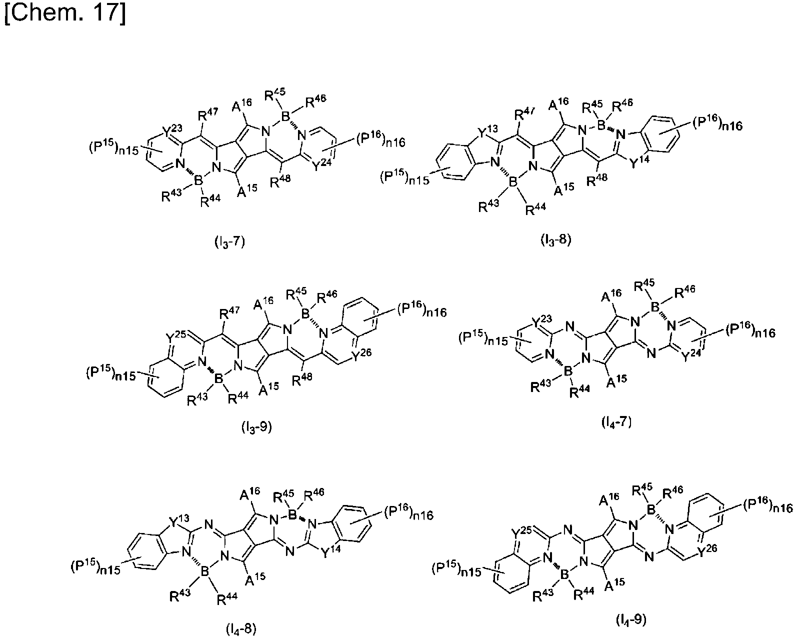
where Y²³ and Y²⁴ each independently represent a carbon atom or a nitrogen atom;
Y¹³ and Y¹⁴ each independently represent an oxygen atom or a sulfur atom;
Y²⁵ and Y²⁶ each independently represent a carbon atom or a nitrogen atom;
R⁴⁷ and R⁴⁸ each independently represent a hydrogen atom or an electron-withdrawing group;
R⁴³, R⁴⁴, R⁴⁵, and R⁴⁶ represent a halogen atom or an aryl group optionally having a substituent;
P¹⁵ and P¹⁶ each independently represent a halogen atom, a C₁₋₂₀ alkyl group, a C₁₋₂₀ alkoxy group, an amino group, a monoalkylamino group, or a dialkylamino group;
n15 and n16 each independently represent an integer from 0 to 3; and
A¹⁵ and A¹⁶ each independently represent a phenyl group optionally having 1 to 3 substituents selected from the group consisting of a hydrogen atom, a halogen atom, a C₁₋₂₀ alkyl group, a C₁₋₂₀ alkoxy group, an amino group, a monoalkylamino group, and a dialkylamino group.

16. A standard plate set for relative fluorescence intensity measurement, the standard plate set comprising:
a standard plate including a plate-shaped or film-shaped molded body of a resin composition obtained by melt-kneading a raw material mixture containing a near-infrared fluorescent dye and an amorphous resin; and
a blank plate including a plate-shaped or film-shaped molded body of a resin composition obtained by melt-kneading a raw material mixture having a composition identical to a composition of the raw material mixture except that the near-infrared fluorescent dye is not contained.

17. The standard plate set for relative fluorescence intensity measurement according to claim 16, wherein
the near-infrared fluorescent dye comprises one, or two or more compounds selected from the group consisting of compounds represented by General Formulas (I₁), (I₂), (I₃), and (I₄) set forth below: 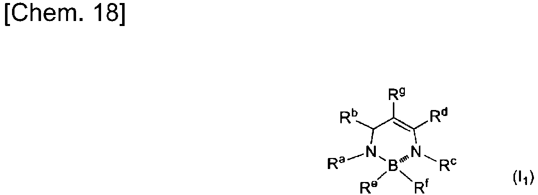 where in Formula (I₁),
R^{a} and R^{b}, together with a nitrogen atom to which R^{a} is bonded and a carbon atom to which R^{b} is bonded, form an aromatic five-membered ring, an aromatic six-membered ring, or a fused aromatic ring in which 2 to 3 five-membered rings or six-membered rings are fused;
R^{c} and R^{d}, together with a nitrogen atom to which R^{c} is bonded and a carbon atom to which R^{d} is bonded, form an aromatic five-membered ring, an aromatic six-membered ring, or a fused aromatic ring in which 2 to 3 five-membered rings or six-membered rings are fused;
R^{e} and R^{f} represent a halogen atom or an oxygen atom; and
R^{g} represents a hydrogen atom or an electron-withdrawing group,
provided that, when R^{e} and R^{f} are oxygen atoms, R^{e}, a boron atom to which R^{e} is bonded, R^{a}, and a nitrogen atom to which R^{a} is bonded may together form a ring, and R^{f}, a boron atom to which R^{f} is bonded, R^{c}, and a nitrogen atom to which R^{c} is bonded may together form a ring; and when R^{e} is an oxygen atom and does not form a ring, R^{e} is an oxygen atom having a substituent, and when R^{f} is an oxygen atom and does not form a ring, R^{f} is an oxygen atom having a substituent; 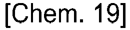 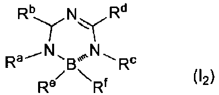
where in Formula (I₂), R^{a} to R^{f} are the same as those in Formula (I₁); 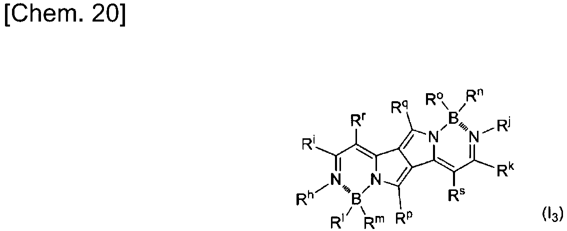 where in Formula (I₃),
R^{h} and Rⁱ, together with a nitrogen atom to which R^{h} is bonded and a carbon atom to which Rⁱ is bonded, form an aromatic five-membered ring, an aromatic six-membered ring, or a fused aromatic ring in which 2 to 3 five-membered rings or six-membered rings are fused;
R^{j} and R^{k}, together with a nitrogen atom to which Rⁱ is bonded and a carbon atom to which R^{k} is bonded, form an aromatic five-membered ring, an aromatic six-membered ring, or a fused aromatic ring in which 2 to 3 five-membered rings or six-membered rings are fused;
R^{l}, R^{m}, Rⁿ, and R^{o} each independently represent a halogen atom, a C₁₋₂₀ alkyl group, a C₁₋₂₀ alkoxy group, an aryl group, or a heteroaryl group;
R^{p} and R^{q} each independently represent a hydrogen atom, a halogen atom, a C₁₋₂₀ alkyl group, a C₁₋₂₀ alkoxy group, an aryl group, or a heteroaryl group; and
R^{r} and R^{s} each independently represent a hydrogen atom or an electron-withdrawing group; and 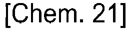 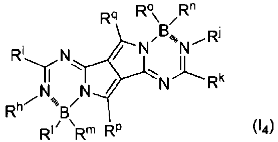
where in Formula (I₄), R^{h} to R^{q} are the same as those in Formula (I₃).

18. The standard plate set for relative fluorescence intensity measurement according to claim 16, wherein the standard plate is a plate having a thickness from 1 µm to 15 mm.

19. The standard plate set for relative fluorescence intensity measurement according to claim 16, wherein the amorphous resin includes one or more selected from the group consisting of a polycarbonate-based resin, a polystyrene-based resin, an acrylic-based resin, a polyoxymethylene-based resin, a polyester-based resin, and a vinyl chloride-based resin.
